# EUROPEAN PATENT APPLICATION

(11) **EP 4 224 900 A1**
(43) Date of publication of application: **09.08.2023**
(21) Application number: 20958096.8
(22) Date of filing: 21.10.2020
(51) Int. Cl.: H04W 8/08

(54) **ROUTING METHOD AND APPARATUS**

(71) Applicant: Huawei Technologies Co., Ltd., Shenzhen, Guangdong 518129 (CN)
(72) Inventor: PENG, Wenjie, Shenzhen, Guangdong 518129 (CN); WANG, Jun, Shenzhen, Guangdong 518129 (CN); SHI, Yulong, Shenzhen, Guangdong 518129 (CN)
(74) Representative: Maiwald GmbH
(86) International application number: PCT/CN2020/122531
(87) International publication number: WO 2022/082513

(57) **Abstract**

This application discloses a routing method and an apparatus. The method and the apparatus may be used in a multi-hop communication scenario, and may also be used in another scenario. Particularly, the method and the apparatus are used for implementing routing between an AN device and remote UE in the multi-hop communication scenario. In the method, a relay terminal on a communication link may determine a transmission object by using route indication information of a data packet, or the route indication information and a target device identifier that are of the data packet, to transmit data carried in the data packet to the transmission object. It is clear that in the method, routing transmission of the data packet may be guided by using route guide information, to ensure that the routing between the AN device and the remote UE can be implemented in the multi-hop communication scenario.

## Description

### TECHNICAL FIELD

This application relates to the field of communication technologies, and in particular, to a routing method and an apparatus.

### BACKGROUND

A UE-to-network relay (UE-to-network relay, U2N) technology is a technology that can effectively increase cell coverage. A U2N system includes an access network (access network, AN) device and two types of terminal devices: relay UE (relay UE) and remote UE (remote UE). The relay UE may help the remote UE access the AN device to obtain a service. For example, in a downlink direction, the relay UE may obtain downlink data of the remote UE from the AN device, and forward the downlink data to the remote UE. In an uplink direction, after obtaining uplink data of the remote UE, the relay UE forwards the uplink data to the AN device.

Currently, the relay UE may simultaneously provide relay services to a plurality of remote UEs. To enable the relay UE to clearly distinguish between the remote UEs when transmitting data, the relay UE may allocate one local identifier (local ID) to each remote UE. The local identifier may uniquely identify one remote UE within a range of the relay UE. In this way, the UE-to-network relay system may add the local identifier of the remote UE to a data packet that needs to be transmitted, to implement routing between the AN device and the remote UE. A downlink transmission direction is used as an example. The AN device may add a local identifier of target remote UE to a data packet that needs to be sent to the target remote UE. After obtaining the data packet from the AN device, the relay UE may determine, based on the local identifier of the target remote UE, that a destination device of the data packet is the target remote UE, to send the data packet to the target remote UE.

However, in a complex multi-hop U2N system, how to complete routing between an AN device and remote UEs that are connected to a base station through multi-hop relay UE is a problem that urgently needs to be resolved.

### SUMMARY

This application provides a routing method and an apparatus. The method and the apparatus may be used in a multi-hop communication scenario, and may also be used in another scenario. Particularly, the method and the apparatus are used for implementing routing between an AN device and remote UE in the multi-hop communication scenario.

According to a first aspect, an embodiment of this application provides a routing method, applied to a first relay terminal. The method may be performed by the first relay terminal, or may be performed by a component such as a chip, a processor, or a chip system in the first relay terminal. The following describes the method in detail by using an example in which the method is performed by the first relay terminal. The method includes the following steps:

After receiving a first data packet, the first relay terminal obtains first route indication information and a target device identifier that are of the first data packet, where the first route indication information indicates a transmission route of the first data packet, and a target device indicated by the target device identifier is a destination device or a source device of the first data packet; the first relay terminal determines a first device based on the first route indication information, or based on the first route indication information and the target device identifier; and the first relay terminal transmits a second data packet to the first device, where data carried in the second data packet is the same as data carried in the first data packet.

According to the method, the first relay terminal may determine a transmission object based on the first route indication information of the received first data packet and the target device identifier of the first data packet, to transmit the data in the first data packet to the transmission object. It is clear that in the method, routing transmission of a data packet may be guided by using route indication information, or the route indication information and a target device identifier, to ensure that routing between an AN device and remote UE can be implemented in a multi-hop communication scenario.

In a possible design, the first relay terminal may obtain the first route indication information and the target device identifier in the following manners:
Manner 1: When the first data packet has a first protocol layer header, and the first protocol layer header includes the first route indication information and the target device identifier, the first relay terminal obtains the first route indication information and the target device identifier from the first protocol layer header of the first data packet.
Manner 2: When the first data packet is received from a first remote terminal, and the first data packet has no first protocol layer header, the first relay terminal determines that the first route indication information is stored route indication information corresponding to the first remote terminal, and determines that the target device identifier is a device identifier of the first remote terminal.
Manner 3: When the first data packet is received from a first remote terminal, the first data packet has a first protocol layer, and the first protocol layer header does not include the first route indication information or the target device identifier, the first relay terminal determines that the first route indication information is stored route indication information corresponding to the first remote terminal, and determines that the target device identifier is a device identifier of the first remote terminal.

In Manner 1, when the first data packet has the first protocol layer header, the first relay terminal may directly obtain the first route indication information and the target device identifier from the first protocol layer header of the first data packet. In Manner 2 or Manner 3, in a scenario in which the first relay terminal is a tail relay terminal and the first data packet is received from the first remote terminal, the first relay terminal may determine the first route indication information and the target device identifier based on the first remote terminal. According to this design, the first relay terminal may obtain the first route indication information and the target device identifier in a plurality of cases and scenarios.

In a possible design, the first relay terminal may further obtain the route indication information corresponding to the first remote terminal from an access network device, where the route indication information corresponding to the first remote terminal is dedicated route indication information or default route indication information of the first remote terminal. In this way, when receiving a data packet of the first remote terminal, the first relay terminal may obtain route indication information of the data packet.

In a possible design, the route indication information corresponding to the first remote terminal includes a plurality of pieces of route indication information corresponding to different bearers. In this case, the first relay terminal may determine, by using the following steps, that the first route indication information is the route indication information corresponding to the first remote terminal:
determining a target bearer used for transmitting the first data packet; and determining that the first route indication information is route indication information that is in the route indication information corresponding to the first remote terminal and that corresponds to the target bearer.

According to this design, a communication system may allocate the plurality of pieces of route indication information to the first remote terminal at a granularity of a bearer, and determine the first route indication information based on a bearer used for transmitting the first data packet of the first remote terminal.

In a possible design, the first route indication information includes a destination address, and the first data packet has the first protocol layer header. In this case, the first relay terminal may determine the first device in the following manners:
Manner 1: When the destination address is different from an address of the first relay terminal, the first relay terminal determines a next-hop node address corresponding to the first route indication information; and determines that the first device is a next-hop node indicated by the next-hop node address.
Manner 2: When the destination address is the same as an address of the first relay terminal, the first relay terminal determines that the device indicated by the target device identifier is the first device.
Manner 3: When the destination address is the same as an address of the first relay terminal, and the first relay terminal is the 1^{st} relay terminal connected to the access network device, the first relay terminal determines an interface used for receiving the first data packet, where when the interface is a Uu interface, the first relay terminal determines that the device indicated by the target device identifier is the first device; or when the interface is a PC5 interface, the first relay terminal determines that the first device is the access network device.

In the method provided in this design, the address of the relay terminal may be used as the route indication information to guide the routing transmission of the data packet, to ensure that the routing between the AN device and the remote UE can be implemented in the multi-hop communication scenario.

In a possible design, when the first device is the next-hop node or the access network device, the second data packet is the same as the first data packet.

According to this design, when determining that the transmission object is the next-hop node or the access network device, the first relay device may transmit the first data packet to the determined transmission object.

In a possible design, the first route indication information further includes a target path identifier.

In a possible design, the first route indication information includes a target path identifier, and the first data packet has the first protocol layer header. In this case, the first relay terminal may determine the first device in the following manners:
Manner 1: When the first route indication information has a corresponding next-hop node device identifier, the first relay terminal determines the first device based on the next-hop node device identifier.
Manner 2: When the first route indication information does not have a corresponding next-hop node device identifier, the first relay terminal determines that the device indicated by the target device identifier is the first device.

According to this design, the first relay terminal may determine the transmission object in different manners when the first route indication information has or does not have the corresponding next-hop node device identifier.

In a possible design, the first relay terminal may determine the first device based on the next-hop node device identifier in the following manners:
Manner 1: When the next-hop node device identifier indicates a second relay terminal connected to the first relay terminal, the first relay terminal determines that the first device is the second relay terminal.
Manner 2: When the next-hop node device identifier indicates an access network device, the first relay terminal determines that the first device is the access network device.
Manner 3: When the next-hop node device identifier indicates the first relay terminal, the first relay terminal determines that the device indicated by the target device identifier is the first device.

According to this design, the first relay terminal may determine different transmission objects when the next-hop node device identifier indicates different communication devices.

In a possible design, when the next-hop node device identifier is a first default device identifier, the next-hop node device identifier indicates the first relay terminal; or when the next-hop node device identifier is a second default device identifier, the next-hop node device identifier indicates the access network device.

In a possible design, when the first device is the second relay terminal or the access network device, the second data packet is the same as the first data packet.

According to this design, when determining that the transmission object is the second relay terminal connected to the first relay terminal or the access network device connected to the first relay terminal, the first relay device may transmit the first data packet to the determined transmission object.

In a possible design, the first route indication information further includes a transmission direction indication, and the transmission direction indication indicates uplink transmission or downlink transmission.

In a possible design, the first relay device may determine, by using the following step, that the device indicated by the target device identifier is the first device: when the target device identifier indicates a first remote terminal that accesses the first relay terminal, determining that the first device is the first remote terminal. In this case, the first relay terminal may transmit the second data packet to the first device by using the following steps:
decapsulating the first data packet to obtain the second data packet, where the second data packet has no first protocol layer header; and transmitting the second data packet to the first remote terminal.

According to this design, the first relay terminal may transmit a data packet that has no protocol layer header to the first remote terminal.

In a possible design, the first protocol layer header further includes a bearer identifier, and the bearer identifier indicates the target bearer used for transmitting the first data packet. The first relay device may determine, by using the following step, that the device indicated by the target device identifier is the first device: when the target device identifier indicates a first remote terminal that accesses the first relay terminal, determining that the first device is the first remote terminal. In this case, the first relay terminal may transmit the second data packet to the first device in the following manners:
Manner 1: The first relay terminal deletes the first route indication information and the target device identifier that are included in the first protocol layer from the first data packet, to obtain the second data packet, where a first protocol layer header of the second data packet includes the bearer identifier; and transmits the second data packet to the first device.
Manner 2: The first relay terminal decapsulates the first data packet to obtain a target data packet, where the target data packet has no first protocol layer header; adds a first protocol layer header to the target data packet to generate the second data packet, where the first protocol layer header of the second data packet includes the bearer identifier; and transmits the second data packet to the first device.
Manner 3: The first relay terminal transmits the second data packet the same as the first data packet to the first device.

In Manner 1 and Manner 2, the first relay terminal may transmit the second data packet whose first protocol layer header includes only the bearer identifier to the first device. In Manner 3, the first relay terminal may transmit the first data packet to the first device.

In a possible design, when the target device identifier indicates the first relay terminal, the first relay terminal may further determine that the data carried in the first data packet is data of the first relay terminal.

In a possible design, when the target device identifier is a third default device identifier, the target device identifier indicates the first relay terminal.

In a possible design, when the first data packet has no first protocol layer header, the first relay terminal may transmit the second data packet to the first device by using the following steps:
adding a first protocol layer header to the first data packet to generate the second data packet, where the first protocol layer header of the second data packet includes the first route indication information and the target device identifier; and transmitting the second data packet to the first device.

According to this design, the first relay terminal may transmit the second data packet that carries the first protocol layer header to the first device.

In a possible design, when the first relay terminal is connected to the access network device through the second relay terminal, the first relay terminal may further generate a third data packet, where the third data packet includes no first protocol layer header; and transmit the third data packet to the second relay terminal; or generate a fourth data packet by using the following steps, and transmit the fourth data packet to the second relay terminal:
determining second route indication information of the third data packet; and adding a first protocol layer header to the third data packet to generate the fourth data packet, where the first protocol layer header of the fourth data packet includes the second route indication information and a device identifier of the first relay terminal.

According to this design, the first relay terminal may transmit a data packet that is of the first relay terminal and that carries the first protocol layer header or a data packet that does not carry the first protocol layer header to the second relay terminal.

In a possible design, the device identifier of the first relay terminal is allocated by the second relay terminal to the first relay terminal; or the device identifier of the first relay terminal is allocated by the first relay terminal to the second relay terminal; or the device identifier of the first relay terminal is the first default device identifier.

In a possible design, the first relay terminal may transmit the second data packet to the first device through a first logical channel; and the first relay device may transmit the third data packet to the second relay terminal through a second logical channel, where the first logical channel is different from the second logical channel.

According to this design, the first relay terminal may separately transmit the data packet that carries the first protocol layer header and the data packet that does not carry the first protocol layer header through different logical channels, to distinguish between types of the data packets by using the logical channels, so that the transmission object can perform differentiated processing on the received data packets based on the logical channels.

In a possible design, when the first data packet has a first protocol layer header, and the first protocol layer header includes the bearer identifier but does not include the first route indication information or the target device identifier, the first relay terminal may obtain the second data packet in the following manners:
Manner 1: The first relay terminal adds the first route indication information and the target device identifier to the first protocol layer header of the first data packet, to obtain the second data packet, where the first protocol layer header of the second data packet includes the bearer identifier, the first route indication information, and the target device identifier.
Manner 2: The first relay terminal decapsulates the first data packet to obtain a target data packet, where the target data packet has no first protocol layer header; and add a first protocol layer header to the target data packet to generate the second data packet, where the first protocol layer header of the second data packet includes the bearer identifier, the first route indication information, and the target device identifier.

According to this design, the first relay terminal may transmit the second data packet whose first protocol layer header includes the first route indication information and the target device identifier to the first device, so that the first device continues to transmit the second data packet based on the first route indication information and the target device identifier.

In a possible design, the first relay terminal may determine, by using the following steps, the next-hop node address corresponding to the first route indication information:
determining, in at least one piece of stored route information, target route information that includes the first route indication information, where the target route information includes the first route indication information and the next-hop node address corresponding to the first route indication information; and determining, in the target route information, the next-hop node address corresponding to the first route indication information.

According to this design, the first relay terminal may determine, based on the stored route information, the next-hop node address corresponding to the first route indication information.

In a possible design, when determining, in the at least one piece of stored route information, the target route information that includes the first route indication information, the first relay terminal may determine that the first route indication information has the corresponding next-hop node device identifier, where the target route information includes the first route indication information and the next-hop node device identifier corresponding to the first route indication information; or when the target route information is not found in the at least one piece of stored route information, the first relay terminal may determine that the first route indication information does not have the corresponding next-hop node device identifier.

According to this design, the first relay terminal may determine whether the first route indication information includes the next-hop node device identifier depending on whether the target route information is found.

In a possible design, the first relay terminal may obtain the at least one piece of route information in the following manners:
Manner 1: The first relay terminal obtains the at least one piece of route information from the access network device.
Manner 2: When the first relay terminal is connected to the access network device through the second relay terminal, the first relay terminal obtains the at least one piece of route information from the second relay terminal.

According to this design, the communication system can flexibly configure the route information of the first relay terminal.

In a possible design, the target device identifier is a local identifier (local ID) or a layer 2 identifier (L2 ID) of the target device.

According to a second aspect, an embodiment of this application provides a routing method, applied to an access network device. The method may be performed by the access network device, or may be performed by a component such as a chip, a processor, or a chip system in the access network device. The following describes the method in detail by using an example in which the method is performed by the access network device. The method includes the following steps:
The access network device obtains a first data packet, where the first data packet has no first protocol layer header; the access network device determines first route indication information and a first target device identifier that are of the first data packet, where a first target device indicated by the first target device identifier is a destination device of the first data packet, and the first route indication information indicates a transmission route of the first data packet; the access network device adds a first protocol layer header to the first data packet, to generate a second data packet, where the first protocol layer header of the second data packet includes the first route indication information and the first target device identifier; and the access network device determines a relay terminal based on the first route indication information; and transmits the second data packet to the relay terminal.

According to the method, the access network device may determine a transmission object based on the first route indication information of the first data packet, so as to transmit data in the first data packet to the transmission object. It is clear that the access network device may guide routing transmission of the data packet by using the route indication information, to ensure that routing between an AN device and remote UE can be implemented in a multi-hop communication scenario.

In a possible design, the access network device may further receive a third data packet sent by the relay terminal, where the third data packet has a first protocol layer header, the first protocol layer header of the third data packet includes second route indication information and a second target device identifier, a second target device indicated by the second target device identifier is a source device of the third data packet, and the second route indication information indicates a transmission route of the third data packet; and the access network device decapsulates the third data packet to obtain a fourth data packet, where the fourth data packet has no first protocol layer header.

In a possible design, the access network device may further determine a first bearer identifier of the first data packet, where the first bearer identifier indicates a first bearer used for transmitting the first data packet; and the first protocol layer header of the second data packet further includes the first bearer identifier.

According to this design, the first protocol layer header of the second data packet transmitted by the access network device further includes the first bearer identifier.

In a possible design, the first protocol layer header of the third data packet further includes a second bearer identifier, and the second bearer identifier indicates a second bearer used for transmitting the third data packet.

According to a third aspect, an embodiment of this application provides a routing method, applied to a remote terminal. The method may be performed by the remote terminal, or may be performed by a component such as a chip, a processor, or a chip system in the remote terminal. The following describes the method in detail by using an example in which the method is performed by the remote terminal. The method includes the following steps:
After obtaining a first data packet, the remote terminal determines first route indication information and a target device identifier that are of the first data packet, where the first route indication information of the first data packet indicates a transmission route of the first data packet, and the target device identifier is a device identifier of the remote terminal; the remote terminal adds a first protocol layer header to the first data packet, to generate a second data packet, where the first protocol layer header of the second data packet includes the first route indication information and the first target device identifier; and the remote terminal transmits the second data packet to a relay terminal.

According to the method, the remote terminal may transmit, to the relay terminal, the second data packet whose protocol layer header includes the first route indication information and the target device identifier that are of the first data packet, so that the relay terminal can determine a transmission object based on the first route indication information and the target device identifier. It is clear that the remote terminal may guide routing transmission of the data packet by using the route indication information, to ensure that routing between remote UE and an AN device can be implemented in a multi-hop communication scenario.

In a possible design, the remote terminal may further receive a third data packet from the relay terminal, where the third data packet has a first protocol layer header, the first protocol layer header of the third data packet includes second route indication information and the target device identifier, and the second route indication information indicates a transmission route of the second data packet; and the remote terminal decapsulates the third data packet to obtain a fourth data packet, where the fourth data packet has no first protocol layer header.

In a possible design, the remote terminal may further determine a first bearer identifier of the first data packet, where the first bearer identifier indicates a first bearer used for transmitting the first data packet; and the first protocol layer header of the second data packet further includes the first bearer identifier.

According to this design, the first protocol layer header of the second data packet transmitted by the remote terminal further includes the first bearer identifier.

In a possible design, the first protocol layer header of the third data packet further includes a second bearer identifier, and the second bearer identifier indicates a second bearer used for transmitting the third data packet.

In a possible design, the remote terminal may determine that the first route indication information is stored route indication information corresponding to a first remote terminal.

In a possible design, the remote terminal may receive the route indication information corresponding to the first remote terminal from an access network device or the relay terminal, where the route indication information corresponding to the first remote terminal is dedicated route indication information or default route indication information of the first remote terminal.

According to a fourth aspect, an embodiment of this application provides a routing method, applied to a first relay terminal. The method may be performed by the first relay terminal, or may be performed by a component such as a chip, a processor, or a chip system in the first relay terminal. The following describes the method in detail by using an example in which the method is performed by the first relay terminal. The method includes the following steps:

The first relay terminal receives a first data packet, where the first data packet has a first protocol layer header, the first protocol layer header includes first route indication information and a target device identifier, the first route indication information indicates a transmission route of the first data packet, and a target device indicated by the target device identifier is a destination device or a source device of the first data packet; the first relay terminal obtains the first route indication information and the target device identifier from the first data packet, and determines a first device based on the first route indication information and the target device identifier; and the first relay terminal transmits the first data packet to the first device.

According to the method, the first relay terminal may determine a transmission object based on the first route indication information of the received first data packet and the target device identifier of the first data packet, to transmit the first data packet to the transmission object. It is clear that in the method, routing transmission of a data packet may be guided by using route indication information, or the route indication information and a target device identifier, to ensure that routing between an AN device and remote UE can be implemented in a multi-hop communication scenario.

In a possible design, the first route indication information includes a target node address. In this case, the first relay terminal may determine the first device in the following manners:
Manner 1: When the target node address is different from an address of the first relay terminal, the first relay terminal determines a next-hop node address corresponding to the first route indication information; and determines that the first device is a next-hop node indicated by the next-hop node address.
Manner 2: When the target node address is the same as an address of the first relay terminal, the first relay terminal determines that the device indicated by the target device identifier is the first device.
Manner 3: When the target node address is the same as an address of the first relay terminal, and the first relay terminal is the 1^{st} relay terminal connected to an access network device, the first relay terminal determines an interface used for receiving the first data packet, where when the interface is a Uu interface, the first relay terminal determines that the device indicated by the target device identifier is the first device; or when the interface is a PC5 interface, the first relay terminal determines that the first device is the access network device.

In the method provided in this design, the address of the relay terminal may be used as the route indication information to guide the routing transmission of the data packet, to ensure that the routing between the AN device and the remote UE can be implemented in the multi-hop communication scenario.

In a possible design, the first route indication information further includes a target path identifier.

In a possible design, when the target device identifier indicates a first remote terminal that accesses the first relay terminal, the first relay terminal may determine that the first device is the first remote terminal.

In a possible design, when the target device identifier indicates the first relay terminal, the first relay terminal may further determine that data carried in the first data packet is data of the first relay terminal.

In a possible design, when the target device identifier is a default device identifier, the target device identifier indicates the first relay terminal.

In a possible design, the first relay terminal may determine, by using the following steps, the next-hop node address corresponding to the first route indication information:

determining, in at least one piece of stored route information, target route information that includes the first route indication information, where the target route information includes the first route indication information and the next-hop node address corresponding to the first route indication information; and determining, in the target route information, the next-hop node address corresponding to the first route indication information.

According to this design, the first relay terminal may determine, based on the stored route information, the next-hop node address corresponding to the first route indication information.

In a possible design, the first relay terminal may obtain the at least one piece of route information in the following manners:
Manner 1: The first relay terminal obtains the at least one piece of route information from the access network device.
Manner 2: When the first relay terminal is connected to the access network device through the second relay terminal, the first relay terminal obtains the at least one piece of route information from the second relay terminal.

According to this design, the communication system can flexibly configure the route information of the first relay terminal.

In a possible design, the target device identifier is a local identifier (local ID) of the target device.

In a possible design, the first protocol layer header of the first data packet further includes a bearer identifier, and the bearer identifier indicates a first bearer used for transmitting the first data packet.

According to a fifth aspect, an embodiment of this application provides a communication apparatus, including units configured to perform the steps in any one of the foregoing aspects.

According to a sixth aspect, an embodiment of this application provides a communication device, including at least one processing element and at least one storage element. The at least one storage element is configured to store a program and data, and the at least one processing element is configured to read and execute the program and the data that are stored in the storage element, so that the method provided in any one of the foregoing aspects of this application is implemented.

According to a seventh aspect, an embodiment of this application provides a communication system, including a first relay terminal that can implement the method provided in the first aspect and an access network device that can implement the method provided in the second aspect. Optionally, the communication system may further include a remote terminal that can implement the method provided in the third aspect.

According to an eighth aspect, an embodiment of this application provides a communication system, including a first relay terminal that can implement the method provided in the fourth aspect, an access network device that can implement the method provided in the second aspect, and a remote terminal that can implement the method provided in the third aspect.

According to a ninth aspect, an embodiment of this application further provides a computer program. When the computer program is run on a computer, the computer is enabled to perform the method provided in any one of the foregoing aspects.

According to a tenth aspect, an embodiment of this application further provides a computer-readable storage medium. The computer-readable storage medium stores a computer program. When the computer program is executed by a computer, the computer is enabled to perform the method provided in any one of the foregoing aspects.

According to an eleventh aspect, an embodiment of this application further provides a chip. The chip is configured to read a computer program stored in a memory, to perform the method provided in any one of the foregoing aspects.

According to a twelfth aspect, an embodiment of this application further provides a chip system. The chip system includes a processor, configured to support a computer apparatus in implementing the method provided in any one of the foregoing aspects. In a possible design, the chip system further includes a memory. The memory is configured to store a program and data that are necessary for the computer apparatus. The chip system may include a chip, or may include the chip and another discrete component.

### BRIEF DESCRIPTION OF DRAWINGS

FIG. 1 is a schematic diagram of an architecture of a communication system according to an embodiment of this application;
FIG. 2A and FIG. 2B are a flowchart of a routing method according to an embodiment of this application;
FIG. 3 is a flowchart in which an AN device notifies two adjacent UEs on a communication link of addresses of each other according to an embodiment of this application;
FIG. 4 is a flowchart of a routing method according to an embodiment of this application;
FIG. 5 is a schematic diagram of a protocol stack of a communication system according to an embodiment of this application;
FIG. 6 is a schematic diagram of a routing mechanism according to an embodiment of this application;
FIG. 7 is a schematic diagram of a routing mechanism according to an embodiment of this application;
FIG. 8 is a schematic diagram of a routing mechanism according to an embodiment of this application;
FIG. 9A and FIG. 9B are a flowchart of a routing method according to an embodiment of this application;
FIG. 10 is a flowchart in which an AN device configures default route indication information according to an embodiment of this application;
FIG. 11 is a schematic diagram of a protocol stack of a communication system according to an embodiment of this application;
FIG. 12 is a schematic diagram of a routing mechanism according to an embodiment of this application;
FIG. 13 is a schematic diagram of a routing mechanism according to an embodiment of this application;
FIG. 14 is a schematic diagram of a routing mechanism according to an embodiment of this application;
FIG. 15A and FIG. 15B are a flowchart of a routing method according to an embodiment of this application;
FIG. 16 is a flowchart of a routing mechanism according to an embodiment of this application;
FIG. 17 is a schematic diagram of a protocol stack of a communication system according to an embodiment of this application;
FIG. 18 is a schematic diagram of a protocol stack of a communication system according to an embodiment of this application;
FIG. 19A is a schematic diagram of a BAP header processing process according to an embodiment of this application;
FIG. 19B is a schematic diagram of a BAP header processing process according to an embodiment of this application;
FIG. 20 is a diagram of a structure of a communication apparatus according to an embodiment of this application; and
FIG. 21 is a diagram of a structure of a communication device according to an embodiment of this application.

### DESCRIPTION OF EMBODIMENTS

This application provides a routing method and an apparatus, to implement routing between an AN device and remote UE in a multi-hop communication scenario. The method and the device are based on a same technical concept. Because problem resolving principles of the method and the apparatus are similar, for implementations of the device and the method, refer to each other, and repeated descriptions are not provided again.

In the following descriptions, some terms in this application are described, to help a person skilled in the art have a better understanding.
(1) An access network (access network, AN) device is a device that connects a terminal device to a wireless network in a mobile communication system. The AN device is a node in a radio access network, and may also be referred to as a base station, or may be referred to as a radio access network (radio access network, RAN) node (or device).

Currently, some examples of the AN device are: a next-generation NodeB (generated NodeB, gNB), a transmission reception point (transmission reception point, TRP), an evolved NodeB (evolved NodeB, eNB), a radio network controller (radio network controller, RNC), a NodeB (NodeB, NB), an access point (access point, AP), a base station controller (base station controller, BSC), a base transceiver station (base transceiver station, BTS), a home base station (for example, a home evolved NodeB or a home NodeB, HNB), a baseband unit (baseband unit, BBU), an enterprise LTE discrete narrowband aggregation (Enterprise LTE Discrete Spectrum Aggregation, eLTE-DSA) base station, and the like.

In addition, in a network structure, the AN device may include a central unit (central unit, CU) node and a distributed unit (distributed unit, DU) node. In this structure, protocol layers of the network device are split. Functions of some protocol layers are centrally controlled by a CU, functions of some or all of remaining protocol layers are distributed in a DU, and the CU centrally controls the DU.

(2) A terminal is a device that provides voice and/or data connectivity for a user. The terminal may also be referred to as a terminal device, user equipment (user equipment, UE), a mobile station (mobile station, MS), a mobile terminal (mobile terminal, MT), a terminal, or the like. In embodiments and accompanying drawings of this application, only UE is used as an example for description.

For example, the terminal may be a handheld device, a vehicle-mounted device, or a road side unit that has a wireless connection function. Currently, some examples of the terminal device are a mobile phone (mobile phone), a tablet computer, a notebook computer, a palmtop computer, a mobile internet device (mobile internet device, MID), an intelligent point of sale (point of sale, POS), a wearable device, a virtual reality (virtual reality, VR) device, an augmented reality (augmented reality, AR) device, a head mounted display (head mounted display, HMD), a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a smart meter (a smart water meter, a smart electrical meter, or a smart gas meter), eLTE-DSA UE, a device having an integrated access and backhaul (integrated access and backhaul, IAB) capability, a vehicle-mounted electronic control unit (electronic control unit, ECU), a vehicle-mounted computer, an in-vehicle cruise system, and a telematics box (telematics box, T-Box).
(3) A first protocol layer header is another protocol layer header different from an existing protocol layer (MAC layer, RLC layer, PDCP layer, or the like) header. For example, a first protocol layer may be an adaptation layer, for example, the backhaul adaptation protocol (backhaul adaptation protocol, BAP). The first protocol layer header is an adaptation layer header, for example, a BAP header. In the following embodiments, only an example in which the first protocol layer header is the BAP header is used for description.
(4) Transmission direction: A link formed between a terminal side and a network side includes an uplink transmission direction and a downlink transmission direction. The uplink transmission direction indicates uplink transmission, to be specific, the terminal side transmits data or a message to the network side. The downlink transmission direction indicates downlink transmission, to be specific, the network side transmits data or a message to the terminal side.
(5) Route indication information indicates a transmission route of a data packet (data carried in the data packet), to be specific, guides data packet transmission/forwarding, or guides data packet transmission from a device to another device. For single relay UE or an AN device, route indication information included in a data packet is used for determining a transmission object, so that the data packet can be transmitted to the transmission object.

In an uplink transmission direction, in some embodiments provided in this application, the route indication information may guide a data packet to be transmitted from remote UE to an AN device. In some other embodiments, the route indication information may guide a data packet to be transmitted from tail relay UE to an AN device on a link. In some other embodiments, the route indication information may alternatively guide a data packet to be transmitted from tail relay UE to head relay UE on a link.

In a downlink transmission direction, in some embodiments provided in this application, the route indication information may guide a data packet to be transmitted from the AN device to the remote UE. In some other embodiments, the route indication information may guide a data packet to be transmitted from the head relay UE/AN device to the tail relay UE on the link. It should be noted that, when the route indication information may guide transmission to the tail relay UE, if relay UE on the link determines, by using the route indication information, that the relay UE is the tail relay UE, the relay UE may further determine a transmission object with reference to a target device identifier in the data packet, so as to transmit the data packet to the remote UE.

(6) The term "and/or" describes an association relationship between associated objects and indicates that three relationships may exist. For example, A and/or B may represent the following three cases: Only A exists, both A and B exist, and only B exists. The character "/" generally represents an "or" relationship between the associated objects.

It should be noted that "a plurality of" in this application refers to two or more. "At least one" means one or more.

In addition, it should be understood that in descriptions of this application, terms such as "first" and "second" are merely used for distinguishing and description, but should not be understood as indicating or implying relative importance, or should not be understood as indicating or implying a sequence.

Embodiments of this application are described in detail below with reference to the accompanying drawings.

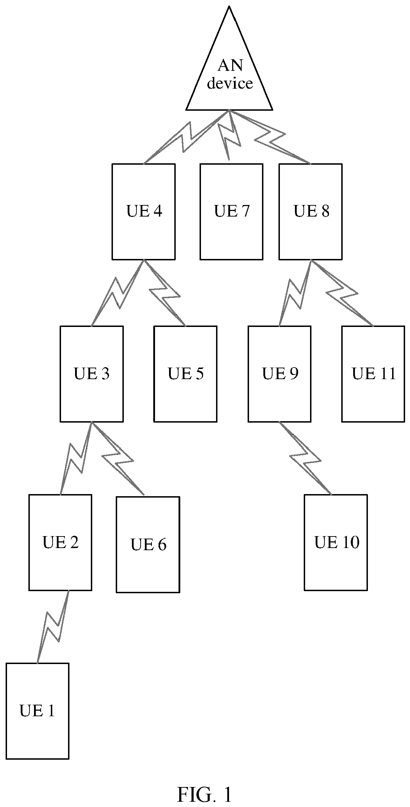

FIG. 1 shows an architecture of a communication system to which a routing method provided in embodiments of this application is applicable. Refer to FIG. 1. The system includes an AN device and a plurality of UEs (for example, UE 1 to UE 11 in FIG. 1).

The AN device is an entity that can receive and transmit a radio signal on a network side, and is responsible for providing a radio access-related service to UE in a cell managed by the AN device, and implementing a physical layer function, resource scheduling and radio resource management, quality of service (Quality of Service, QoS) management, radio access control, and a mobility management function.

The UE is an entity that can receive and transmit a radio signal on a user side, and needs to access the AN device and finally access a network. The UE may be a device that provides voice and/or data connectivity to a user.

To effectively improve cell coverage of the AN device, a U2N technology is introduced. To be specific, the UE in the system may access the AN device through at least one UE, to form single-hop communication or multi-hop communication. To distinguish between UEs in terms of functions, two concepts, relay (relay) UE and remote (remote) UE, are introduced in this application.

As a bridge device of remote UE, relay UE can establish a connection between one device (remote UE or relay UE) and another device (relay UE or an AN device), so that the two devices can communicate with each other.

The remote UE is a service initiation device, and is a destination device that finally receives user data or a source device that generates user data. In other words, the remote UE is an endpoint of a communication link (for example, an RRC connection), and the other end is the AN device.

In a multi-hop communication scenario, based on a location of relay UE between an AN device and remote UE, a plurality of relay UEs between the AN device and the remote UE may be classified into three types:

Head relay UE is relay UE directly connected to the AN device.

Tail relay UE is relay UE directly connected to the remote UE.

Common relay UE is UE between the head relay UE and the tail relay UE.

It should be noted that when there are two relay UEs between the AN device and the remote UE, one of the two relay UEs is head relay UE, and the other is tail relay UE. Only when a quantity of relay UEs between the AN device and the remote UE is greater than or equal to 3, the relay UEs include the foregoing three types of relay UEs.

For example, on a communication link (a link 1 for short) of the UE 1-the UE 2-the UE 3-the UE 4-the AN device, the UE 1 is remote UE, the UE 4 is head relay UE, the UE 3 is common relay UE, and the UE 2 is tail relay UE.

Certainly, some UEs may be used as relay UEs of other remote UEs, and may also be used as remote UEs to connect to the AN device through at least one relay UE. For example, although the UE 2 serves as the relay UE on the link 1, the UE 2 is remote UE on a communication link of the UE 2-the UE 3-the UE 4-the AN device.

It should be noted that, in the foregoing communication system, the AN device and the UE are connected by using a mobile communication technology, and the AN device and the UE may be connected through an air interface (namely, a Uu interface), so as to implement a communication connection between the UE and the AN device (the communication connection may be referred to as a Uu communication connection or a cellular network communication connection). For example, the AN device is separately connected to the UE 4, the UE 7, and the UE 8 through Uu interfaces.

However, two adjacent UEs are connected by using a sidelink, SL (sidelink, SL) communication technology, and a direct link may be established between the two UEs through a proximity service communication interface 5 (ProSe communication 5, PC5) interface, so as to implement a communication connection between the two UEs (the communication connection may be referred to as an SL communication connection).

The sidelink communication technology is a near field communication technology in which UEs can be directly connected to each other, and is also referred to as a proximity service (proximity service, ProSe) communication technology or a device to device (device to device, D2D) communication technology. In the communication system, two UEs that are located at close geographical locations and that support sidelink communication may perform sidelink communication through a direct link. The sidelink communication technology supports broadcast, multicast, and unicast transmission in a cell in-coverage scenario, a cell out-of-coverage scenario, and a cell partial-coverage scenario.

Each of the Uu interface and the PC5 interface includes a control plane protocol stack and a user plane protocol stack. The user plane protocol stack includes at least the following protocol layers: a physical (physical, PHY) layer, a MAC layer, a radio link control (radio link control, RLC) layer, a packet data convergence protocol (packet data convergence protocol, PDCP) layer, and a service data adaptation protocol (service data adaptation protocol, SDAP) layer. The control plane protocol stack includes at least the following protocol layers: a physical layer, a MAC layer, an RLC layer, a PDCP layer, and a radio resource control (radio resource control, RRC) layer.

It should be further noted that the communication system shown in FIG. 1 is used as an example, and constitutes no limitation on a communication system to which the method provided in embodiments of this application is applicable. In conclusion, the method provided in embodiments of this application is applicable to various communication systems that support a multi-hop communication technology, for example, an end-to-end (UE to UE, U2U) system. Embodiments of this application may be further applied to various types and standards of communication systems, for example, a 5th generation (5th Generation, 5G) communication system, a long term evolution (Long Term Evolution, LTE) communication system, a vehicle to everything (vehicle to everything, V2X) system, a long term evolution-vehicle (LTE-vehicle, LTE-V) system, a vehicle to vehicle (vehicle to vehicle, V2V) system, an internet of vehicles system, a machine type communications (Machine Type Communications, MTC) system, an internet of things (internet of things, IoT) system, a long term evolution for machine to machine (LTE for machine to machine, LTE-M) system, a machine to machine (machine to machine, M2M) system, and an enterprise LTE discrete narrowband aggregation (enterprise LTE discrete spectrum aggregation, eLTE-DSA) system. This is not limited in embodiments of this application.

To implement routing between the AN device and the remote UE in the multi-hop communication scenario in the communication system shown in FIG. 1, this application provides a routing method. Because the communication link (the link 1 for short) of the UE 1-the UE 2-the UE 3-the UE 4-the AN device in the communication system shown in FIG. 1 involves the three types of UEs (one head relay UE, one common relay UE, and one tail relay UE), in the following embodiments, the link 1 is mainly used as an example for description. It should be noted that embodiments of this application are not limited to being applicable to only a link involving the three types of UEs, and may be further applicable to other various links.

Example 1: The method provided in embodiments of this application may be further applicable to another link having one head relay UE, a plurality of common relay UEs, and one tail relay UE. On the links, for steps performed by each common relay UE, refer to steps performed by UE 3 in the following embodiments of this application; for the head relay UE, refer to steps performed by UE 4 in the following embodiments of this application; for the tail relay UE, refer to steps performed by UE 2 in the following embodiments of this application.

Example 2: The method provided in embodiments of this application may be further applicable to a link having one head relay UE and one tail relay UE. Same as Example 1, for the head relay UE, refer to steps performed by UE 4 in the following embodiments of this application; for the tail relay UE, refer to steps performed by UE 2 in the following embodiments of this application.

Example 3: The method provided in embodiments of this application may be further applicable to a single-hop communication link, namely, a link through which tail UE accesses an AN device via one relay UE. In these links, the relay UE is both head relay UE and tail relay UE. Therefore, for steps performed by the relay UE, refer to steps performed by UE 2 and UE 4 in the following embodiments.

In addition, it should be further noted that each step in the following embodiments may be performed by a corresponding device, or may be performed by a component such as a chip, a processor, or a chip system in the device. This is not limited in embodiments of this application. The following embodiments are described by using only an example in which an execution body is a corresponding device.

### Embodiment 1

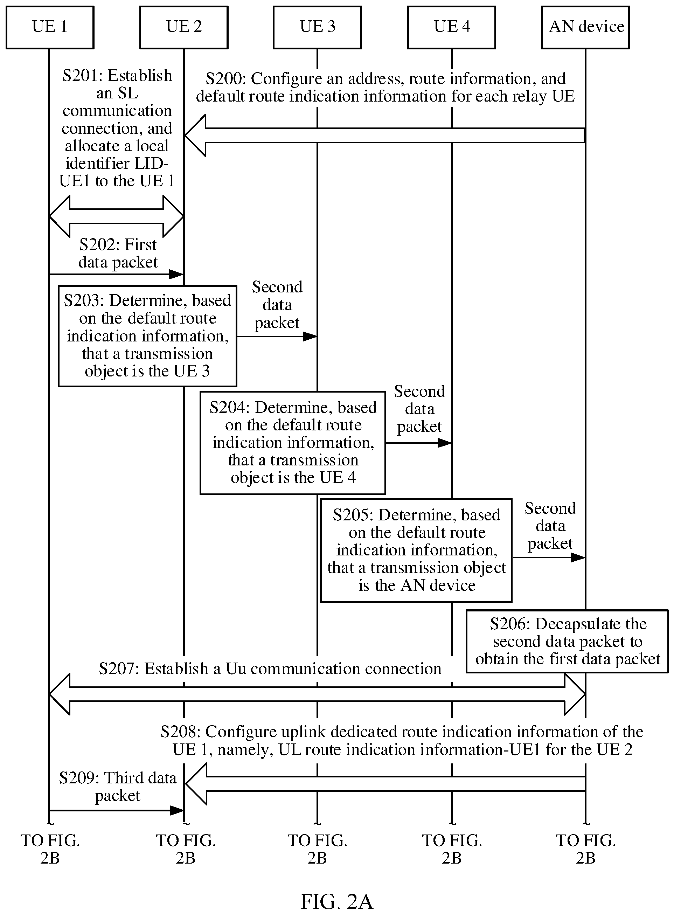

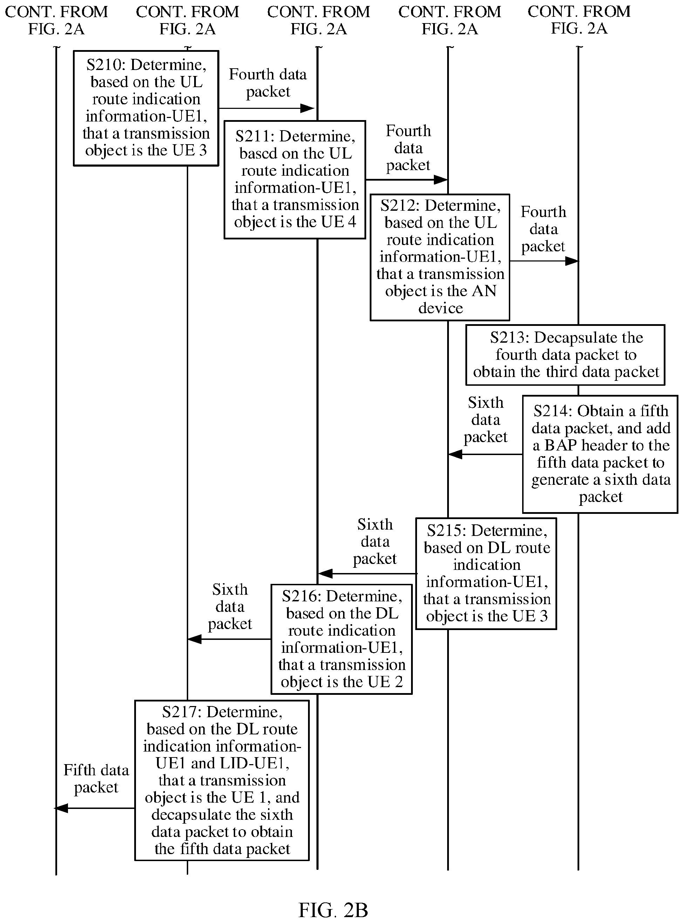

In this embodiment, an address of relay UE is used as route indication information to guide routing transmission of a data packet. The method provided in this embodiment is described in detail below with reference to a flowchart of a routing method shown in FIG. 2A and FIG. 2B.

S200: An AN device configures an address (address, referred to as add. for short below) and at least one piece of route information for each relay UE in a communication system, and sends default route indication information to each relay UE. In this embodiment, the foregoing link 1 is used as an example. Therefore, the figure shows only an example in which the AN device configures addresses, route information, and default route indication information for the UE 2, the UE 3, and the UE 4.

It should be noted that, that the AN device sends the default route indication information to each relay UE is an optional step. In some implementations, the default route indication information is specified in a communication protocol or preset in the relay UE. In this case, the AN device may not need to send the default route indication information to each relay UE.

In this embodiment of this application, the AN device allocates an address to each relay UE, to uniquely identify each relay UE within coverage of the AN device or in a cell managed by the AN device. The address of the relay UE may be a dedicated identifier, or may be referred to as a relay identifier, a relay address, or the like. This is not limited in this application.

Optionally, after becoming relay UE, UE may obtain, from the AN device, an address allocated to the UE. For example, after becoming relay UE, UE may send indication information to the AN device, where the indication information may indicate that the UE becomes the relay UE. After receiving the indication information, the AN device may allocate an address to the UE. It should be noted that the UE may be UE directly connected to the AN device through a Uu interface, or may be UE connected to the AN device through another relay UE. This is not limited in this application.

In this embodiment of this application, an example in which the addresses allocated by the AN device to the UE 2, the UE 3, and the UE 4 are add.UE2, add.UE3, and add.UE4 is used for description.

To implement a routing function, the AN device further needs to provide the at least one piece of route information to each relay UE. Any piece of route information includes one piece of route indication information and a next-hop node address corresponding to the route indication information.

The route indication information includes a destination address. The destination address may be understood as an address of destination relay UE.

It should be noted that the at least one piece of route information provided by the AN device to each relay UE includes downlink route information and uplink route information. The downlink route information and the uplink route information may not be distinguished in form, or may be distinguished by using transmission direction indications.

It should be noted that no address is configured for the AN device, and the AN device does not configure an address for remote UE on the link. Based on this, for downlink transmission, tail relay UE on each link has no next-hop node. Therefore, the AN device does not allocate downlink route information to the tail relay UE. Similarly, for uplink transmission, head relay UE on each link also has no next-hop node. Therefore, the AN device does not allocate corresponding uplink route information to the head relay UE.

In addition, to ensure that each relay UE can perform routing transmission for newly accessed remote UE, the AN device further needs to provide the default route indication information to each relay UE. The relay UE may transmit the 1^{st} data packet of the newly accessed remote UE based on the default indication information.

For example, it is assumed that the route information provided by the AN device to the UE 2 is shown in Table 1, the route information provided by the AN device to the UE 3 is shown in Table 2, and the route information provided by the AN device to the UE 4 is shown in Table 3. For example, the default route indication information includes add.xxx.

**Table 1: Route information of the UE 2**

| Item | Route information | |
|---|---|---|
| | Route indication information | Next-hop node address |
| 1 | add.UE4 | add.UE3 |
| 2 | add.xxx | add.UE3 |

The UE 2 on the link 1 is tail relay UE, and the AN device does not allocate downlink route information to the UE 2. Therefore, in the foregoing Table 1, both the two pieces of route information are uplink route information.

**Table 2: Route information of the UE 3**

| Item | Route information | |
|---|---|---|
| | Route indication information | Next-hop node address |
| 1 | add.UE4 | add.UE4 |
| 2 | add.xxx | add.UE4 |
| 3 | add.UE2 | add.UE2 |

In Table 2, the first and second pieces of route information are uplink route information, and the third piece of route information is downlink route information.

**Table 3: Route information of the UE 4**

| Item | Route information | |
|---|---|---|
| | Route indication information | Next-hop node address |
| 1 | add.UE2 | add.UE3 |
| 2 | add.UE3 | add.UE3 |

The UE 4 on the link 1 is head relay UE, and the AN device does not allocate uplink route information to the UE 4. Therefore, in the foregoing Table 3, the two pieces of route information are downlink route information.

It should be further noted that the AN device may separately configure an address, route information, and default route indication information of any relay UE by using different messages, or may simultaneously configure the foregoing three items of the relay UE by using a same message. This is not limited in this application. In addition, when a topology relationship of the relay UE in the communication system changes, the AN device may perform the foregoing step to update the route information of the relay UE. Alternatively, the AN device may perform the foregoing step at a specified time point or periodically. This is not limited in this application.

S201: The UE 1 establishes an SL communication connection to the UE 2, and the UE 2 allocates a local identifier (Local ID) to the UE 1. The local identifier of the UE 1 is denoted as LID-UE 1 below.

It should be noted that, because the local identifier identifies, within a range of the relay UE, another UE that accesses the relay UE by establishing an SL direct link, different relay UEs may allocate a same local identifier to the accessed UE. For example, a value of the local identifier allocated by the UE 2 to the UE 1 is 1, a value of a local identity allocated by the UE 3 to the UE 2 is 1, and a value of a local identifier allocated by the UE 3 to UE 6 is 2. A local identifier may also be understood as a local index (local index) within a range of one relay UE.

S202: To establish a Uu communication connection between the UE 1 and the AN device, the UE 1 generates a first data packet, where the first data packet includes the 1^{st} message sent by the UE 1 to a network side. For example, the first data packet includes an RRC connection establishment request. The UE 1 sends the first data packet to the UE 2 to which the UE 1 establishes the SL communication connection, where the first data packet has no BAP header. The UE 2 receives the first data packet from the UE 1.

S203: Because the UE 1 is newly accessed remote UE, and the AN device does not allocate downlink dedicated route indication information to the UE 1, the UE 2 uses the default route indication information (namely, add.xxx) as target route indication information of the first data packet. When determining that a destination address (add.xxx) included in the target route indication information is different from the address (add.UE2) of the UE 2, the UE 2 determines, in the at least one piece of stored route information, target route information (for example, the second item in Table 1) that includes the target route indication information; determines, in the target route information, a next-hop node address (namely, add.UE3) corresponding to the target route indication information; and determines that a transmission object is a next-hop node indicated by a next-hop node address (namely, the UE 3 indicated by add.UE3). As tail relay UE of the UE 1, the UE 2 determines that a target device local identifier of the first data packet is a local identifier (namely, the local identifier of the UE 1: LID-UE1) of a source device of the first data packet, and adds a BAP header to the first data packet to generate a second data packet, where the BAP header of the second data packet includes the target route indication information add.xxx and the target device local identifier LID-UE1. The UE 2 sends the second data packet to the UE 3. The UE 3 receives the second data packet from the UE 2.

To implement the routing function, two adjacent relay UEs further need to obtain addresses of each other, so that when performing routing transmission, the relay UE can accurately determine, based on a next-hop node address, a transmission object indicated by the next-hop node address. In this embodiment of this application, two adjacent relay UEs may determine addresses of each other in the following two manners, but are not limited to the following two manners:
Manner 1: After obtaining addresses of the two adjacent relay UEs from the AN device, the two adjacent relay UEs exchange the addresses of each other through an SL communication connection between the two relay UEs. The UE 2 and the UE 3 are used as an example. After becoming relay UE and obtaining the address add.UE2, the UE 2 sends its own address add.UE2 to the UE 3. After receiving the address of the UE 2, the UE 3 sends its own address add.UE3 to the UE 2.
Manner 2: The AN device may provide, to each relay UE, an address of relay UE adjacent to the relay UE. It should be noted that when providing an address of second relay UE adjacent to first relay UE, the AN device further needs to include indication information of the second relay UE, so that the first relay UE can determine, based on the indication information of the second relay UE, that the received address of the second relay UE belongs to the second relay UE.

The UE 2 and the UE 3 are still used as an example. It can be learned from the communication system topology shown in FIG. 1 that the UE 3 is a parent relay of the UE 2, and the UE 3 provides a local identifier (LID-UE2) to the UE 2. Therefore, a first message sent by the AN device to the UE 3 includes the address of the UE 2, and further includes the local identifier (LID-UE2) allocated by the UE 3 to the UE 2. Similarly, the UE 2 is a child relay of the UE 3, and the UE 2 can identify a layer 2 identifier (namely, L2ID-UE3)/cell-radio network temporary identifier (cell-radio network temporary identifier, C-RNTI) (namely, C-RNTI-UE3) of the UE 3. Therefore, a second message sent by the AN device to the UE 2 includes the address of the UE 3, and further includes the layer 2 identifier or the C-RNTI (namely, L2 ID-UE3/C-RNTI-UE3) of the UE 3.

It should be noted that the layer 2 identifier of the UE 3 is an identifier used by the UE 2 and the UE 3 to perform SL communication. If the AN device further includes the layer 2 identifier L2ID-UE3 of the UE 3 when notifying the UE 2 of the address of the UE 3, the UE 3 needs to report the layer 2 identifier of the UE 3 to the AN device in advance.

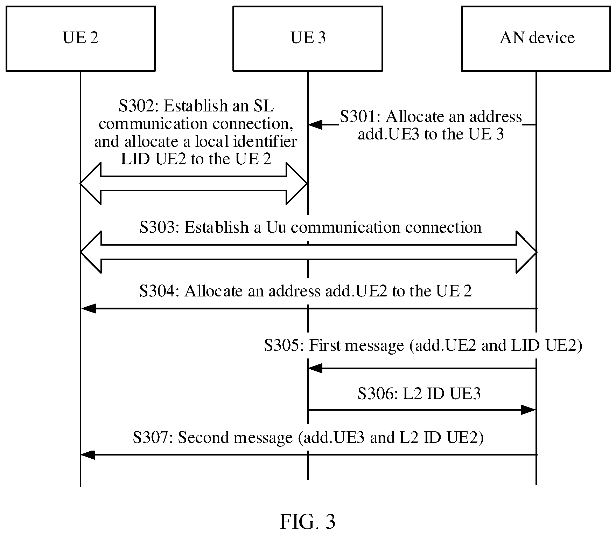

For example, when the AN device separately notifies the UE 2 and the UE 3 of the addresses of each other, refer to a procedure shown in FIG. 3. Specific steps are as follows:
S301: The AN device allocates the address add.UE3 to the UE 3 that has established a Uu communication connection.
S302: When the UE 2 establishes an SL communication connection to the UE 3, the UE 3 allocates the local identifier LID-UE2 to the UE 2.
S303: The UE 2 establishes a Uu communication connection to the AN device, and in a process of establishing the Uu communication connection, the UE 2 or the UE 3 sends the local identifier LID-UE2 of the UE 2 to the AN device.
S304: After the UE 2 becomes relay UE, the AN device allocates the address add.UE2 to the UE 2.
S305: The AN device sends a first message to the UE 3, where the first message carries the address add.UE2 of the UE 2 and the local identifier LID-UE2 of the UE 2.
S306: The UE 3 sends a layer 2 identifier L2 ID-UE2 to the AN device as relay UE.

It should be noted that a time point at which the UE 3 performs S306 is not limited in this embodiment of this application, and S306 may be performed at any moment after S301 and before S307.

S307: The AN device sends a second message to the UE 2, where the second message includes the address add.UE3 of the UE 3 and the layer 2 identifier or the C-RNTI (namely, L2 ID-UE2/C-RNTI-UE3) of the UE 3.

It should be noted that the step of allocating the address by the AN device to the UE 2 and providing the address of the UE 3 to the UE 2 may be implemented by using the same message, that is, S304 and S307 may be simultaneously performed. This is not limited in this application.

In conclusion, the UE 2 and the UE 3 may determine the addresses and indication information of each other. In this way, when subsequently determining that the next-hop node address is the address add.UE3 of the UE 3, the UE 2 may identify, based on L2 ID-UE2/C-RNTI-UE3 corresponding to add.UE3, that the transmission object is the UE 3, and may transmit a data packet to the UE 3 based on L2 ID-UE2/C-RNTI-UE3. Similarly, when subsequently determining that the next-hop node address is the address add.UE2 of the UE 2, the UE 3 may identify, based on LID-UE2 corresponding to add.UE2, that the transmission object is the UE 2, and may transmit a data packet to the UE 2 based on LID-UE2.

In addition, it should be further noted that the foregoing uses only the UE 2 and the UE 3 as an example for description. Actually, the AN device may further provide an address of adjacent relay UE for another relay UE in the foregoing manner. For example, the AN device may further separately notify the UE 3 and the UE 4 of the addresses of each other. For another example, if the UE 1 that subsequently accesses the UE 2 also becomes relay UE, the AN device may further separately notify the UE 1 and the UE 2 of the addresses of each other in the foregoing manner.

S204: After receiving the second data packet, the UE 3 obtains target route indication information (namely, the default route indication information add.xxx) of the second data packet from the BAP header of the second data packet. When determining that a destination address (add.xxx) included in the target route indication information is different from the address (add.UE3) of the UE 3, the UE 3 determines, in the at least one piece of stored route information, target route information (for example, the second item in Table 2) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the second data packet to the UE 4. The UE 4 receives the second data packet from the UE 3.

S205: After receiving the second data packet, the UE 4 serving as the head relay UE may obtain the target route indication information (namely, the default route indication information add.xxx) of the second data packet from the BAP header of the second data packet. When the UE 4 determines that the destination address (add.xxx) included in the target route indication information is different from the address (add.UE3) of the UE 4, the UE 4 determines, based on the target route indication information, that a transmission object is the AN device. The UE 4 sends the second data packet to the AN device. The AN device receives the second data packet from the UE 4.

It may be learned from the foregoing descriptions that the UE 4 is the head relay UE. Therefore, the route information configured by the AN device for the UE 4 does not include uplink route information. Therefore, the UE 4 needs to determine the transmission object in a manner other than route information matching.

Because the UE 4 is the head relay UE, a next hop of the UE 4 in an uplink direction is the AN device. Based on this, in an implementation, when determining that the destination address (add.xxx) included in the target route indication information is different from the address (add.UE4) of the UE 4, and the target route indication information of the second data packet is the default route indication information add.xxx (that is, determining that the target route indication information of the second data packet includes a default address), the UE 4 may determine that the second data packet is a data packet in the uplink transmission direction, that is, determine that the transmission object is the next-hop in the uplink direction: the AN device.

Due to particularity of the UE 4 serving as the head relay UE, the UE 4 can perform communication through two interfaces, and another relay UE can perform communication through only a PC5 interface. Based on this, in another implementation, the UE 4 may determine the transmission direction and the transmission object by using an interface for receiving the second data packet. In this step, when the UE 4 determines that the destination address (add.xxx) included in the target route indication information is different from the address (add.UE4) of the UE 4, and the interface used for receiving the second data packet is the PC5 interface, the UE 4 may determine that the second data packet is a data packet in the uplink transmission direction, that is, determine that the transmission object is the next-hop in the uplink direction: the AN device.

S206: After receiving the second data packet, the AN device decapsulates the second data packet to obtain the first data packet having no BAP header. The AN device may perform subsequent processing based on data carried in the first data packet, for example, start a process of establishing the Uu communication connection between the AN device and the UE 1.

S207: The AN device establishes the Uu communication connection to the UE 1.

S208: The AN device determines uplink dedicated route indication information (referred to as UL route indication information-UE1 for short below) and downlink dedicated route indication information (referred to as DL route indication information-UE1 for short below) of the UE 1, and sends/configures the UL route indication information-UE1 to/for the UE 2, so that the UE 2 can implement uplink transmission of the UE 1 by using the UL route indication information-UE1.

To implement the uplink transmission of the UE 1, the AN device sends the uplink dedicated route indication information of the UE 1 (UL route indication information-UE1) to the UE 2 by using S208. Further, to implement downlink transmission of the UE 1, the AN device stores the downlink dedicated route indication information of the UE 1 (DL route indication information-UE1).

The UL route indication information-UE1 includes an address of destination relay UE in the uplink transmission direction (the last relay UE in the uplink transmission direction). In this embodiment of this application, the UL route indication information-UE1 includes the address add.UE4 of the UE 4.

The DL route indication information-UE1 includes an address of destination relay UE in a downlink transmission direction (the last relay UE in the downlink transmission direction). In this embodiment of this application, the DL route indication information-UE1 includes the address add.UE2 of the UE 2.

In an implementation, there may be one piece of uplink dedicated route indication information of the UE 1, and there may also be one piece of downlink dedicated route indication information of the UE 1.

In another implementation, the AN device may determine, at a granularity of a bearer, the uplink dedicated route indication information (including a plurality of pieces of UL route indication information-UE1) and/or the downlink dedicated route indication information (including a plurality of pieces of DL route indication information-UE1) of the UE 1. Different UL route indication information-UE1/DL route indication information-UE1 corresponds to different bearers.

After S208, each device on the link 1 may implement uplink transmission and downlink transmission of the UE 1 by using the UL route indication information-UE1 and the DL route indication information-UE1. S209 to S213 correspond to an uplink transmission process of the UE 1, and S214 to S217 correspond to a downlink transmission process of the UE 1. It should be noted that an execution sequence of the uplink transmission process and the downlink transmission process is not limited in this application.

The following first describes the uplink transmission process of the UE 1.

S209: The UE 1 generates a third data packet, where the third data packet has no BAP header. In addition, the third data packet may carry user plane data or control plane data (for example, signaling) of the UE 1. This is not limited in this application. The UE 1 sends the third data packet to the UE 2, and the UE 2 receives the third data packet from the UE 1.

S210: After receiving the third data packet, the UE 2 uses the uplink dedicated route indication information of the UE 1 (the UL route indication information-UE1 including add.UE4) as target route indication information of the third data packet. When determining that a destination address (add.UE4) included in the target route indication information is different from the address (add.UE2) of the UE 2, the UE 2 determines, in the at least one piece of stored route information, target route information (for example, the first item in Table 1) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). As the tail relay UE of the UE 1, the UE 2 determines that a target device local identifier of the third data packet is a local identifier of a source device of the third data packet (namely, the local identifier of the UE 1: LID-UE1), and adds a BAP header to the third data packet to generate a fourth data packet, where the BAP header of the fourth data packet includes the target route indication information add.UE4 and the target device local identifier LID-UE1. The UE 2 sends the fourth data packet to the UE 3. The UE 3 receives the fourth data packet from the UE 2.

In an implementation, if the uplink dedicated route indication information of the UE 1 stored in the UE 2 includes a plurality of pieces of UL route indication information-UE1 corresponding to different bearers, when the UE 2 determines the target route indication information of the third data packet, the following steps are specifically included:
determining, by the UE 2, a target bearer used for transmitting the third data packet; and
determining, by the UE 2, that the target route indication information is target UL route indication information-UE1 that corresponds to the target bearer and that is in the plurality of pieces of UL route indication information-UE 1.

S211: After receiving the fourth data packet, the UE 3 obtains the target route indication information (namely, UL route indication information-UE1: add.UE4) of the fourth data packet from the BAP header of the fourth data packet. When determining that a destination address (add.UE4) included in the target route indication information is different from the address (add.UE3) of the UE 3, the UE 3 determines, in the at least one piece of stored route information, target route information (for example, the first item in Table 2) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the fourth data packet to the UE 4. The UE 4 receives the fourth data packet from the UE 3.

S212: After receiving the fourth data packet, the UE 4 serving as the head relay UE may obtain the target route indication information (namely, the UL route indication information-UE1: add.UE4) of the fourth data packet from the BAP header of the fourth data packet. When determining that the destination address (add.UE4) included in the target route indication information is the same as the address (add.UE4) of the UE 4, and the interface used for receiving the second data packet is the PC5 interface, the UE 4 may determine that the second data packet is a data packet in the uplink transmission direction, that is, determine that a transmission object is a next hop in the uplink direction: the AN device. The UE 4 sends the fourth data packet to the AN device. The AN device receives the fourth data packet from the UE 4.

It can be learned from the foregoing specific descriptions in S205 that the route information configured by the AN device for the UE 4 does not include uplink route information. Therefore, the UE 4 needs to determine the transmission object in a manner (for example, by using the interface of the fourth data packet) other than route information matching.

S213: After receiving the fourth data packet, the AN device decapsulates the fourth data packet to obtain the third data packet having no BAP header. The AN device may perform subsequent processing based on data (for example, the user plane data or the control plane data) carried in the third data packet, for example, send the user plane data to a core network device, or perform a corresponding operation based on the control plane data.

The following describes the downlink transmission process of the UE 1.

S214: The AN device obtains a fifth data packet, where the fifth data packet has no BAP header. In addition, the fifth data packet may carry the user plane data or the control plane data (for example, the signaling) of the UE 1. This is not limited in this application. Optionally, the fifth data packet may be generated by the AN device, or may be received from the core network device. The AN device uses the stored downlink dedicated route indication information of the UE 1 (the DL route indication information-UE1 including add.UE2) as target route indication information of the fifth data packet, and determines that a target device local identifier of the fifth data packet is a local identifier of a destination device (the UE 1) (namely, the local identifier of the UE 1: LID-UE1) of the fifth data packet. The AN device adds a BAP header to the fifth data packet, to generate a sixth data packet, where the BAP header of the sixth data packet includes the target route indication information add.UE2 and the target device local identifier LID-UE1. The AN device sends the sixth data packet to the UE 4. The UE 4 receives the sixth data packet from the AN device.

In this embodiment of this application, the AN device may determine, but is not limited to, that a transmission object is the UE 4 in the following implementations:
In an implementation, the AN device may determine, based on a topology relationship of the communication system, head relay UE, namely, the UE 4, on the communication link on which the UE 1 is located.

In another implementation, after determining the downlink dedicated route indication information of the UE 1 (the DL route indication information-UE1) in S208, the AN device may further determine head relay UE corresponding to the downlink dedicated route indication information of the UE 1 (namely, the UE 4 corresponding to the DL route indication information-UE 1). In this way, when determining that the target route indication information of the fifth data packet is the DL route indication information-UE1, the AN device may further determine that the transmission object is the UE 4 corresponding to the DL route indication information-UE1.

In still another implementation, the AN device may maintain at least one piece of route information (all of which are downlink route information). In this way, after the downlink dedicated route indication information of the UE 1 (DL route indication information-UE1) is determined in S208, one piece of route information may be generated as follows:
Route indication information: add.UE2, and next-hop node address: add.UE4.

Optionally, if the downlink dedicated route indication information of the UE 1 stored in the AN device includes a plurality of pieces of DL route indication information-UE1 corresponding to different bearers, when the AN device determines the target route indication information of the fifth data packet, the following steps are specifically included:
determining, by the AN device, a target bearer used for transmitting the fifth data packet; and
determining, by the AN device, that the target route indication information is target DL route indication information-UE1 that corresponds to the target bearer and that is in the plurality of pieces of DL route indication information-UE 1.

S215: After receiving the sixth data packet, the UE 4 serving as the head relay UE may obtain the target route indication information (namely, the DL route indication information-UE1 including add.UE2) of the sixth data packet from the BAP header of the sixth data packet. When determining that a destination address (add.UE2) included in the target route indication information is different from the address (add.UE4) of the UE 4, the UE 4 determines, in the at least one piece of stored route information, target route information (for example, the first item in Table 3) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). The UE 4 sends the sixth data packet to the UE 3. The UE 3 receives the sixth data packet from the UE 4.

S216: After receiving the sixth data packet, the UE 3 obtains the target route indication information (namely, DL route indication information-UE1: add.UE2) of the sixth data packet from the BAP header of the sixth data packet. When determining that a destination address (add.UE2) included in the target route indication information is different from the address (add.UE3) of the UE 3, the UE 3 determines, in the at least one piece of stored route information, target route information (for example, the third item in Table 2) that includes the target route indication information; determines, in the target route information, a next-hop node address (namely, add.UE2) corresponding to the target route indication information; and determines that a transmission object is a next-hop node indicated by the next-hop node address (namely, the UE 2 indicated by add.UE2). The UE 3 sends the sixth data packet to the UE 2, and the UE 2 receives the sixth data packet from the UE 3.

S217: After receiving the sixth data packet, the UE 2 serving as the tail relay UE may obtain the target route indication information of the sixth data packet from the BAP header of the sixth data packet (namely, the DL route indication information-UE1: add.UE2). When determining that the destination address (add.UE2) included in the target route indication information is the same as the address (add.UE2) of the UE, the UE obtains a target device local identifier (LID-UE1) of the sixth data packet from the BAP header of the sixth data packet, and determines that a transmission object is remote UE indicated by the target device local identifier (namely, the UE 1 indicated by LID UE1). The UE 2 decapsulates the sixth data packet, to obtain the fifth data packet having no BAP header. The UE 2 sends the fifth data packet to the UE 1, and the UE 1 receives the fifth data packet from the UE 2.

Then, the UE 1 may perform subsequent processing based on the data carried in the fifth data packet.

This embodiment of this application provides a routing method. In the method, an address of relay UE may be used as route indication information to guide routing transmission of a data packet, so as to implement routing between an AN device and remote UE in a multi-hop communication scenario.

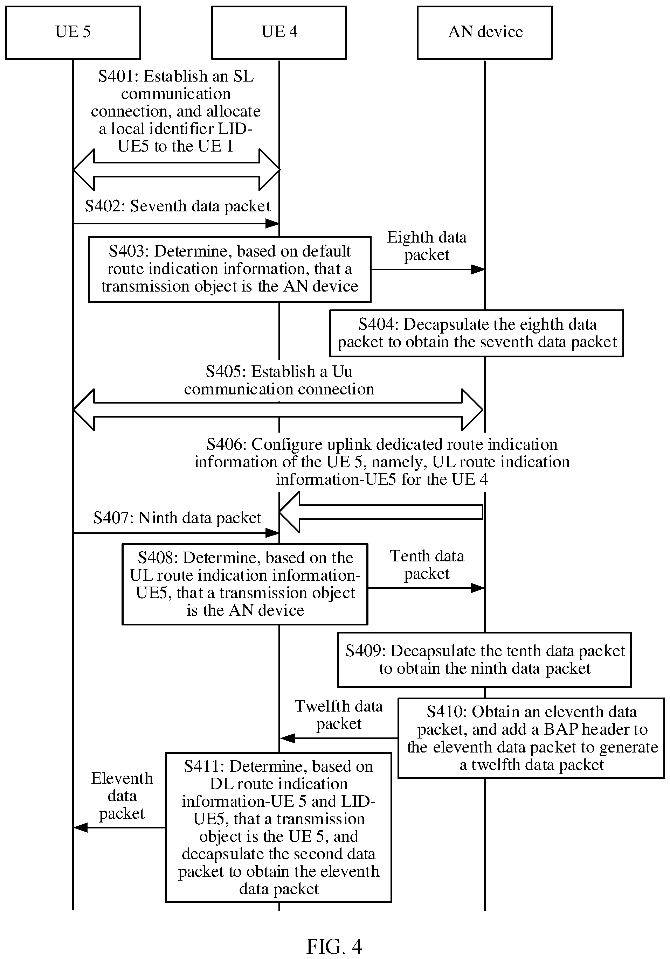

It should be noted that, based on the routing method provided in this embodiment, routing transmission in a single-hop communication scenario may also be implemented. The following uses a communication link (a link 2 for short) of UE 5-the UE 4-the AN device as an example for description with reference to a flowchart shown in FIG. 4.

S401: The UE 5 establishes an SL communication connection to the UE 4, and the UE 4 allocates a local identifier (LID-UE5) to the UE 5.

S402: To establish a Uu communication connection between the UE 5 and the AN device, the UE 5 generates a seventh data packet, where the seventh data packet includes a first message sent by the UE 5 to a network side. The UE 5 sends the seventh data packet to the UE 4, where the seventh data packet has no BAP header. The UE 4 receives the seventh data packet from the UE 5.

S403: The UE 5 is newly accessed remote UE, and the AN device does not allocate downlink dedicated route indication information to the UE 5. Therefore, the UE 4 uses default route indication information (add.xxx) as target route indication information of the seventh data packets. When determining that a destination address (add.xxx) included in the target route indication information is different from an address (add.UE4) of the UE 4, the UE 4 determines, based on the target route indication information, that a transmission object is the AN device. As tail relay UE of the UE 5, the UE 4 determines that a target device local identifier of the seventh data packet is a local identifier of a source device of the seventh data packet (namely, the local identifier of the UE 5: LID-UE 5), and adds a BAP header to the seventh data packet to generate an eighth data packet, where the BAP header of the eighth data packet includes the target route indication information and the target device local identifier. The UE 4 sends the eighth data packet to the AN device. The AN device receives the eighth data packet from the UE 4.

Similar to S205, when determining that the target route indication information is the default route indication information, the UE 4 may determine that the seventh data packet is a data packet in an uplink transmission direction, that is, determine that the transmission object is a next hop in the uplink direction: the AN device; or when determining that an interface used for receiving the seventh data packet is a PC5 interface, the UE 4 may determine that the seventh data packet is a data packet in an uplink transmission direction, that is, determine that the transmission object is a next hop in the uplink direction: the AN device.

S404: Similar to S206, after receiving the eighth data packet, the AN device decapsulates the eighth data packet to obtain the seventh data packet having no BAP header. The AN device may perform subsequent processing based on data carried in the seventh data packet, for example, start a process of establishing the Uu communication connection between the AN device and the UE 5.

S405: The AN device establishes the Uu communication connection to the UE 5.

S406: The AN device determines uplink dedicated route indication information (referred to as UL route indication information-UE5 for short below) and downlink dedicated route indication information (referred to as DL route indication information-UE5 for short below) of the UE 5, and sends/configures the UL route indication information-UE5 to/for the UE 4, so that the UE 5 can implement uplink transmission of the UE 5 by using the UL route indication information-UE5.

The UL route indication information-UE5 includes the address add.UE4 of the UE 4, and the DL route indication information-UE5 includes the address add.UE4 of the UE 4.

It should be further noted that, in an implementation, there may be one piece of uplink dedicated route indication information of the UE 5, and there may also be one piece of downlink dedicated route indication information of the UE 5.

In another implementation, the AN device may determine, at a granularity of a bearer, the uplink dedicated route indication information (including a plurality of pieces of UL route indication information-UE5) and/or the downlink dedicated route indication information (including a plurality of pieces of DL route indication information-UE5) of the UE 5. Different UL route indication information-UE5/DL route indication information-UE5 corresponds to different bearers.

After S406, each device on the link 2 may implement uplink transmission and downlink transmission of the UE 5 by using the UL route indication information-UE5 and the DL route indication information-UE5. S407 to S409 correspond to an uplink transmission process, and S410 and S411 correspond to a downlink transmission process.

The following first describes the uplink transmission process of the UE 5.

S407: The UE 5 generates a ninth data packet, where the ninth data packet has no BAP header. In addition, the ninth data packet may carry user plane data or control plane data of the UE 5. This is not limited in this application. The UE 5 sends the ninth data packet to the UE 4, and the UE 4 receives the ninth data packet from the UE 5.

S408: After receiving the ninth data packet, the UE 4 serving as the tail relay UE and head relay UE uses the uplink dedicated route indication information of the UE 5 (the UL route indication information-UE5 including add.UE4) as target route indication information of the ninth data packet. When determining that the destination address (add.UE4) included in the target route indication information is the same as the address (add.UE4) of the UE 4, and an interface used for receiving the ninth data packet is the PC5 interface, the UE 4 may determine that the ninth data packet is a data packet in the uplink transmission direction, that is, determine that a transmission object is a next hop in the uplink direction: the AN device. As the tail relay UE of the UE 5, the UE 4 determines that a target device local identifier of the ninth data packet is a local identifier of a source device of the ninth data packet (namely, the local identifier of the UE 5: LID-UE5), and adds a BAP header to the ninth data packet to generate a tenth data packet, where the BAP header of the tenth data packet includes the target route indication information and the target device local identifier. The UE 4 sends the tenth data packet to the AN device. The AN device receives the tenth data packet from the UE 4.

Similar to S210, if the uplink dedicated route indication information of the UE 5 stored in the UE 4 includes a plurality of pieces of UL route indication information-UE5 corresponding to different bearers, when the UE 4 determines the target route indication information of the ninth data packet, the following steps are specifically included:
determining, by the UE 4, a target bearer used for transmitting the ninth data packet; and
determining, by the UE 2, that the target route indication information is target UL route indication information-UE5 that corresponds to the target bearer and that is in the plurality of pieces of UL route indication information-UE5.

S409: After receiving the tenth data packet, the AN device decapsulates the tenth data packet to obtain the ninth data packet having no BAP header. The AN device may perform subsequent processing based on data (for example, the user plane data or the control plane data) carried in the ninth data packet, for example, send the user plane data to a core network device, or perform a corresponding operation based on the control plane data.

The following describes the downlink transmission process of the UE 5.

S410: The AN device obtains an eleventh data packet, where the eleventh data packet has no BAP header. In addition, the eleventh data packet may carry the user plane data or the control plane data of the UE 5. The AN device uses the stored downlink dedicated route indication information of the UE 5 (the DL route indication information-UE5 including add.UE4) as target route indication information of the eleventh data packet, and determines that a target device local identifier of the eleventh data packet is a local identifier of a destination device (the UE 5) (namely, the local identifier of the UE 5: LID-UE5) of the eleventh data packet. The AN device adds a BAP header to the eleventh data packet, to generate a twelfth data packet, where the BAP header of the twelfth data packet includes the target route indication information add.UE4 and the target device local identifier LID-UE5. The AN device sends the twelfth data packet to the UE 4. The UE 4 receives the twelfth data packet from the AN device.

Similar to S214, the AN device may determine, based on a topology relationship of a communication system or based on a correspondence between the DL route indication information-UE5 and the UE 4, that a transmission object is the UE 4.

S411: After receiving the twelfth data packet, the UE 4 serving as the head relay UE may obtain the target route indication information (namely, the DL route indication information-UE5 including add.UE4) of the twelfth data packet from the BAP header of the twelfth data packet. When the UE 4 determines that the destination address (add.UE4) included in the target route indication information is the same as the address (add.UE4) of the UE 4, and an interface used for receiving the twelfth data packet is a Uu interface, the UE 4 may determine that the twelfth data packet is a data packet in a downlink transmission direction, that is, determine that a transmission object is a next hop in the downlink direction: the remote UE of the UE 4. The UE 4 may obtain the target device local identifier (LID-UE5) of the twelfth data packet from the BAP header of the twelfth data packet, and determine that the transmission object is the remote UE indicated by the target device local identifier (namely, the UE 5 indicated by LID UE5). The UE 4 decapsulates the twelfth data packet to obtain the eleventh data packet having no BAP header. The UE 4 sends the eleventh data packet to the UE 5, and the UE 5 receives the eleventh data packet from the UE 4.

Then, the UE 5 may perform subsequent processing based on the data carried in the eleventh data packet.

With reference to the routing processes shown in FIG. 2A, FIG. 2B, and FIG. 4 in Embodiment 1, this embodiment provides a routing mechanism 1. The mechanism 1 includes:

### Downlink direction:

When the AN device sends a data packet 1 to remote UE, the AN device needs to add a BAP header to the data packet, to generate a data packet 2. The BAP header of the data packet 2 includes target route indication information and a target device local identifier. The target route indication information is downlink dedicated route indication information (including a destination address, namely, an address of destination relay UE) of the remote UE, and the target device local identifier is a local identifier of the remote UE.

After receiving the data packet 2, any relay UE first determines whether the destination address included in the target route indication information is the same as an address of the relay UE.

If determining that the two are the same, the relay UE determines, within a range of the relay UE based on the target device local identifier included in the BAP header of the data packet 2, the remote UE indicated by the target device local identifier, and sends the decapsulated data packet 1 to the remote UE after decapsulating the data packet 2.

If determining that the two are different, the relay UE searches at least one piece of locally stored route information for target route information that includes the target route indication information; determines, in the target route information, a next-hop node address corresponding to the target route indication information; determines relay UE indicated by the next-hop node address; and sends the data packet 2 to the determined relay UE.

### Uplink direction:

A working mechanism is similar to that in the downlink direction.

A difference lies in that after receiving a data packet 1 that is sent by remote UE and that has no BAP header, the relay UE determines target route indication information and a target device local identifier of the data packet 1. The target route indication information is uplink dedicated route indication information (including a destination address, namely, an address of destination relay UE) or default route indication information of the remote UE, and the target device local identifier is a local identifier of the remote UE. The relay UE adds a BAP header to the data packet 1, to generate a data packet 2, then determines a transmission object according to the foregoing working mechanism, and sends the data packet 2.

It can be learned from the foregoing descriptions that head relay UE is connected to the AN device through a Uu interface, and is connected to another relay UE through a PC5 interface. Therefore, when the AN device does not configure uplink route information for the head relay UE, the head relay UE may determine a subsequent action with reference to the interface. After receiving the data packet 2, the head relay UE determines that the destination address included in the target route indication information in the BAP header of the data packet 2 is the same as an address of the head relay UE, and determines an interface used for receiving the data packet 2. If the interface is a Uu interface, the head relay UE further determines the transmission object by using the target device local identifier of the data packet 2. If the interface is a PC5 interface, the head relay UE determines that the AN device is the transmission object.

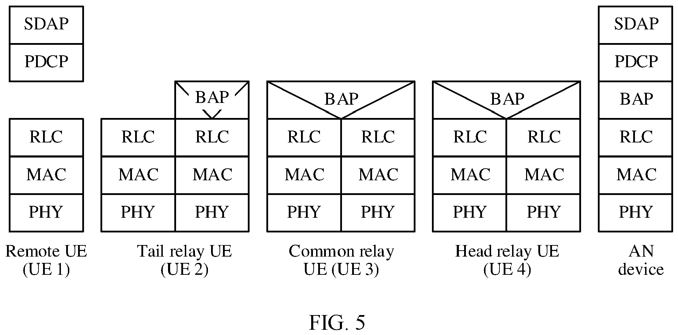

It can be learned with reference to the descriptions in the foregoing Embodiment 1 that, in the multi-hop communication scenario shown in the foregoing Embodiment 1 (the link 1 is still used as an example), a finally formed entire protocol stack may be shown in FIG. 5.

It can be learned from the protocol stack shown in FIG. 5 that a data packet sent by remote UE to relay UE may not carry a BAP header. For example, in the figure, a data packet sent by UE 1 to UE 2 does not carry a BAP header, and a data packet sent by the UE 2 to UE 3 needs to carry a BAP header.

It is considered that the relay UE may also be used as remote UE to communicate with an AN device. For example, a communication link (a link 3 for short) of the UE 2-the UE 3-the UE 4-the AN device is used. On the link 3, the UE 2 is remote UE, the UE 3 is tail relay UE, and the UE 4 is head relay UE.

In an implementation, on the link 3, the UE 2 serving as the remote UE may also perform uplink transmission and downlink transmission by using the foregoing procedures. A data packet sent by the UE 2 serving as the remote UE to the UE 3 does not need to carry a BAP header.

Therefore, from the perspective of the UE 3, in an uplink direction, in some cases, a data packet having no BAP header is received from the UE 2 (a case in which the UE 2 serves as remote UE, for example, the scenario of the link 3), and in other cases, a data packet with a BAP header is received from the UE 2 (a case in which the UE 2 serves as relay UE, for example, the scenario of the link 1).

Similarly, in a downlink direction, in some cases, a data packet sent by the UE 3 to the UE 2 does not carry a BAP header (a case in which the UE 2 serves as remote UE, for example, the scenario of the link 3), and in other cases, a data packet sent by the UE 3 to the UE 2 carries a BAP header (a case in which the UE 2 serves as relay UE, for example, the scenario of the link 1).

In such a complex scenario in which the link 1 and the link 3 coexist, if data packets in different cases are not distinguished, the UE 3 cannot determine a specific manner that needs be used for parsing a received data packet, to be specific, whether to parse the received data packet based on a format of a data packet carrying a BAP header or a format of a data packet having no BAP header.

Based on this, this embodiment of this application may resolve the foregoing problem by using, but not limited to, the following implementations:
In a first implementation, it is considered that different logical channels are used for differentiation. To be specific, a logical channel used when UE, serving as remote UE, communicates with relay UE is different from a logical channel used when UE, serving as relay UE, communicates with adjacent relay UE.
In a second implementation, when serving as relay UE in another link, UE serving as remote UE in another link sends a data packet to adjacent relay UE and adds a BAP header to the data packet. In addition, the BAP header also carries target route indication information and a target device local identifier. The target device local identifier is a default local identifier, and indicates the UE. For example, the default local identifier is LID-000.

In this way, after receiving a data packet, if a destination address included in target route indication information in the data packet is the same as an address of the UE, and the target device local identifier in the data packet is the default local identifier, the UE determines that the data packet is of the UE. The UE parses the data packet, to obtain a data packet that does not include a BAP header, and delivers the data packet to an upper layer (for example, a PDCP layer) of the UE.

It should be further noted that, in the second implementation, the AN device further needs to configure uplink dedicated route indication information (including an address of head relay UE on a link on which the relay UE is located) for each relay UE in each communication system, and send the uplink dedicated route indication information to the corresponding relay UE, so that the relay UE may perform uplink transmission of the relay UE based on the uplink dedicated route indication information.

In this embodiment of this application, head relay UE may also implement uplink and downlink transmission of a data packet of the head relay UE by using the foregoing method. In this case, addresses included in uplink dedicated route indication information and downlink dedicated route indication information allocated by the AN device to the head relay UE are both an address of the head relay UE. The head relay UE determines that a local identifier of the head relay UE is the default local identifier (for example, LID-000). After receiving a data packet, the head relay UE determines that a destination address included in target route indication information in the data packet is the same as the address of the head relay UE, an interface for receiving the data packet is a Uu interface, and a target device local identifier in the data packet is the default local identifier, and determines that the data packet is of the head relay UE.

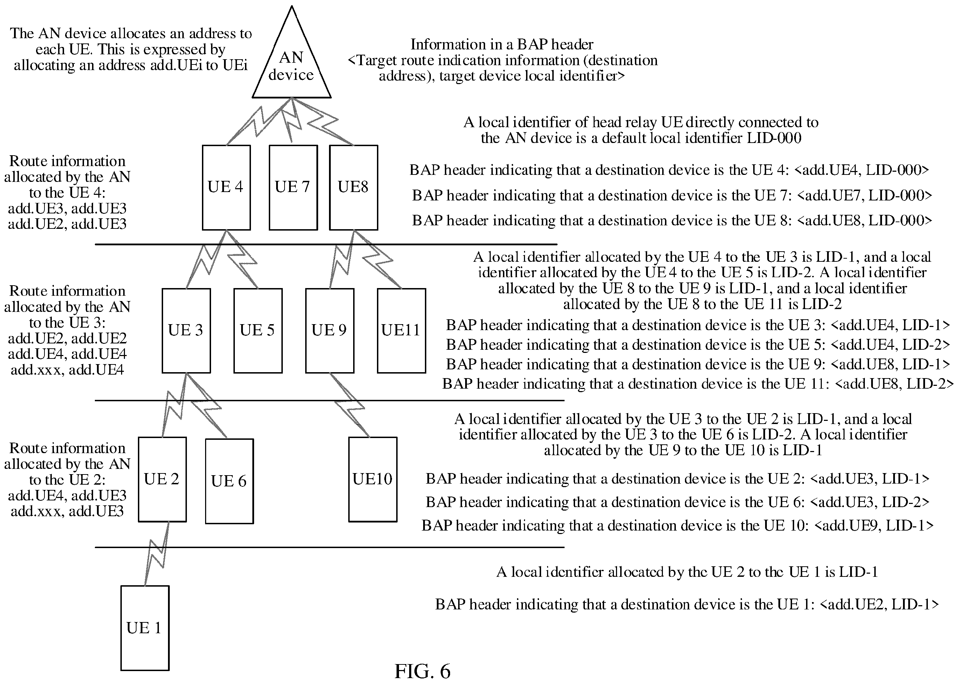

Based on the routing method provided in Embodiment 1, in the communication system shown in FIG. 1, for an address allocated by the AN device to each UE, content in a BAP header of a data packet when the AN device sends the data packet by using each UE as a destination device, and the like, refer to FIG. 6.

### Embodiment 2

Based on the routing method provided in the foregoing Embodiment 1, this embodiment of this application further provides another routing method. In the method, an address of relay UE or an address of an AN device is used as route indication information to guide routing transmission of a data packet. It should be noted that the method provided in this embodiment of this application may also be applied to the flowchart of the routing method shown in FIG. 2A and FIG. 2B. Therefore, the following continues to use the link 1 as an example to describe in detail the method provided in this embodiment of this application with reference to FIG. 2A and FIG. 2B.

S200: The AN device configures an address and at least one piece of route information for each relay UE in the communication system, and sends default route indication information to each relay UE.

This step is similar to a corresponding step in Embodiment 1, and differences lie in that:
1. In this embodiment of this application, an address (referred to as add. AN for short below) is also configured for the AN device. The AN device may send the address of the AN device to head relay UE on each link, so that the head relay UE may subsequently determine the AN device indicated by the address of the AN device, to determine a transmission object, and transmit a data packet to the AN device.
   add.AN may be a default AN address, or may be allocated by the AN device to the AN device itself, or may be configured by a user. This is not limited in this application.
2. The AN device allocates the default route indication information to each relay UE. At least one relay UE can transmit a data packet to the AN device based on the default route indication information, and the AN device has an address. Therefore, an address add.xxx included in the default route indication information may be the address add.AN of the AN device, or another default address indicating the AN device. This is not limited in this application.
   It should be noted that, that the AN device sends the default route indication information to each relay UE is an optional step. In some implementations, the default route indication information is specified in a communication protocol or preset in the relay UE. In this case, the AN device may not need to send the default route indication information to each relay UE.
3. The at least one piece of route information configured by the AN device for each relay UE is different from that in Embodiment 1.

Because the AN device has the address, for uplink transmission, a next-hop node of head relay UE on each link is the AN device. Therefore, the AN device can configure uplink route information for each relay UE, and the uplink route information is different from that in Embodiment 1. (It should be noted that in this embodiment, downlink route information configured by the AN device for each relay UE is the same as that in Embodiment 1.)

For comparison with the route information of the UE 2, the UE 3, and the UE 4 in Embodiment 1, for example, in this embodiment of this application, for route information provided by the AN device to the UE 2, the UE 3, and the UE 4, refer to Table 4 to Table 6 below. It should be noted that, in the following Table 4 to Table 6, an example in which the default address add.xxx included in the default route indication information is different from the address add.AN of the AN device is used.

**Table 4: Route information of the UE 2**

| Item | Route information | |
|---|---|---|
| | Route indication information | Next-hop node address |
| 1 | add.AN | add.UE3 |
| 2 | add.xxx | add.UE3 |

The UE 2 on the link 1 is tail relay UE, and the AN device does not allocate downlink route information to the UE 2. Therefore, in the foregoing Table 4, both the two pieces of route information are uplink route information.

**Table 5: Route information of the UE 3**

| Item | Route information | |
|---|---|---|
| | Route indication information | Next-hop node address |
| 1 | add.AN | add.UE4 |
| 2 | add.xxx | add.UE4 |
| 3 | add.UE2 | add.UE2 |

In Table 5, the first and second pieces of route information are uplink route information, and the third piece of route information is downlink route information.

**Table 6: Route information of the UE 4**

| Item | Route information | |
|---|---|---|
| | Route indication information | Next-hop node address |
| 1 | add.AN | add.AN |
| 2 | add.xxx | add.AN |
| 3 | add.UE2 | add.UE3 |
| 4 | add.UE3 | add.UE3 |

In Table 6, the first and second pieces of route information are uplink route information, and the third and fourth pieces of route information are downlink route information.

S201: The UE 1 establishes an SL communication connection to the UE 2, and the UE 2 allocates a local identifier (referred to as LID-UE 1 for short below) to the UE 1.

S202: To establish a Uu communication connection between the UE 1 and the AN device, the UE 1 generates a first data packet, where the first data packet includes the 1^{st} message sent by the UE 1 to a network side, and the first data packet has no BAP header. The UE 1 sends the first data packet to the UE 2. The UE 2 receives the first data packet from the UE 1.

S203: Because the UE 1 is newly accessed remote UE, and the AN device does not allocate downlink dedicated route indication information to the UE 1, the UE 2 uses the default route indication information (namely, add.xxx) as target route indication information of the first data packet. When determining that a destination address (add.xxx) included in the target route indication information is different from an address (add.UE2) of the UE 2, the UE 2 determines, in the at least one piece of stored route information, target route information (for example, the second item in Table 4) that includes the target route indication information; determines, in the target route information, a next-hop node address (namely, add.UE3) corresponding to the target route indication information; and determines that a transmission object is a next-hop node indicated by a next-hop node address (namely, the UE 3 indicated by add.UE3). As tail relay UE of the UE 1, the UE 2 determines that a target device local identifier of the first data packet is a local identifier (namely, the local identifier of the UE 1: LID-UE1) of a source device of the first data packet, and adds a BAP header to the first data packet to generate a second data packet, where the BAP header of the second data packet includes the target route indication information add.xxx and the target device local identifier LID-UE1. The UE 2 sends the second data packet to the UE 3. The UE 3 receives the second data packet from the UE 2.

Similar to the first embodiment, to implement a routing function, two adjacent relay UEs further need to obtain addresses of each other, so that when performing routing transmission, the relay UE can accurately determine, based on a next-hop node address, a transmission object indicated by the next-hop node address. For a specific process, refer to the descriptions in Embodiment 1. Details are not described herein again.

S204: After receiving the second data packet, the UE 3 obtains the target route indication information (namely, the default route indication information add.xxx) of the second data packet from the BAP header of the second data packet. When determining that a destination address (add.xxx) included in the target route indication information is different from the address (add.UE3) of the UE 3, the UE 3 determines, in the at least one piece of stored route information, target route information (for example, the second item in Table 5) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the second data packet to the UE 4. The UE 4 receives the second data packet from the UE 3.

S205: After receiving the second data packet, the UE 4 may obtain the target route indication information (namely, the default route indication information add.xxx) of the second data packet from the BAP header of the second data packet. When determining that the destination address (add.xxx) included in the target route indication information is different from the address (add.UE4) of the UE 4, the UE 4 determines, in the at least one piece of stored route information, target route information (for example, the second item in Table 6) that includes the target route indication information; determines, in the target route information, a next-hop node address (namely, add. AN) corresponding to the target route indication information; and determines that a transmission object is a next-hop node indicated by the next-hop node address (namely, the AN device indicated by add.AN). The UE 4 sends the second data packet to the AN device. The AN device receives the second data packet from the UE 4.

S206 to S208 are the same as corresponding steps in Embodiment 1. For specific processes, mutual reference may be made to each other, and details are not described herein again. In other words, after establishing the Uu communication connection to the UE 1, the AN device determines uplink dedicated route indication information (referred to as UL route indication information-UE1 for short below) and downlink dedicated route indication information (referred to as DL route indication information-UE1 for short below) of the UE 1, and configures the UL route indication information-UE1 for the UE 2, so that the UE 2 can implement uplink transmission of the UE 1 by using the UL route indication information-UE 1.

Different from Embodiment 1, the UL route indication information-UE1 includes an address of a destination device in an uplink transmission direction. Because the destination device is the AN device in this case, the UL route indication information-UE1 includes add.AN.

Same as Embodiment 1, the DL route indication information-UE1 includes an address of destination relay UE in a downlink transmission direction (the last relay UE in the downlink transmission direction). In this embodiment of this application, the DL route indication information-UE1 includes the address add.UE2 of the UE 2.

After S208, each device on the link 1 may implement uplink transmission and downlink transmission of the UE 1 by using the UL route indication information-UE1 and the DL route indication information-UE1. S209 to S213 correspond to an uplink transmission process of the UE 1, and S214 to S217 correspond to a downlink transmission process of the UE 1.

It should be noted that, because the DL route indication information-UE1, of the UE 1, determined by the AN device is the same as that in Embodiment 1, each device on the link 1 may implement the downlink transmission process based on the DL route indication information-UE1 by using a same process as that in Embodiment 1. Based on this, the downlink transmission process in S214 to S217 is not described again in this embodiment of this application. For a specific process, refer to the descriptions in the foregoing Embodiment 1.

Because the UL route indication information-UE1, of the UE 1, determined by the AN device is different from that in Embodiment 1, the following describes in detail the uplink transmission process S209 to S213 implemented by each device on the link 1 based on the UL route indication information-UE1.

S209: The UE 1 generates a third data packet, where the third data packet has no BAP header. The UE 1 sends the third data packet to the UE 2, and the UE 2 receives the third data packet from the UE 1.

S210: After receiving the third data packet, the UE 2 uses the uplink dedicated route indication information of the UE 1 (the UL route indication information-UE1 including add.AN) as target route indication information of the third data packet. When determining that a destination address (add. AN) included in the target route indication information is different from the address (add.UE2) of the UE 2, the UE 2 determines, in the at least one piece of stored route information, target route information (for example, the first item in Table 4) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). As the tail relay UE of the UE 1, the UE 2 determines that a target device local identifier of the third data packet is a local identifier of a source device of the third data packet (namely, the local identifier of the UE 1: LID-UE1), and adds a BAP header to the third data packet to generate a fourth data packet, where the BAP header of the fourth data packet includes target route indication information add.UE4 and the target device local identifier LID-UE1. The UE 2 sends the fourth data packet to the UE 3. The UE 3 receives the fourth data packet from the UE 2.

In an implementation, if the uplink dedicated route indication information of the UE 1 stored in the UE 2 includes a plurality of pieces of UL route indication information-UE1 corresponding to different bearers, when the UE 2 determines the target route indication information of the third data packet, the following steps are specifically included:
determining, by the UE 2, a target bearer used for transmitting the third data packet; and
determining, by the UE 2, that the target route indication information is target UL route indication information-UE1 that corresponds to the target bearer and that is in the plurality of pieces of UL route indication information-UE 1.

S211: After receiving the fourth data packet, the UE 3 obtains the target route indication information (namely, the UL route indication information-UE1: add.AN) of the fourth data packet from the BAP header of the fourth data packet. When determining that a destination address (add.AN) included in the target route indication information is different from the address (add.UE3) of the UE 3, the UE 3 determines, in the at least one piece of stored route information, target route information (for example, the first item in Table 5) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the fourth data packet to the UE 4. The UE 4 receives the fourth data packet from the UE 3.

S212: After receiving the fourth data packet, the UE 4 may obtain the target route indication information (namely, the UL route indication information-UE1: add. AN) of the fourth data packet from the BAP header of the fourth data packet. When determining that the destination address (add.AN) included in the target route indication information is different from the address (add.UE4) of the UE 4, the UE 4 determines, in the at least one piece of stored route information, target route information (for example, the first item in Table 6) that includes the target route indication information; determines, in the target route information, a next-hop node address (namely, add.AN) corresponding to the target route indication information; and determines that a transmission object is a next-hop node indicated by the next-hop node address (namely, the AN device indicated by add. AN). The UE 4 sends the fourth data packet to the AN device. The AN device receives the fourth data packet from the UE 4.

S213: After receiving the fourth data packet, the AN device decapsulates the fourth data packet to obtain the third data packet having no BAP header. The AN device may perform subsequent processing based on data (for example, user plane data or control plane data) carried in the third data packet, for example, send the user plane data to a core network device, or perform a corresponding operation based on the control plane data.

This embodiment of this application provides a routing method. In the method, an address of relay UE or an address of an AN device may be used as route indication information to guide routing transmission of a data packet, so as to implement routing between an AN device and remote UE in a multi-hop communication scenario.

Similarly, based on the routing method provided in this embodiment, routing transmission in a single-hop communication scenario may also be implemented, for example, a communication link (a link 2 for short) of UE 5-the UE 4-the AN device. Each device on the link 2 may implement uplink transmission and downlink transmission of the UE 5 by using a method the same as the foregoing method. For a specific process, refer to the descriptions in the foregoing embodiment, and details are not described herein again.

With reference to the routing process in Embodiment 2, this embodiment of this application provides a routing mechanism 2. The mechanism 2 includes:
For a downlink direction, the mechanism is the same as the mechanism 1.

### Uplink direction:

A difference lies in that after receiving a data packet 1 that is sent by remote UE and that has no BAP header, relay UE determines target route indication information and a target device local identifier of the data packet 1. The target route indication information is uplink dedicated route indication information (including a destination address, namely, an address of the AN device) or default route indication information of the remote UE, and the target device local identifier is a local identifier of the remote UE. The relay UE adds a BAP header to the data packet 1, to generate a data packet 2, then determines a transmission object according to the foregoing working mechanism, and sends the data packet 2 until the data packet 2 is transmitted to the AN device.

It can be learned with reference to the descriptions in the foregoing Embodiment 2 that, in the multi-hop communication scenario shown in the foregoing Embodiment 1 (the link 1 is still used as an example), a finally formed entire protocol stack may be shown in FIG. 5.

Similarly, when relay UE serves as remote UE to communicate with an AN device, for example, when the UE 2 on the link 3 mentioned in Embodiment 1 serves as remote UE, the two implementations in the foregoing Embodiment 1 may also be used for implementation. For a specific process, refer to the descriptions of a corresponding process in Embodiment 1. Details are not described herein again.

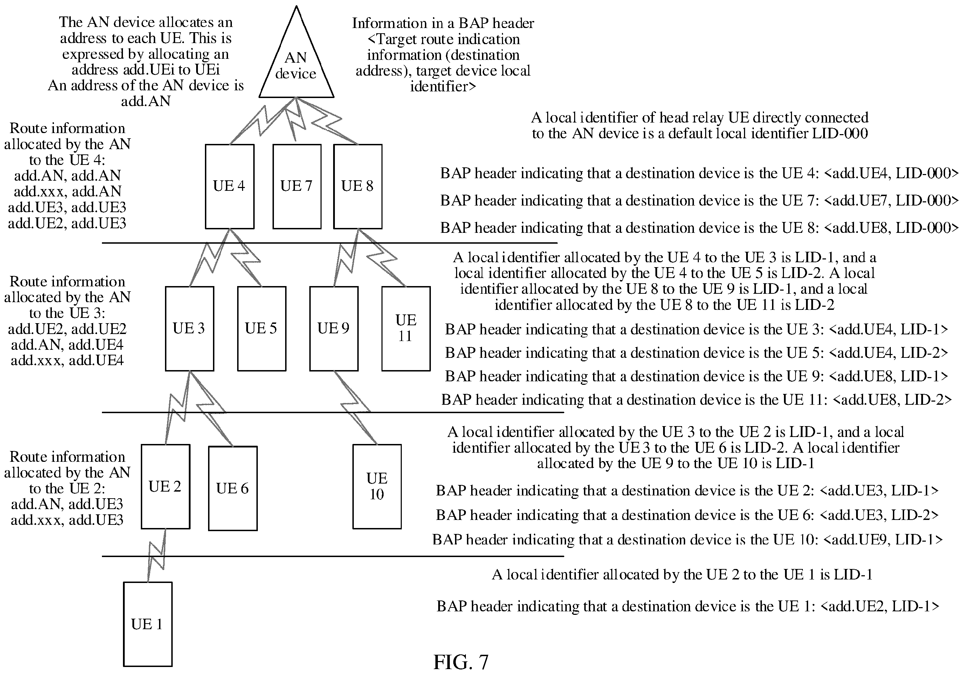

In the routing method provided in Embodiment 2, in the communication system shown in FIG. 1, for an address allocated by the AN device to each UE, content in a BAP header of a data packet when the AN device sends the data packet by using each UE as a destination device, and the like, refer to FIG. 7.

### Embodiment 3

Based on the foregoing Embodiment 1 and Embodiment 2, this embodiment of this application further provides another routing method. In the method, both an address and a path identifier (path ID) of a device are used as route indication information to guide routing transmission of a data packet.

In the method, the AN device may allocate a path ID to each communication link. For example, the AN device may allocate a path ID to each communication link based on a topology relationship of a communication system.

It should be noted that a path ID allocated by the AN device to each link may be for distinguishing transmission directions. To be specific, for a same communication link, the AN device allocates one path ID to an uplink transmission direction of the link, and allocates one path ID to a downlink transmission direction of the link. Alternatively, the AN device allocates a path ID without distinguishing transmission directions, that is, allocates one path ID to a communication link.

The following uses an example in which the AN device allocates one path ID to each communication link without distinguishing transmission directions.

For example, with reference to the routing method provided in Embodiment 1, the AN device further allocates a path ID-1 to the following communication links: the UE 4-the AN device, the UE 3-the UE 4-the AN device, and the UE 5-the UE 4-the AN device; allocates a path ID-2 to a communication link of the UE 7-the AN device; allocates a path ID-3 to the following communication links: the UE 8-the AN device, the UE 9-the UE 8-the AN device, and the UE 11-the UE 8-the AN device. The AN device allocates a path ID-4 to the following communication links: the UE 2-the UE 3-the UE 4-the AN device and the UE 6-the UE 3-the UE 4-the AN device; the AN device allocates a path ID-5 to a communication link of the UE 1-the UE 2-the UE 3-the UE 4-the AN device; and the AN device allocates a path ID-6 to a communication link of the UE 10-the UE 9-the UE 8-the AN device. In addition, the AN device allocates a path ID-yyy to the default route indication information.

Based on this example, the route information allocated by the AN device to relay UE on the link 1 is shown in Table 7 to Table 9.

**Table 7: Route information of the UE 2**

| Item | Route information | |
|---|---|---|
| | Route indication information | Next-hop node address |
| 1 | path ID-5, add.UE4 | add.UE3 |
| 2 | path ID-yyy, add.xxx | add.UE3 |

In Table 7, both the two pieces of route information are uplink route information.

**Table 8: Route information of the UE 3**

| Item | Route information | |
|---|---|---|
| | Route indication information | Next-hop node address |
| 1 | path ID-5, add.UE4 | add.UE4 |
| 2 | path ID-4, add.UE4 | add.UE4 |
| 3 | path ID-yyy, add.xxx | add.UE4 |
| 4 | path ID-5, add.UE2 | add.UE2 |

In Table 8, the first to third pieces of route information are uplink route information, and the fourth piece of route information is downlink route information.

**Table 9: Route information of the UE 4**

| Item | Route information | |
|---|---|---|
| | Route indication information | Next-hop node address |
| 1 | path ID-5, add.UE2 | add.UE3 |
| 2 | path ID-4, add.UE3 | add.UE3 |

In Table 9, both the two pieces of route information are downlink route information.

It should be noted that after each remote UE establishes a Uu communication connection to the AN device, the AN device allocates uplink dedicated route indication information and downlink dedicated route indication information to the remote UE. The route indication information includes a corresponding address, and further needs to include a path ID allocated by the AN device to a communication link on which the remote UE is located.

For a routing mechanism 3 provided in this embodiment of this application, refer to the mechanism 1 provided in Embodiment 1 or the mechanism 2 provided in Embodiment 2. For details, refer to the foregoing detailed descriptions of the mechanism 1 or the mechanism 2. Details are not described herein again. It should be noted that, in the mechanism 3, a path identifier and a device address in route indication information included in target route information found by relay UE are respectively the same as a target path identifier and a destination address in the target route indication information.

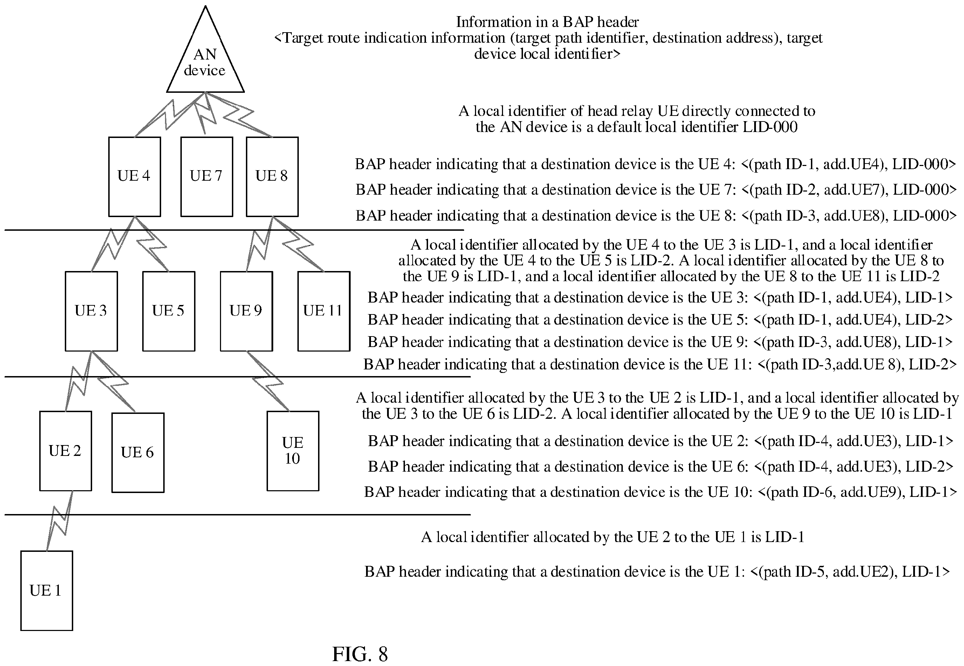

Based on the routing method provided in Embodiment 3, in the communication system shown in FIG. 1, for content in a BAP header of a data packet when the AN device sends the data packet by using each UE as a destination device, refer to FIG. 8.

### Embodiment 4

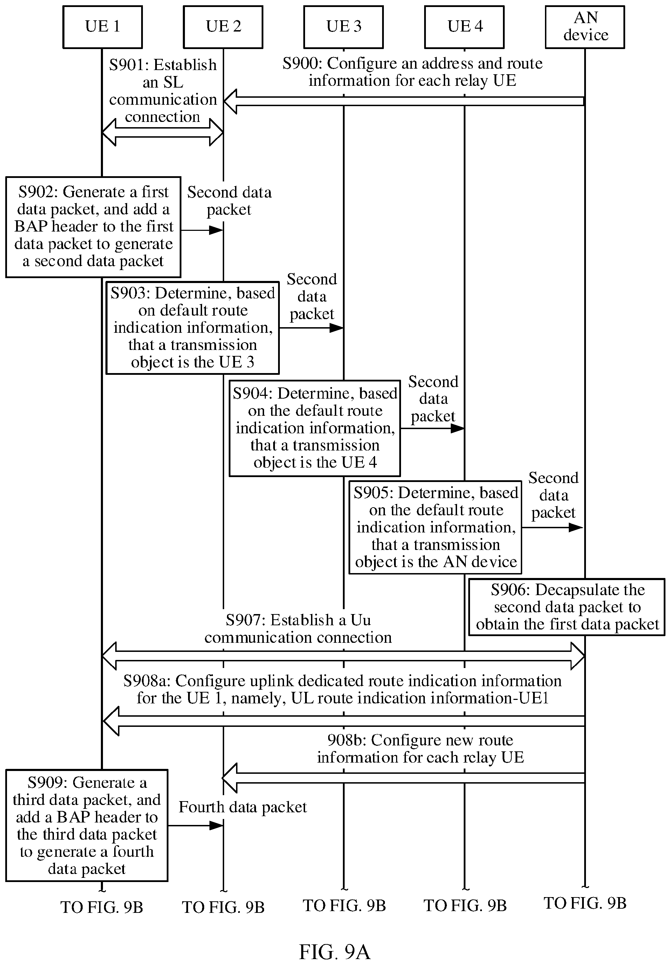

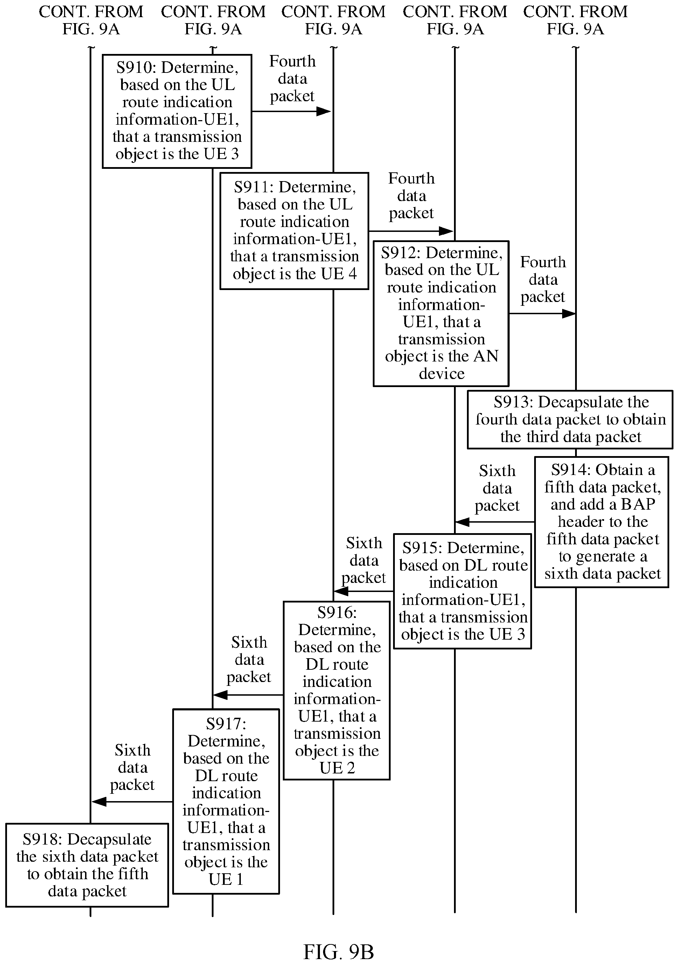

In a method provided in this embodiment, an address of UE is used as route indication information to guide routing transmission of a data packet. The method provided in this embodiment is described in detail below with reference to a flowchart of a routing method shown in FIG. 9A and FIG. 9B. It should be noted that, in this embodiment, the AN device does not have the foregoing address used for routing. In addition, it can be learned from the descriptions in the foregoing Embodiment 1 to Embodiment 3 that, in the foregoing embodiments, a BAP header of a data packet includes target route indication information, and further includes a target device local identifier. A difference between this embodiment and the foregoing embodiments is that a BAP header of a data packet includes target route indication information and does not need to include a target device local identifier.

S900: The AN device configures an address and at least one piece of route information for each UE in the communication system.

In this embodiment of this application, the AN device allocates an address to each UE, to uniquely identify each relay UE within coverage of the AN device or in a cell managed by the AN device.

It should be noted that, after configuring an address for UE, the AN device further configures new route information for relay UE on a link on which the UE is located. Route indication information in the updated route information includes the address of the UE. In this way, the relay UE may perform downlink transmission of the UE based on the updated route information.

It should be noted that the at least one piece of route information provided by the AN device to each relay UE includes downlink route information and uplink route information. The downlink route information and the uplink route information may not be distinguished in form, or may be distinguished by using transmission direction indications. Any piece of route information includes one piece of route indication information and a next-hop node address corresponding to the route indication information. The route indication information includes a destination address. A destination address included in route indication information of uplink route information may be understood as an address of destination relay UE. A destination address included in route indication information of downlink route information may be an address of a destination device (remote UE on a link).

Different from Embodiment 1, no address is configured for the AN device, but the AN device can configure an address for remote UE on a link. Therefore, for downlink transmission, there is a next-hop node for tail relay UE on each link, and the AN device allocates downlink route information to the tail relay UE. A difference lies in that, for uplink transmission, head relay UE on each link also has no next-hop node. Therefore, the AN device does not allocate corresponding uplink route information to the head relay UE.

In addition, to implement uplink transmission of newly accessed remote UE, default route indication information is further introduced in this embodiment of this application. The default route indication information is used for transmitting, to the AN device, the 1^{st} data packet of the remote UE that newly accesses the system. In this embodiment of this application, an example in which the default route indication information includes add.xxx is used for description subsequently.

Correspondingly, route information configured by the AN device for UE that has accessed the system includes one piece of route information including the default route indication information.

The link 1 is still used as an example. Uplink route information that includes the default route indication information and that is configured by the AN device for the UE 2 and the UE 3 is shown in Table 10 and Table 11 respectively.

**Table 10: Route information of the UE 2**

| Route information | |
|---|---|
| Route indication information | Next-hop node address |
| add.xxx | add.UE3 |

**Table 11: Route information of the UE 3**

| Route information | |
|---|---|
| Route indication information | Next-hop node address |
| add.xxx | add.UE4 |

S901: The UE 1 establishes an SL communication connection to the UE 2.

S902: To establish a Uu communication connection between the UE 1 and the AN device, the UE 1 generates a first data packet, where the first data packet includes the 1^{st} message sent by the UE 1 to a network side. For example, the first data packet includes an RRC connection establishment request. The UE 1 uses the default route indication information (including add.xxx) as target route indication information of the first data packet, and adds a BAP header to the first data packet, to generate a second data packet, where the BAP header of the second data packet includes the target route indication information (add.xxx). The UE 1 sends the second data packet to the UE 2. The UE 2 receives the second data packet from the UE 1.

In this step, the UE 1 may determine the default route indication information in the following two implementations:
In a first implementation, the default route indication information may be predefined and stored in the UE.
In a second implementation, the default route indication information may be obtained by the UE 1 from the UE 2.

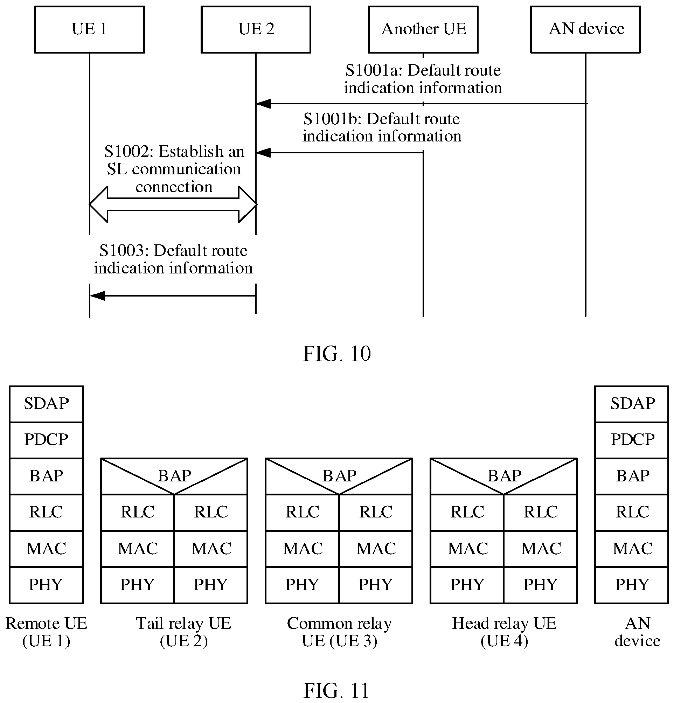

In the second embodiment, the UE 1 may obtain the default route indication information by referring to a procedure shown in FIG. 10. This includes the following steps.

S1001a: After the UE 2 establishes a Uu communication connection to the AN device, the UE 2 obtains the default route indication information from the AN device.

S1001b: After establishing an SL communication connection to another UE (for example, the UE 3), the UE 2 obtains the default route indication information from the another UE.

S1001a and S1001b are parallel solutions, and the UE 2 may obtain the default route indication information by using either of the solutions.

S1002: The UE 1 establishes the SL communication connection to the UE 2.

S1003: The UE 2 sends the default route indication information to the UE 1.

In addition, the UE 1 may determine, in the following two implementations, that a transmission object is the UE 2.

### First implementation:

The UE 1 determines the UE 2 that has the SL communication connection to the UE 1.

### Second implementation:

When the UE 2 performs S1003, the UE 2 may further send indication information of the UE 2 to the UE 1, so that the UE 1 may determine, based on the indication information, that the default route indication information corresponds to the UE 2, so that when determining that the target route indication information of the first data packet is the default route indication information, the UE 2 determines that the transmission object of the first data packet is the UE 2.

Optionally, the UE 2 may alternatively send, to the UE 1, route information including a correspondence between the default route indication information and a corresponding next-hop node address (add.UE2), so that when determining that the target route indication information of the first data packet is the default route indication information, the UE 1 may determine the route information including the default route indication information; determine, in the route information, the next-hop node address (add.UE2) corresponding to the default route indication information; and finally determine that the transmission object is a next-hop node corresponding to the next-hop node address (namely, the UE 2 indicated by add.UE2).

In this application, to implement a routing function, two adjacent UEs further need to obtain addresses of each other, so that when performing routing transmission, the UE can accurately determine, based on a next-hop node address, an object indicated by the next-hop node address. For a process in which two adjacent relay UEs determine addresses of each other, refer to the specific descriptions in Embodiment 1. Details are not described herein again.

S903: After receiving the second data packet, the UE 2 obtains the target route indication information (namely, the default route indication information add.xxx) of the second data packet from the BAP header of the second data packet. When determining that a destination address (add.xxx) included in the target route indication information is different from the address (add.UE2) of the UE 2, the UE 2 determines, in the at least one piece of stored route information, target route information (for example, the route indication information in Table 10) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). The UE 2 sends the second data packet to the UE 3. The UE 3 receives the second data packet from the UE 2.

S904: After receiving the second data packet, the UE 3 obtains the target route indication information (namely, the default route indication information add.xxx) of the second data packet from the BAP header of the second data packet. When determining that the destination address (add.xxx) included in the target route indication information is different from the address (add.UE3) of the UE 3, the UE 2 determines, in the at least one piece of stored route information, target route information (for example, the route indication information in Table 11) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the second data packet to the UE 4. The UE 4 receives the second data packet from the UE 3.

S905: Same as S205 in Embodiment 1, after receiving the second data packet, the UE 4 may obtain the target route indication information (namely, the default route indication information add.xxx) of the second data packet from the BAP header of the second data packet, and determine, based on the target route indication information by using the implementation recorded in S205, that a transmission object is the AN device. The UE 4 sends the second data packet to the AN device. The AN device receives the second data packet from the UE 4.

S906 and S907 are the same as S206 and S207 in Embodiment 1, and details are not described herein again.

S908a: The AN device allocates an address (namely, add.UE1) to the UE 1, determines uplink dedicated route indication information (referred to as UL route indication information-UE1 for short below) and downlink dedicated route indication information (referred to as UL route indication information-UE1 for short below) of the UE 1, and sends/configures the UL route indication information-UE1 and add.UE1 to/for the UE 1, so that the UE 1 can implement uplink transmission of the UE 1 by using the UL route indication information-UE1.

Optionally, when the AN device may configure the UL route indication information-UE1 and add. UE I for the UE 1, the AN device may send the foregoing information to the UE 2, and the UE 2 sends the information to the UE 1 by using an SL RRC message. To implement downlink transmission of the UE 1, the AN device stores the downlink dedicated route indication information of the UE 1 (UL route indication information-UE1).

The UL route indication information-UE1 includes an address of destination relay UE in an uplink transmission direction (the last relay UE in the uplink transmission direction). In this embodiment of this application, the UL route indication information-UE1 includes the address add.UE4 of the UE 4.

The DL route indication information-UE1 includes an address (namely, add.UE1) of a destination device in a downlink transmission direction.

In an implementation, there may be one piece of UL route indication information-UE1, and there may also be one piece of DL route indication information-UE1.

In another implementation, the AN device may determine, at a granularity of a bearer, the uplink dedicated route indication information (including a plurality of pieces of UL route indication information-UE1) and/or the downlink dedicated route indication information (including a plurality of pieces of DL route indication information-UE1) of the UE 1. Different UL route indication information-UE1/DL route indication information-UE1 corresponds to different bearers.

S908b: The AN device configures new route information for each relay UE on the link based on the UL route indication information-UE1 and the DL route indication information-UE1 of the UE 1, so that each relay UE can implement uplink transmission and downlink transmission of the UE 1 based on the route information.

New route information allocated by the AN device to the UE 2, the UE 3, and the UE 4 is separately shown in Table 12 to Table 14.

**Table 12: Route information of the UE 2**

| Item | Route information | |
|---|---|---|
| | Route indication information | Next-hop node address |
| 1 | add.UE4 | add.UE3 |
| 2 | add.UE1 | add.UE1 |

**Table 13: Route information of the UE 3**

| Item | Route information | |
|---|---|---|
| | Route indication information | Next-hop node address |
| 1 | add.UE4 | add.UE4 |
| 2 | add.UE1 | add.UE2 |

**Table 14: Route information of the UE 4**

| Item | Route information | |
|---|---|---|
| | Route indication information | Next-hop node address |
| 1 | add.UE1 | add.UE3 |

After S908b, each device on the link 1 may implement uplink transmission and downlink transmission of the UE 1 by using the UL route indication information-UE1 and the DL route indication information-UE1. S909 to S913 correspond to an uplink transmission process of the UE 1, and S914 to S918 correspond to a downlink transmission process of the UE 1.

The following first describes the uplink transmission process of the UE 1.

S909: The UE 1 generates a third data packet, where the third data packet has no BAP header. Optionally, the third data packet may carry user plane data or control plane data of the UE 1. This is not limited in this application. The UE 1 uses the UL route indication information-UE1 as target route indication information of the third data packet, and adds a BAP header to the third data packet, to generate a fourth data packet, where the BAP header of the fourth data packet includes the target route indication information (the UL route indication information-UE1 including add.UE4). The UE 1 sends a fourth data packet to the UE 2. The UE 2 receives the fourth data packet from the UE 1.

Same as S902, the UE 1 may also determine, in the following two implementations, that a transmission object is the UE 2.

### First implementation:

The UE 1 determines the UE 2 that has the SL communication connection to the UE 1.

### Second implementation:

When the UE 2 performs S908a, the UE 2 may further send indication information of the UE 2 to the UE 1, so that the UE 1 may determine, based on the indication information, that the UL route indication information-UE1 corresponds to the UE 2, so that when determining that the target route indication information of the third data packet is the UL route indication information-UE1, the UE 2 determines that the transmission object of the third data packet is the UE 2.

Optionally, the AN device may alternatively send, to the UE 1, route information including a correspondence between the UL route indication information-UE1 and a corresponding next-hop node address (add.UE2), so that when determining that the target route indication information of the third data packet is the UL route indication information-UE1, the UE 1 may determine the route information including the UL route indication information-UE1; determine, in the route information, the next-hop node address (add.UE2) corresponding to the UL route indication information-UE1; and finally determine that the transmission object is a next-hop node corresponding to the next-hop node address (namely, the UE 2 indicated by add.UE2).

In this application, to implement the routing function, two adjacent UEs further need to obtain addresses of each other, so that when performing routing transmission, the UE can accurately determine, based on a next-hop node address, an object indicated by the next-hop node address. For a process in which two adjacent relay UEs determine addresses of each other, refer to the specific descriptions in Embodiment 1. Details are not described herein again.

S910: After receiving the fourth data packet, the UE 2 obtains the target route indication information (namely, the UL route indication information-UE1: add.UE4) of the fourth data packet from the BAP header of the fourth data packet. When determining that a destination address (add.UE4) included in the target route indication information is different from the address (add.UE2) of the UE 2, the UE 2 determines, in the at least one piece of stored route information, target route information (for example, the first piece of route indication information in Table 12) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). The UE 2 sends the fourth data packet to the UE 3. The UE 3 receives the fourth data packet from the UE 2.

S911: After receiving the fourth data packet, the UE 3 obtains the target route indication information (namely, the UL route indication information-UE1: add.UE4) of the fourth data packet from the BAP header of the fourth data packet. When determining that the destination address (add.UE4) included in the target route indication information is different from the address (add.UE3) of the UE 3, the UE 3 determines, in the at least one piece of stored route information, target route information (for example, the first piece of route indication information in Table 13) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the fourth data packet to the UE 4. The UE 4 receives the fourth data packet from the UE 3.

S912: Same as S205 in Embodiment 1, after receiving the fourth data packet, the UE 4 may obtain the target route indication information (namely, the UL route indication information-UE1 including add.UE4) of the fourth data packet from the BAP header of the fourth data packet, and determine, based on the target route indication information by using the implementation recorded in S212, that a transmission object is the AN device. The UE 4 sends the fourth data packet to the AN device. The AN device receives the fourth data packet from the UE 4.

S913 is the same as S213. Details are not described herein again.

The following describes the downlink transmission process of the UE 1.

S914: The AN device obtains a fifth data packet, where the fifth data packet has no BAP header. In addition, the fifth data packet may carry the user plane data or the control plane data (for example, signaling) of the UE 1. This is not limited in this application. Optionally, the fifth data packet may be generated by the AN device, or may be received from a core network device. The AN device uses the stored downlink dedicated route indication information of the UE 1 (the DL route indication information-UE1 including add.UE1) as target route indication information of the fifth data packet. The AN device adds a BAP header to the fifth data packet, to generate a sixth data packet, where the BAP header of the sixth data packet includes the target route indication information add.UE1. The AN device sends the sixth data packet to the UE 4. The UE 4 receives the sixth data packet from the AN device.

In an implementation, the AN device may determine, based on a topology relationship of the communication system, head relay UE, namely, the UE 4, on the communication link on which the UE 1 is located.

In another implementation, after determining the downlink dedicated route indication information of the UE 1 (the DL route indication information-UE1) in S908, the AN device may further determine head relay UE corresponding to the downlink dedicated route indication information of the UE 1 (namely, the UE 4 corresponding to the DL route indication information-UE 1). In this way, when determining that the target route indication information of the fifth data packet is the DL route indication information-UE1, the AN device may further determine that the transmission object is the UE 4 corresponding to the DL route indication information-UE1.

In still another implementation, the AN device may maintain at least one piece of route information (all of which are downlink route information). In this way, after the downlink dedicated route indication information of the UE 1 (DL route indication information-UE1) is determined in S908, one piece of route information may be generated as follows:

Route indication information: add.UE1, and next-hop node address: add.UE4.

Optionally, if the downlink dedicated route indication information of the UE 1 stored in the AN device includes a plurality of pieces of DL route indication information-UE1 corresponding to different bearers, when the AN device determines the target route indication information of the fifth data packet, the following steps are specifically included:
determining, by the AN device, a target bearer used for transmitting the fifth data packet; and
determining, by the AN device, that the target route indication information is target DL route indication information-UE1 that corresponds to the target bearer and that is in the plurality of pieces of DL route indication information-UE 1.

S915: After receiving the sixth data packet, the UE 4 may obtain the target route indication information (namely, the DL route indication information-UE1 including add.UE1) of the sixth data packet from the BAP header of the sixth data packet. When determining that a destination address (add. UE 1) included in the target route indication information is different from the address (add.UE4) of the UE 4, the UE 4 determines, in the at least one piece of stored route information, target route information (for example, the first item in Table 14) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). The UE 4 sends the sixth data packet to the UE 3. The UE 3 receives the sixth data packet from the UE 4.

S916: After receiving the sixth data packet, the UE 3 obtains the target route indication information (namely, the DL route indication information-UE1: add.UE1) of the sixth data packet from the BAP header of the sixth data packet. When determining that the destination address (add.UE1) included in the target route indication information is different from the address (add.UE3) of the UE 3, the UE 3 determines, in the at least one piece of stored route information, target route information (for example, the second item in Table 13) that includes the target route indication information; determines, in the target route information, a next-hop node address (namely, add.UE2) corresponding to the target route indication information; and determines that a transmission object is a next-hop node indicated by the next-hop node address (namely, the UE 2 indicated by add.UE2). The UE 3 sends the sixth data packet to the UE 2, and the UE 2 receives the sixth data packet from the UE 3.

S917: After receiving the sixth data packet, the UE 2 may obtain the target route indication information (namely, the DL route indication information-UE1: add.UE1) of the sixth data packet from the BAP header of the sixth data packet. When determining that the destination address (add.UE1) included in the target route indication information is different from the address (add.UE2) of the UE 2, the UE determines, in the at least one piece of stored route information, target route information (for example, the second item in Table 12) that includes the target route indication information; determines, in the target route information, a next-hop node address (namely, add.UE1) corresponding to the target route indication information; and determines that a transmission object is a next-hop node indicated by the next-hop node address (namely, the UE 1 indicated by add.UE1). The UE 2 sends the sixth data packet to the UE 1, and the UE 1 receives the sixth data packet from the UE 2.

S918: After receiving the sixth data packet, the UE 1 may obtain the target route indication information (namely, the DL route indication information-UE1: add.UE1) of the sixth data packet from the BAP header of the sixth data packet. When determining that the destination address (add.UE1) included in the target route indication information is the same as the address (add.UE1) of the UE, the UE decapsulates the sixth data packet to obtain the fifth data packet having no BAP header. Finally, the UE 1 may perform subsequent processing based on the data carried in the fifth data packet.

This embodiment of this application provides a routing method. In the method, an address of UE may be used as route indication information to guide routing transmission of a data packet, so as to implement routing between an AN device and remote UE in a multi-hop communication scenario.

It should be noted that, based on the routing method provided in this embodiment of this application, routing transmission in a single-hop communication scenario may also be implemented. For a specific process, refer to the foregoing procedure in the multi-hop communication scenario. Details are not described herein again.

With reference to the routing process in Embodiment 4, this embodiment provides a routing mechanism 4. The mechanism includes:
After generating a data packet 1, UE adds a BAP header to the data packet 1, to generate a data packet 2. The BAP header of the data packet 2 includes target route indication information, and the target route indication information is uplink dedicated route indication information (indicating an address of target relay UE) of the UE. Then, the UE transmits the data packet 2 to relay UE connected to the UE.

After receiving a data packet 3, any UE first determines whether a destination address included in target route indication information in a BAP header of the data packet 3 is the same as an address of the UE.

If determining that the two are the same, the UE determines that the data packet 3 is a data packet of the UE, decapsulates the data packet 3 to obtain a data packet 4 having no BAP header, and then performs subsequent processing based on data carried in the data packet 4.

If determining that the two are different, the UE searches at least one piece of locally stored route information for target route information that includes the target route indication information; determines, in the target route information, a next-hop node address corresponding to the target route indication information; determines a next-hop node indicated by the next-hop node address; and sends the data packet 3 to the determined next-hop node.

It should be further noted that in this embodiment, because head relay UE does not have uplink route information, a policy executed by the head relay UE is similar to the policy in the mechanism 1, to be specific, the head relay UE may determine a subsequent action with reference to an interface. Specifically, after receiving the data packet 2, when determining that the destination address included in the target route indication information in the BAP header of the data packet 2 is the same as an address of the head relay UE, the head relay UE determines an interface used for receiving the data packet 2. If the interface is a Uu interface, the head relay UE further determines that the data packet 2 is a data packet of the head relay UE. If the interface is a PC5 interface, the head relay UE determines that the AN device is a transmission object.

It can be learned with reference to the descriptions in the foregoing Embodiment 4 that, in the multi-hop communication scenario shown in the foregoing Embodiment 4 (the link 1 is still used as an example), a finally formed entire protocol stack may be shown in FIG. 11, where a data packet transmitted by each device on the link 1 carries a BAP header.

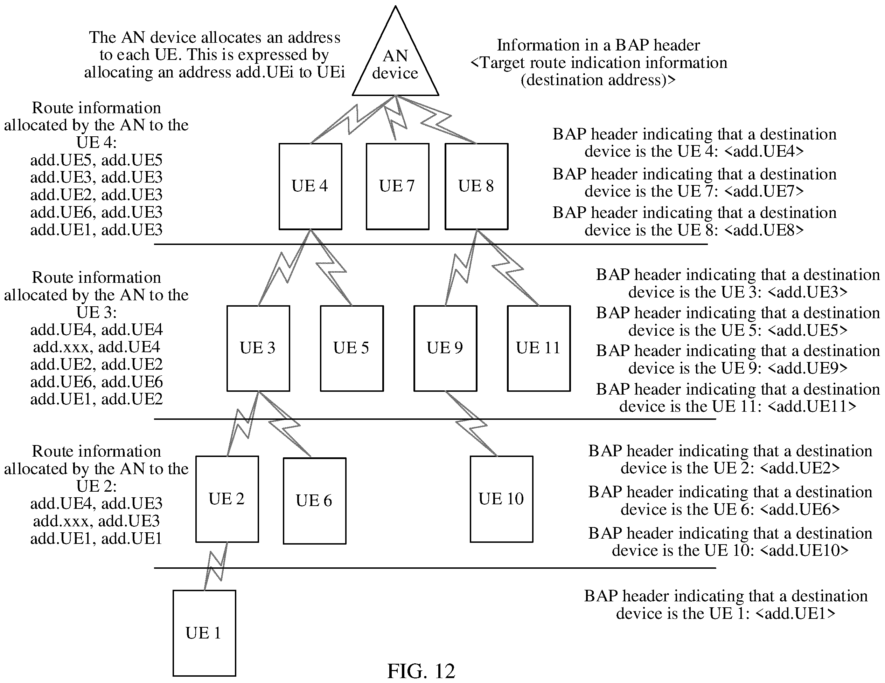

Based on the routing method provided in Embodiment 4, in the communication system shown in FIG. 1, for content in a BAP header of a data packet when the AN device sends the data packet by using each UE as a destination device, refer to FIG. 12.

### Embodiment 5

In a method provided in this embodiment, an address of UE or an address of an AN device is used as route indication information to guide routing transmission of a data packet. The method provided in this embodiment of this application may also be applied to the flowchart of the routing method shown in FIG. 9A and FIG. 9B. The following continues to use the link 1 as an example to describe in detail the method provided in this embodiment of this application with reference to FIG. 9A and FIG. 9B. Same as Embodiment 4, in this embodiment of this application, a BAP header of a data packet includes target route indication information, and does not need to include a target device local identifier.

S900: The AN device configures an address and at least one piece of route information for each UE in the communication system.

This step is similar to that in Embodiment 4, and differences lie in that:
1. In this embodiment of this application, an address (namely, add. AN) is also configured for the AN device. The AN device may send the address of the AN device to head relay UE on each link, so that the head relay UE may subsequently determine the AN device indicated by the address of the AN device, to determine a transmission object, and transmit a data packet to the AN device.
   add.AN may be a default AN address, or may be allocated by the AN device to the AN device itself, or may be configured by a user. This is not limited in this application.
2. Default route indication information add.xxx in this embodiment of this application may be the address add.AN of the AN device, or may be another default address indicating the AN device. This is not limited in this application. In the following embodiments, that add.xxx is different from add.AN is described.
3. Because the AN device has the address, route information configured by the AN device for each UE is also different from the route information in Embodiment 4.

Because the AN device has the address, for uplink transmission, a next-hop node of head relay UE on each link is the AN device. Therefore, the AN device can configure uplink route information for each UE, and the uplink route information is different from that in Embodiment 4. (It should be noted that in this embodiment, downlink route information configured by the AN device for each relay UE is the same as that in Embodiment 4.)

To compare with the route information of the UE 2 and the UE 3 in Embodiment 4, this embodiment continues to use the link 1 as an example. Uplink route information that includes the default route indication information and that is configured by the AN device for the UE 2, the UE 3, and the UE 4 is shown in Table 15 to Table 17.

**Table 15: Route information of the UE 2**

| Route information | |
|---|---|
| Route indication information | Next-hop node address |
| add.xxx | add.UE3 |

**Table 16: Route information of the UE 3**

| Route information | |
|---|---|
| Route indication information | Next-hop node address |
| add.xxx | add.UE4 |

**Table 17: Route information of the UE 4**

| Route information | |
|---|---|
| Route indication information | Next-hop node address |
| add.xxx | add.AN |

S901 to S904 are the same as S901 to S904 in Embodiment 4, and details are not described herein again.

S905: After receiving the second data packet, the UE 4 may obtain the target route indication information (namely, the default route indication information add.xxx) of the second data packet from the BAP header of the second data packet. When determining that the destination address (add.xxx) included in the target route indication information is different from the address (add.UE4) of the UE 4, the UE 4 determines, in the at least one piece of stored route information, target route information (for example, the route information in Table 17) that includes the target route indication information; determines, in the target route information, a next-hop node address (namely, add.AN) corresponding to the target route indication information; and determines that a transmission object is a next-hop node indicated by the next-hop node address (namely, the AN device indicated by add.AN). The UE 4 sends the second data packet to the AN device. The AN device receives the second data packet from the UE 4.

S906 and S907 are the same as S906 and S907 in Embodiment 4, and details are not described herein again.

S908a: The AN device allocates an address (namely, add.UE1) to the UE 1, determines uplink dedicated route indication information (referred to as UL route indication information-UE1 for short below) and downlink dedicated route indication information (referred to as DL route indication information-UE1 for short below) of the UE 1, and sends/configures the UL route indication information-UE1 and add.UE1 to/for the UE 1, so that the UE 1 can implement uplink transmission of the UE 1 by using the UL route indication information-UE1.

Optionally, when the AN device may configure the UL route indication information-UE1 and add. UE I for the UE 1, the AN device may send the foregoing information to the UE 2, and the UE 2 sends the information to the UE 1 by using an SL RRC message.

The UL route indication information-UE1 includes an address of a destination device in an uplink transmission direction. In this embodiment of this application, the destination device is the AN device. Therefore, the UL route indication information-UE1 includes the address add. AN of the AN device.

The DL route indication information-UE1 includes an address (namely, add.UE1) of a destination device in a downlink transmission direction.

In an implementation, there may be one piece of UL route indication information-UE1, and there may also be one piece of DL route indication information-UE1.

In another implementation, the AN device may determine, at a granularity of a bearer, the uplink dedicated route indication information (including a plurality of pieces of UL route indication information-UE1) and/or the downlink dedicated route indication information (including a plurality of pieces of DL route indication information-UE1) of the UE 1. Different UL route indication information-UE1/DL route indication information-UE1 corresponds to different bearers.

S908b: The AN device configures new route information for each relay UE on the link based on the UL route indication information-UE1 and the DL route indication information-UE2 of the UE 1, so that each relay UE can implement uplink transmission and downlink transmission of the UE 1 based on the route information.

New route information allocated by the AN device to the UE 2, the UE 3, and the UE 4 is separately shown in Table 18 to Table 20.

**Table 18: Route information of the UE 2**

| Item | Route information | |
|---|---|---|
| | Route indication information | Next-hop node address |
| 1 | add.AN | add.UE3 |
| 2 | add.UE1 | add.UE1 |

**Table 19: Route information of the UE 3**

| Item | Route information | |
|---|---|---|
| | Route indication information | Next-hop node address |
| 1 | add.AN | add.UE4 |
| 2 | add.UE1 | add.UE2 |

**Table 20: Route information of the UE 4**

| Item | Route information | |
|---|---|---|
| | Route indication information | Next-hop node address |
| 1 | add.AN | add.AN |
| 2 | add.UE1 | add.UE3 |

After S908b, each device on the link 1 may implement uplink transmission and downlink transmission of the UE 1 by using the UL route indication information-UE1 and the DL route indication information-UE1. S909 to S913 correspond to an uplink transmission process of the UE 1, and S914 to S918 correspond to a downlink transmission process of the UE 1.

It should be noted that, because the DL route indication information-UE1 configured by the AN device for the UE 1 is the same as that in Embodiment 4, each device on the link 1 may implement the downlink transmission process based on the DL route indication information-UE1 by using a same process as that in Embodiment 4. Based on this, the downlink transmission process in S214 to S217 is not described again in this embodiment of this application. For a specific process, refer to the descriptions in Embodiment 1.

Because the UL route indication information-UE 1 configured by the AN device for the UE 1 is different from that in Embodiment 4, the following describes in detail the uplink transmission process S909 to S913 implemented by each device on the link 1 based on the UL route indication information-UE1.

S909: The UE 1 generates a third data packet, where the third data packet has no BAP header. Optionally, the third data packet may carry user plane data or control plane data of the UE 1. This is not limited in this application. The UE 1 uses the UL route indication information-UE1 as target route indication information of the third data packet, and adds a BAP header to the third data packet, to generate a fourth data packet, where the BAP header of the fourth data packet includes the target route indication information (the UL route indication information-UE1 including add. AN). The UE 1 sends a fourth data packet to the UE 2. The UE 2 receives the fourth data packet from the UE 1.

In this embodiment, the UE 1 may also determine that a transmission object is the UE 2 in two implementations. For a specific process, refer to the corresponding descriptions in S909 in Embodiment 4, and details are not described herein again.

S910: After receiving the fourth data packet, the UE 2 obtains the target route indication information (namely, the UL route indication information-UE1 including add. AN) of the fourth data packet from the BAP header of the fourth data packet. When determining that a destination address (add. AN) included in the target route indication information is different from the address (add.UE2) of the UE 2, the UE 2 determines, in the at least one piece of stored route information, target route information (for example, the first piece of route indication information in Table 18) that includes the target route indication information; determines, in the target route information, a next-hop node address (namely, add.UE3) corresponding to the target route indication information; and determines that a transmission object is a next-hop node indicated by the next-hop node address (namely, the UE 3 indicated by add.UE3). The UE 2 sends the fourth data packet to the UE 3. The UE 3 receives the fourth data packet from the UE 2.

S911: After receiving the fourth data packet, the UE 3 obtains the target route indication information (namely, the UL route indication information-UE1 including add. AN) of the fourth data packet from the BAP header of the fourth data packet. When determining that a destination address (add. AN) included in the target route indication information is different from the address (add.UE3) of the UE 3, the UE 3 determines, in the at least one piece of stored route information, target route information (for example, the first piece of route indication information in Table 19) that includes the target route indication information; determines, in the target route information, a next-hop node address (namely, add.UE4) corresponding to the target route indication information; and determines that a transmission object is a next-hop node indicated by the next-hop node address (namely, the UE 4 indicated by add.UE4). The UE 3 sends the fourth data packet to the UE 4. The UE 4 receives the fourth data packet from the UE 3.

S912: After receiving the fourth data packet, the UE 4 obtains the target route indication information (namely, the UL route indication information-UE1 including add. AN) of the fourth data packet from the BAP header of the fourth data packet. When determining that a destination address (add.AN) included in the target route indication information is different from the address (add.UE4) of the UE 4, the UE 4 determines, in the at least one piece of stored route information, target route information (for example, the first piece of route indication information in Table 20) that includes the target route indication information; determines, in the target route information, a next-hop node address (namely, add. AN) corresponding to the target route indication information; and determines that a transmission object is a next-hop node indicated by the next-hop node address (namely, the AN device indicated by add.AN). The UE 4 sends the fourth data packet to the AN device. The AN device receives the fourth data packet from the UE 4.

S913 is the same as S213. Details are not described herein again.

This embodiment of this application provides a routing method. In the method, an address of UE or an address of an AN device may be used as route indication information to guide routing transmission of a data packet, so as to implement routing between an AN device and remote UE in a multi-hop communication scenario.

Similarly, based on the routing method provided in this embodiment, routing transmission in a single-hop communication scenario may also be implemented. For a specific process, refer to the descriptions in the foregoing embodiment. Details are not described herein again.

With reference to the routing process in Embodiment 5, this embodiment of this application provides a routing mechanism 5. The mechanism 5 includes:
After generating a data packet 1, UE adds a BAP header to the data packet 1, to generate a data packet 2. The BAP header of the data packet 2 includes target route indication information, and the target route indication information is uplink dedicated route indication information (indicating an address of target relay UE) of the UE. Then, the UE transmits the data packet 2 to relay UE connected to the UE.

After receiving a data packet 3, any UE first determines whether a destination address included in target route indication information in a BAP header of the data packet 3 is the same as an address of the UE.

If determining that the two are the same, the UE determines that the data packet 3 is a data packet of the UE, decapsulates the data packet 3 to obtain a data packet 4 having no BAP header, and then performs subsequent processing based on data carried in the data packet 4.

If determining that the two are different, the UE searches at least one piece of locally stored route information for target route information that includes the target route indication information; determines, in the target route information, a next-hop node address corresponding to the target route indication information; determines a next-hop node indicated by the next-hop node address; and sends the data packet 3 to the determined next-hop node.

It can be learned with reference to the descriptions in the foregoing Embodiment 5 that, in the multi-hop communication scenario shown in the foregoing Embodiment 5 (the link 1 is still used as an example), a finally formed entire protocol stack may be shown in FIG. 11.

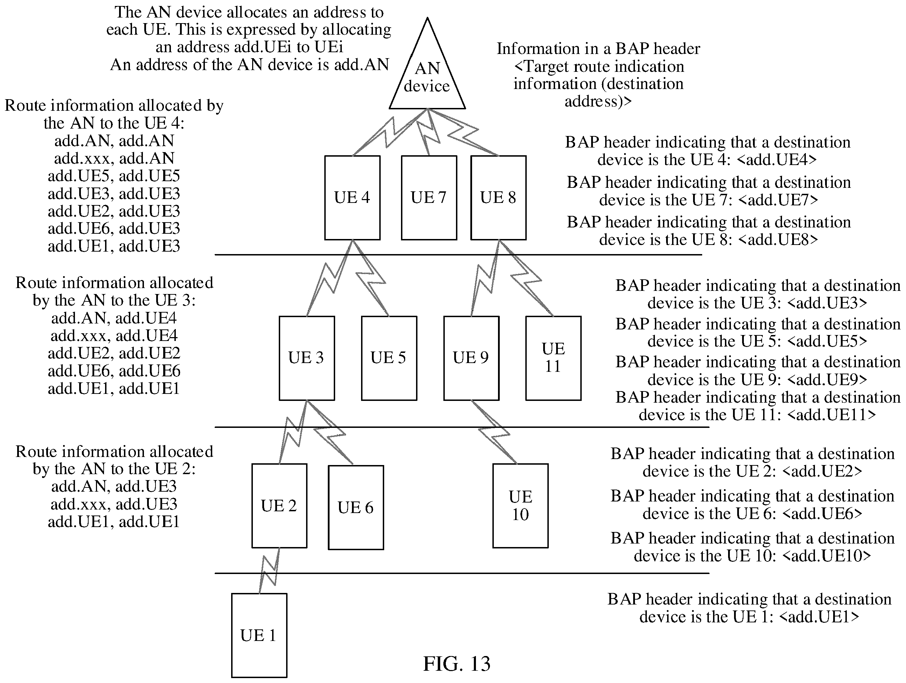

Based on the routing method provided in Embodiment 5, in the communication system shown in FIG. 1, for content in a BAP header of a data packet when the AN device sends the data packet by using each UE as a destination device, refer to FIG. 13.

### Embodiment 6

Based on the foregoing Embodiment 4 and Embodiment 5, this embodiment of this application further provides still another routing method. In the method, both an address and a path identifier (path ID) of a device are used as route indication information to guide routing transmission of a data packet.

Similar to the descriptions of the path ID in Embodiment 3, in this embodiment of this application, a path ID allocated by the AN device to each link may also for distinguishing transmission directions, or may not for distinguishing transmission directions.

The following uses an example in which the AN device allocates one path ID to each communication link without distinguishing transmission directions.

For example, with reference to the routing method provided in Embodiment 4, the AN device separately allocates corresponding path IDs to the following communication links:
the UE 4-the AN device: path ID-1;
the UE 7-the AN device: path ID-2;
the UE 8-the AN device: path ID-3;
the UE 3-the UE 4-the AN device: path ID-4;
the UE 5-the UE 4-the AN device: path ID-5;
the UE 9-the UE 8-the AN device: path ID-6;
the UE 11-the UE 8-the AN device: path ID-7;
the UE 2-the UE 3-the UE 4-the AN device: path ID-8;
the UE 6-the UE 3-the UE 4-the AN device: path ID-9;
the UE 10-the UE 9-the UE 8-the AN device: path ID-10; and
the UE 1-the UE 2-the UE 3-the UE 4-the AN device: path ID-11.

In addition, the AN device allocates a path ID-yyy to default route indication information.

Based on this example, the route information allocated by the AN device to the UE on the link 1 in S908b in Embodiment 1 is shown in Table 21 to Table 23.

**Table 21: Route information of the UE 2**

| Item | Route information | |
|---|---|---|
| | Route indication information | Next-hop node address |
| 1 | path ID-11, add.UE4 | add.UE3 |
| 2 | path ID-11, add.UE1 | add.UE1 |

**Table 22: Route information of the UE 3**

| Item | Route information | |
|---|---|---|
| | Route indication information | Next-hop node address |
| 1 | path ID-11, add.UE4 | add.UE4 |
| 2 | path ID-11, add.UE1 | add.UE2 |

**Table 23: Route information of the UE 4**

| Item | Route information | |
|---|---|---|
| | Route indication information | Next-hop node address |
| 1 | path ID-11, add.UE1 | add.UE3 |

It should be noted that after each remote UE establishes a Uu communication connection to the AN device, the AN device allocates uplink dedicated route indication information and downlink dedicated route indication information to the remote UE. The route indication information includes a corresponding address, and further needs to include a path ID allocated by the AN device to a communication link on which the remote UE is located.

For a routing mechanism 6 provided in this embodiment of this application, refer to the mechanism 4 provided in Embodiment 4 or the mechanism 5 provided in Embodiment 5. For details, refer to the foregoing detailed descriptions of the mechanism 4 or the mechanism 5. Details are not described herein again. It should be noted that, in the mechanism 5, a path identifier and a device address in route indication information included in target route information found by UE are respectively the same as a target path identifier and a destination address in the target route indication information.

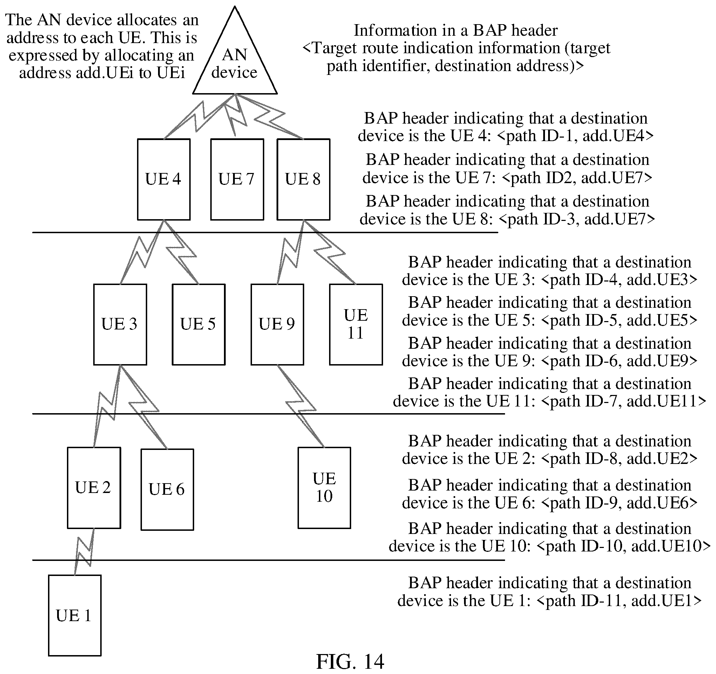

Based on the routing method provided in Embodiment 6, in the communication system shown in FIG. 1, for content in a BAP header of a data packet when the AN device sends the data packet by using each UE as a destination device, refer to FIG. 14.

### Embodiment 7

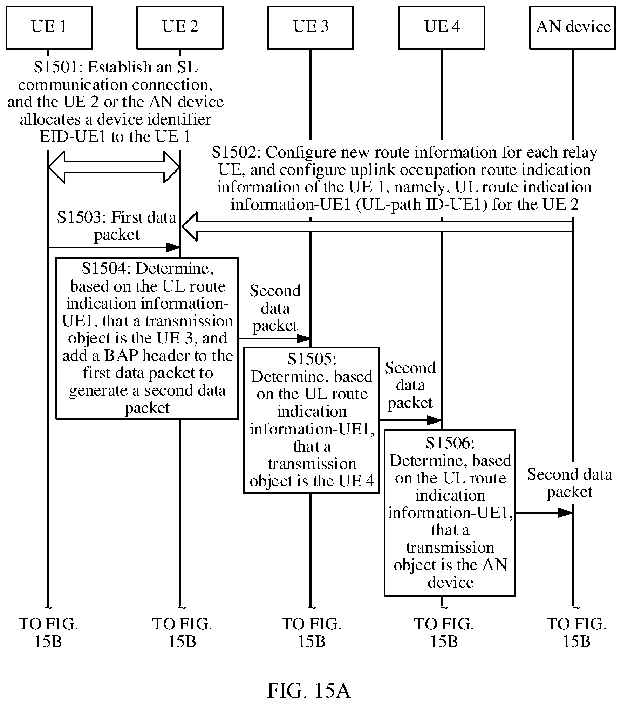

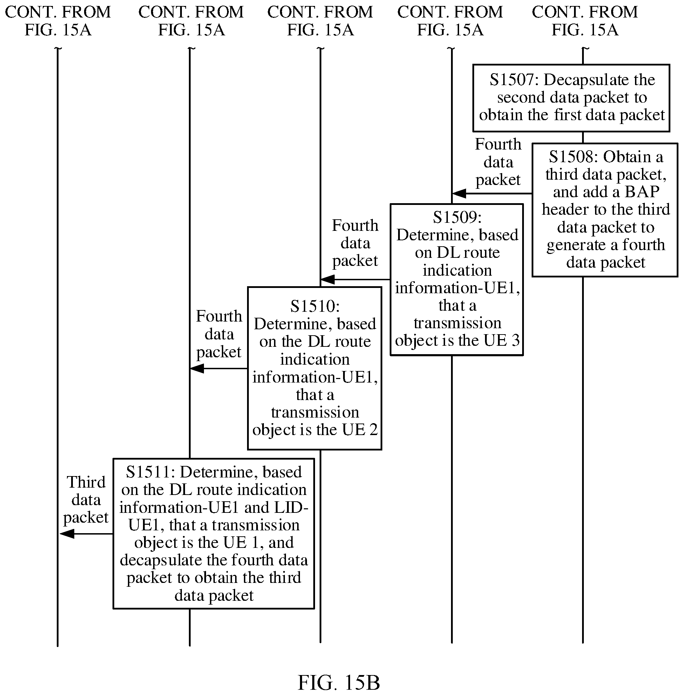

In this embodiment, a path identifier is used as route indication information to guide routing transmission of a data packet. A method provided in this embodiment is described in detail below with reference to a flowchart of a routing method shown in FIG. 15A and FIG. 15B.

S1501: The UE 1 establishes an SL communication connection to the UE 2, and establishes a Uu communication connection to the AN device through the UE 2 and another relay UE. The UE 1 may allocate a device identifier (which may be referred to as EID-UE1 for short below) to the UE 1 when or after the UE 1 establishes the SL communication connection to the UE 2; or the UE 2 may allocate a device identifier EID-UE1 to the UE 1 when or after the UE 2 establishes the SL communication connection to the UE 1; or the AN device may allocate a device identifier EID-UE1 to the UE 1 when or after the UE 1 establishes the Uu communication connection to the UE 1.

The device identifier in this embodiment of this application may identify, within a range of relay UE, another UE that accesses the relay UE. Optionally, the device identifier may be a local identifier (Local ID, LID for short) or a layer 2 identifier (L2 ID). This is not limited in this application.

S 1502: The UE 2 or the UE 1 notifies the AN device of the device identifier EID-UE1 of the UE 1. The AN device determines uplink dedicated route indication information (UL route indication information-UE1) and downlink dedicated route indication information (DL route indication information-UE1) of the UE 1, and configures new route information for each relay UE on the link 1 based on the UL route indication information-UE1 and the DL route indication information-UE1, so that each relay UE can implement uplink transmission and downlink transmission of the UE 1 based on the route information.

Both the UL route indication information-UE1 and the DL route indication information-UE1 include a path identifier (path ID-UE1) allocated by the AN device to the UE 1. To distinguish between the UL route indication information-UE1 and the DL route indication information-UE1, and ensure that relay UE can search for correct route information to implement data packet transmission, this embodiment of this application may be implemented in the following two implementations:
In a first implementation, the path identifier (path ID-UE1) packet of the UE 1 includes: a path identifier (UL path ID-UE1 for short) of the UE 1 in an uplink transmission direction and a path identifier (DL path ID-UE1 for short) of the UE 1 in a downlink transmission direction.
In a second implementation, there is one route identifier of the UE 1 (path ID-UE1), but dedicated route indication information in different directions further includes corresponding transmission direction indications. In other words, the UL route indication information-UE1 further includes a UL indication, and the DL route indication information-UE1 further includes a DL indication.

To implement routing transmission of the UE 1, the AN device further needs to provide at least one piece of route information to each relay UE. Any piece of route information includes one piece of route indication information and a next-hop node device identifier corresponding to the route indication information.

It should be noted that the at least one piece of route information provided by the AN device to each relay UE includes downlink route information and uplink route information. The downlink route information and the uplink route information may not be distinguished in form. However, the downlink route information includes the DL route indication information-UE1, and the uplink route information includes the LTL route indication information-UE1.

The following uses only the first implementation as an example for description.

For example, new route information allocated by the AN device to the UE 2, the UE 3, and the UE 4 is separately shown in Table 24 to Table 26.

**Table 24: Route information of the UE 2**

| Item | Route information | |
|---|---|---|
| | Route indication information | Next-hop node device identifier |
| 1 | UL path ID-UE1 | EID-UE3 |
| 2 | DL path ID-UE1 | default EID-UE (EID-111) |

The second piece of route information in Table 24 is optional. In an implementation, the AN device allocates the two pieces of route information in Table 24 to the UE 2. In another implementation, the AN device allocates only the first piece of route information in Table 24 to the UE 2. default EID-UE may be a default device identifier of the UE. When the UE 2 determines that a next-hop node device identifier corresponding to target route indication information of a data packet is default EID-UE, it indicates that no next-hop node exists, and the data packet needs to be forwarded to remote UE of the UE 2, or the data packet is a data packet of the UE 2. A device identifier of the AN device may be a second default device identifier, for example, EID-111.

**Table 25: Route information of the UE 3**

| Item | Route information | |
|---|---|---|
| | Route indication information | Next-hop node device identifier |
| 1 | UL path ID-UE1 | EID-UE4 |
| 2 | DL path ID-UE1 | EID-UE2 |

**Table 26: Route information of the UE 4**

| Item | Route information | |
|---|---|---|
| | Route indication information | Next-hop node device identifier |
| 1 | UL path ID-UE1 | EID-AN (EID-000) |
| 2 | DL path ID-UE1 | EID-UE3 |

Currently, when two UEs establish an SL communication connection, each UE allocates an L2 ID to the SL communication connection. For example, after the UE 1 establishes the SL communication connection to the UE 2, the UE 1 allocates L2 ID-UE 1 to the communication connection, the UE 2 allocates L2 ID-UE 2 to the communication connection, and the UE 1 and the UE 2 notify each other of their respective L2 IDs. In this way, when sending a data packet to the UE 2, the UE 1 adds L2 ID-UE1 as a source device identifier to the data packet, and adds L2 ID-UE2 as a destination device identifier to the data packet. Similarly, when sending a data packet to the UE 2, the UE 2 adds L2 ID-UE2 as a source device identifier to the data packet, and adds L2 ID-UE1 as a destination device identifier to the data packet.

In a scenario in which relay UE allocates a device identifier (for example, a local identifier) to other UEs accessing the relay UE, in a downlink transmission direction, the other UEs are next-hop nodes of the relay UE. Therefore, the relay UE may identify a next-hop node indicated by a next-hop node device identifier (a local identifier of the next-hop node), to implement downlink transmission of a data packet. However, in an uplink transmission direction, generally, the relay UE cannot directly identify the next-hop node indicated by the next-hop node device identifier. Therefore, in this application, the problem may be resolved by using an SL communication connection identifier (namely, an L2 ID) in the following implementations:

### First implementation:

The AN device sends the following two pieces of information to each relay UE: a next-hop node device identifier in an uplink transmission direction of the relay UE, and an L2 ID of a next-hop node (to be specific, allocated by the next-hop node to an SL communication connection between the relay UE and the next-hop node).

For example, on the link 1, the AN device sends a device identifier and an L2 ID (EID-UE3 (namely, LID-UE3), L2 ID-UE3) of the UE 3 to the UE 2, and the AN device sends a device identifier and an L2 ID (EID-UE4 (LID-UE4), L2 ID-UE4) of the UE 4 to the UE 3. EID-UE3 may be allocated by the UE 4 to the UE 3, and EID-UE4 may be allocated by the AN device to the UE 4.

In addition, the AN device sends a device identifier (namely, EID-AN) of the AN device to head relay UE on each communication links, so that the head relay UEs can determine that the device identifier of the AN device indicates the AN device. The device identifier of the AN device may be a first default device identifier, for example, EID-000.

### Second implementation:

After any UE accesses the AN device through another UE that establishes an SL communication connection to the UE, the UE may allocate a device identifier (for example, a local identifier) to the another UE that establishes the SL communication connection to the UE, and report, to the AN device, the device identifier of the another UE and an L2 ID of the another UE (allocated by the another UE for the SL communication connection between the UE and the another UE). In this way, the AN device can generate the foregoing route information based on the received device identifiers.

For example, after the UE 3 establishes an SL communication connection to the UE 4, the UE 4 allocates a device identifier (EID-UE3, namely, LID-UE3) to the UE 3, and the UE 3 also allocates a dedicated device identifier (EID-UE4-UL, which is different from a local identifier LID-UE4 of the UE 4) to the UE 4, and sends, to the AN device, the dedicated device identifier of the UE 4 and L2 ID-UE4 that is allocated by the UE 4 for the SL communication connection. In this case, the AN device allocates uplink route information to the UE 3 based on EID-UE4-UL, to be specific, EID-UE4 included in the first piece of route information in Table 25 is actually EID-UE4-UL in this example. The AN device allocates downlink route information to the UE 4 based on EID-UE3, to be specific, EID-UE3 included in the second piece of route information in Table 26 is EID-UE3 (LID-UE3) allocated by the UE 4 to the UE 3 in this example.

For another example, after the UE 2 establishes an SL communication connection to the UE 3, the UE 3 allocates a device identifier (EID-UE2, namely, LID-UE2) to the UE 2, and the UE 2 also allocates a dedicated device identifier (EID-UE3-UL, which is different from a local identifier LID-UE3 of the UE 3) to the UE 3, and sends, to the AN device, the dedicated device identifier of the UE 4 and L2 ID-UE4 allocated by the UE 4 for the SL communication connection. In this case, the AN device allocates uplink route information to the UE 2 based on EID-UE3-UL, to be specific, EID-UE3 included in the first piece of route information in Table 24 is actually EID-UE3-UL in this example. The AN device allocates downlink route information to the UE 3 based on EID-UE2, to be specific, EID-UE3 included in the second piece of route information in Table 25 is EID-UE3 (LID-UE3) allocated by the UE 3 to the UE 3 in this example.

In addition, head relay UE on each communication link in the communication system also allocates a device identifier (namely, EID-AN) to the connected AN device, so that the head relay UEs can determine that the device identifier of the AN device indicates the AN device. Any head relay UE may send, to the AN device, a device identifier allocated by the head relay UE to the AN device, so that the AN device allocates uplink route information to the head relay UE based on the device identifier of the AN device. For example, EID-AN included in the route information in Table 26 is allocated by the UE 4 to the AN device. Alternatively, in the communication system, the device identifier of the AN device may be considered as the first default device identifier by default, for example, EID-000. In this way, the head relay UE in each communication link may not need to allocate the device identifier to the AN device. The following uses only an example in which the device identifier of the AN device is the first default device identifier for description.

After S1502, each device on the link 1 may implement uplink transmission and downlink transmission of the UE 1 by using the UL route indication information-UE1 and the DL route indication information-UE1. S1503 to S 1507 correspond to an uplink transmission process of the UE 1, and S 1508 to S1511 correspond to a downlink transmission process of the UE 1.

The following first describes the uplink transmission process of the UE 1.

S1503: The UE 1 generates a first data packet, where the first data packet has no BAP header. In addition, the first data packet may carry user plane data or control plane data of the UE 1. This is not implicitly limited in this application. The UE 1 sends the first data packet to the UE 2, and the UE 2 receives the first data packet from the UE 1.

S1504: After receiving the first data packet, the UE 2 uses the uplink dedicated route indication information of the UE 1 (the UL route indication information-UE1, UL path ID-UE1) as target route indication information of the first data packet. When determining, in the at least one piece of stored route information, target route information (for example, the first item in Table 24) that includes the target route indication information, the UE 2 determines, in the target route information, a next-hop node device identifier (namely, EID-UE3) corresponding to the target route indication information, and determines that a transmission object is a next-hop node indicated by the next-hop node device identifier (namely, the UE 3 indicated by EID-UE3). As tail relay UE of the UE 1, the UE 2 determines that a target device identifier of the first data packet is a device identifier of a source device of the first data packet (namely, the device identifier of the UE 1: EID-UE1), and adds a BAP header to the first data packet to generate a second data packet, where the BAP header of the second data packet includes the target route indication information UL path ID-UE1 and the target device identifier EID-UE1. The UE 2 sends the second data packet to the UE 3. The UE 3 receives the second data packet from the UE 2.

S1505: After receiving the second data packet, the UE 3 obtains the target route indication information (namely, the UL route indication information-UE1, UL path ID-UE1) of the second data packet from the BAP header of the second data packet. When determining, in the at least one piece of stored route information, target route information (for example, the first item in Table 25) that includes the target route indication information, the UE 3 determines, in the target route information, a next-hop node device identifier (namely, EID-UE4) corresponding to the target route indication information, and determines that a transmission object is a next-hop node indicated by the next-hop node device identifier (namely, the UE 4 indicated by EID-UE4). The UE 3 sends the second data packet to the UE 4. The UE 4 receives the second data packet from the UE 3.

S1506: After receiving the second data packet, the UE 4 obtains the target route indication information (namely, the UL route indication information-UE1, UL path ID-UE1) of the second data packet from the BAP header of the second data packet. When determining, in the at least one piece of stored route information, target route information (for example, the first item in Table 26) that includes the target route indication information, the UE 4 determines, in the target route information, a next-hop node device identifier (namely, EID-AN) corresponding to the target route indication information, and determines that a transmission object is a next-hop node indicated by the next-hop node device identifier (namely, the AN device indicated by EID-AN). The UE 4 sends the second data packet to the AN device. The AN device receives the second data packet from the UE 4.

S1507: After receiving the second data packet, the AN device decapsulates the second data packet to obtain the first data packet having no BAP header. The AN device may perform subsequent processing based on data (for example, the user plane data or the control plane data) carried in the first data packet, for example, send the user plane data to a core network device, or perform a corresponding operation based on the control plane data.

The following describes the downlink transmission process of the UE 1.

S1508: The AN device obtains a third data packet, where the third data packet has no BAP header. In addition, the third data packet may carry user plane data or control plane data (for example, signaling) of the UE 1. This is not limited in this application. Optionally, the third data packet may be generated by the AN device, or may be received from a core network device. The AN device uses the stored downlink dedicated route indication information of the UE 1 (DL route indication information-UE1, DL path ID-UE1) as target route indication information of the third data packet, and determines that a target device identifier of the third data packet is a device identifier (namely, EID-UE1, for example, a local identifier LID-UE1 allocated by the UE 2 to the UE 1) of a destination device (the UE 1) of the third data packet. The AN device adds a BAP header to the third data packet, to generate a fourth data packet, where the BAP header of the fourth data packet includes the target route indication information DL path ID-UE1 and the target device identifier EID-UE1. The AN device sends the fourth data packet to the UE 4. The UE 4 receives the fourth data packet from the AN device.

In this embodiment of this application, the AN device may determine, but is not limited to, that a transmission object is the UE 4 in the following implementations:
In an implementation, the AN device may determine, based on a topology relationship of the communication system, head relay UE, namely, the UE 4, on the communication link on which the UE 1 is located.

In another implementation, after allocating the downlink dedicated route indication information to the UE 1 (the DL route indication information-UE1) in S1502, the AN device may further determine head relay UE corresponding to the downlink dedicated route indication information of the UE 1 (namely, the UE 4 corresponding to the DL route indication information-UE 1). In this way, when determining that the target route indication information of the third data packet is the DL route indication information-UE1, the AN device may further determine that the transmission object is the UE 4 corresponding to the DL route indication information-UE1.

In still another implementation, the AN device may maintain at least one piece of route information (all of which are downlink route information). In this way, after the downlink dedicated route indication information is allocated to the UE 1 (DL route indication information-UE1) in S1502, one piece of route information may be generated as follows:

Route indication information: DL route indication information-UE 1; and next-hop node device identifier: EID.UE4.

In this way, when determining that the target route indication information of the third data packet is the DL route indication information-UE1, the AN device may further determine the next-hop node device identifier corresponding to the DL route indication information-UE1, and determine that the transmission object is a next-hop node indicated by the next-hop node device identifier (the UE 4 indicated by EID.UE4). The device identifier (EID-UE4) of the UE 4 may be allocated by the AN device to the UE 4.

S1509: After receiving the fourth data packet, the UE 4 obtains the target route indication information (namely, the DL route indication information-UE 1, DL path ID-UE1) of the fourth data packet from the BAP header of the fourth data packet. When determining, in the at least one piece of stored route information, target route information (for example, the second item in Table 26) that includes the target route indication information, the UE 4 determines, in the target route information, a next-hop node device identifier (namely, EID-UE3) corresponding to the target route indication information, and determines that a transmission object is a next-hop node indicated by the next-hop node device identifier (namely, the UE 3 indicated by EID-UE3). The UE 4 sends the fourth data packet to the UE 3. The UE 3 receives the fourth data packet from the UE 4.

S1510: After receiving the fourth data packet, the UE 3 obtains the target route indication information (namely, the DL route indication information-UE 1, DL path ID-UE1) of the fourth data packet from the BAP header of the fourth data packet. When determining, in the at least one piece of stored route information, target route information (for example, the second item in Table 25) that includes the target route indication information, the UE 3 determines, in the target route information, a next-hop node device identifier (namely, EID-UE2) corresponding to the target route indication information, and determines that a transmission object is a next-hop node indicated by the next-hop node device identifier (namely, the UE 2 indicated by EID-UE2). The UE 3 sends the fourth data packet to the UE 2. The UE 2 receives the fourth data packet from the UE 3.

S1511: After receiving the fourth data packet, the UE 2 obtains the target route indication information (namely, the DL route indication information-UE 1, DL path ID-UE1) of the fourth data packet from the BAP header of the fourth data packet. When the UE 2 stores route information (the second piece of route information in Table 24) including the target route indication information, when determining, in the at least one piece of stored route information, the target route information (for example, the second item in Table 24) that includes the target route indication information, the UE 2 determines, in the target route information, a next-hop node device identifier (namely, default EID-UE) corresponding to the target route indication information, and determines that a next-hop node indicated by the next-hop node device identifier is the UE 2, and the UE 2 obtains the target device identifier (EID-UE1) of the fourth data packet from the BAP header of the fourth data packet. Alternatively, when determining that route information including the target route indication information is not stored, the UE 2 obtains the target device identifier (EID-UE1) of the fourth data packet from the BAP header of the fourth data packet. The UE 2 determines that a transmission object is remote UE indicated by the target device identifier (namely, the UE 1 indicated by the EID-UE 1). The UE 2 decapsulates the fourth data packet, to obtain the third data packet having no BAP header. The UE 2 sends the third data packet to the UE 1. The UE 1 receives the third data packet from the UE 2.

Then, the UE 1 may perform subsequent processing based on the data carried in the first data packet.

This embodiment of this application provides a routing method. In the method, a device identifier of UE may be used as route indication information to guide routing transmission of a data packet, so as to implement routing between an AN device and remote UE in a multi-hop communication scenario.

Based on the routing method provided in this embodiment, routing transmission in a single-hop communication scenario may also be implemented. For a specific process, refer to the descriptions in the foregoing embodiment. Details are not described herein again.

With reference to the routing process in Embodiment 7, this embodiment of this application provides a routing mechanism 7. The mechanism 7 includes:

### Downlink direction:

When the AN device sends a data packet 1 to remote UE, the AN device needs to add a BAP header to the data packet, to generate a data packet 2. The BAP header of the data packet 2 includes target route indication information and a target device identifier. The target route indication information is downlink dedicated route indication information of the remote UE (including a path identifier allocated by the AN device to the remote UE), and the target device identifier is an identifier of the remote UE.

After receiving the data packet 2, any relay UE searches at least one piece of locally stored route information for target route information that includes the target route indication information. When a next-hop node device identifier corresponding to the target route indication information included in the target route information is a second default device identifier, the relay UE transmits the data packet 2 to the remote device indicated by the target device identifier in the data packet 2. Alternatively, when determining that the target route information does not exist in the locally stored at least one piece of route information, the relay UE transmits the data packet 2 to the remote device indicated by the target device identifier in the data packet 2. When the target route information is found in the locally stored at least one piece of route information, and the next-hop node device identifier corresponding to the target route information is not the second default device identifier, a next-hop node indicated by the next-hop node device identifier is determined, and the data packet 2 is sent to the next-hop node.

### Uplink direction:

A working mechanism is similar to that in the downlink direction.

A difference lies in that after receiving a data packet 1 that is sent by remote UE and that has no BAP header, relay UE determines target route indication information and a target device identifier of the data packet 1. The target route indication information is uplink dedicated route indication information of the remote UE (including a path identifier allocated by the AN device to the remote UE), and the target device identifier is a local identifier of the remote UE. The relay UE adds a BAP header to the data packet 1 to generate a data packet 2, where the BAP header includes the target route indication information and the target device identifier, and then determines a transmission object according to the foregoing working mechanism, and sends the data packet 2.

It can be learned with reference to the descriptions in the foregoing Embodiment 7 that, in the multi-hop communication scenario shown in the foregoing Embodiment 7 (the link 1 is still used as an example), a finally formed entire protocol stack may be shown in FIG. 5.

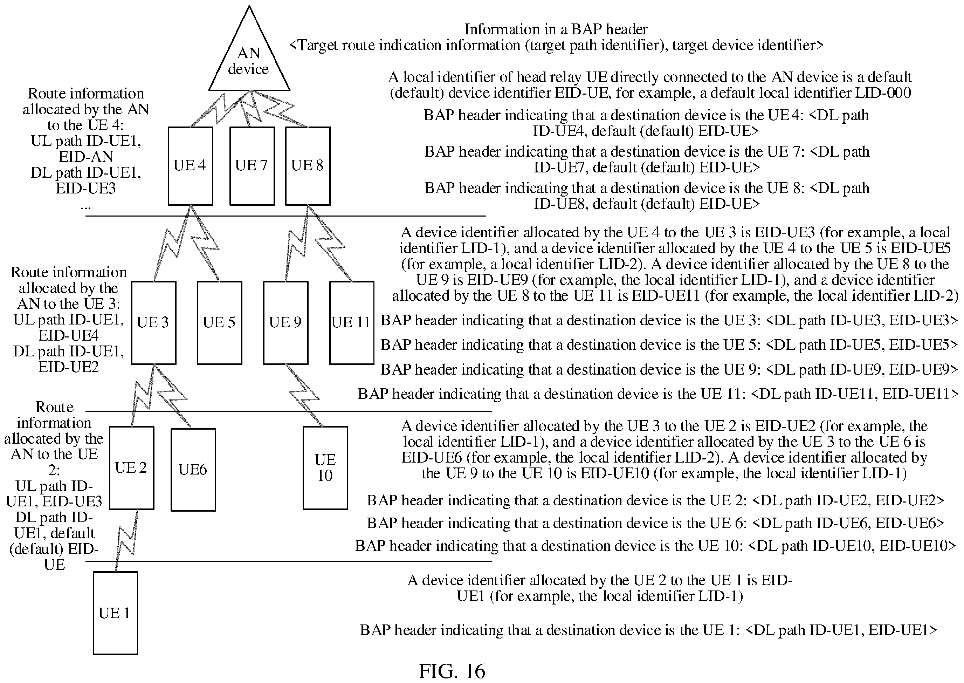

Based on the routing method provided in the foregoing Embodiment 7, in the communication system shown in FIG. 1, for content in a BAP header of a data packet when the AN device sends the data packet by using each UE as a destination device, refer to FIG. 16.

### Embodiment 8

In some embodiments, an adaptation layer is introduced into a protocol stack to carry information such as a bearer identifier (bearer ID, BID), to support bearer mapping. A function of a bearer connection is to implement IP connectivity, transfer a service data flow between UE and a network side, and implement more refined quality of service (Quality of Service, QoS) control. For example, bearer identifiers may be distinguished based on functions: a default bearer identifier (Default Bearer) and a dedicated bearer identifier (Dedicated Bearer); or may be distinguished based on sequence numbers: a Bearer 1, a Bearer 2....

In a multi-hop communication scenario, there is a BAP layer in a protocol stack between remote UE and relay EU, and a BAP header existing in a data packet needs to carry a BID, so that a plurality of data resource bearers (data resource bearers, DRBs) of the remote UE are transmitted over one SL-DRB between the remote UE and the relay UE, that is, N: 1 mapping between the DRB and the SL-DRB is implemented.

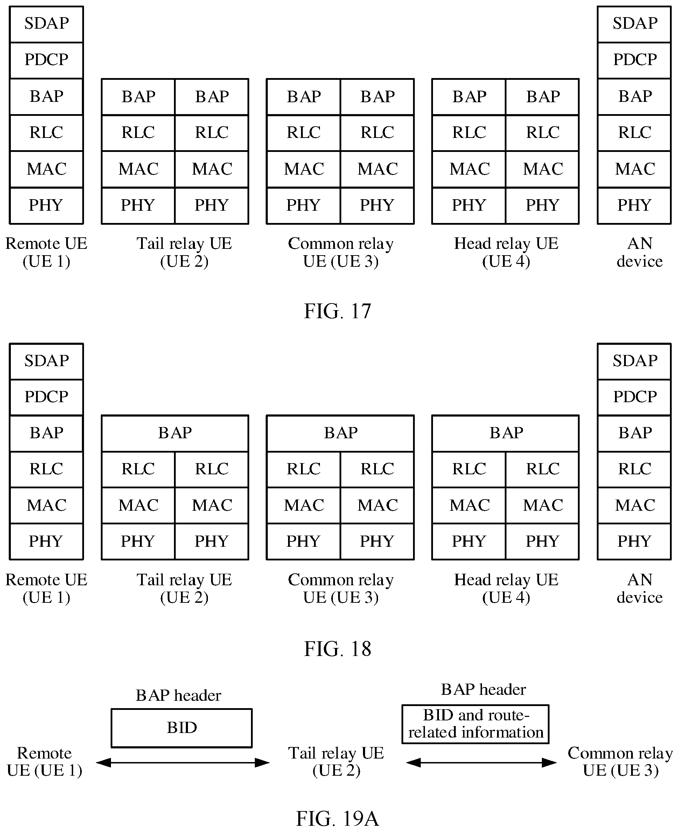

In these embodiments, a protocol stack in a multi-hop scenario is shown in FIG. 17 or FIG. 18. In FIG. 17 and FIG. 18, an example in which the adaptation layer is the BAP layer is used for description.

A difference between FIG. 17 and FIG. 18 lies in whether relay UE is used as two BAP entities or one BAP entity to implement relay UE between remote UE and an AN device.

When a BAP layer is introduced in a multi-hop communication scenario to support bearer mapping, and a protocol stack in the scenario is shown in FIG. 17, the routing method provided in the foregoing embodiment needs to be adjusted as follows:
The link 1 is still used as an example for description.

The following A1 to A3 are modifications to an embodiment in which a data packet transmitted by remote UE has no BAP header.

A1. In the method provided in the foregoing embodiment, when the UE 1 sends a data packet 1 having no BAP header to the UE 2, after receiving the data packet 1, the UE 2 adds a BAP header to the data packet 1, to generate a data packet 2.

In this embodiment, the UE 1 sends a data packet 1 with a BAP header to the UE 2, but the BAP header does not include target route indication information or a target device identifier, and includes only a bearer identifier. After receiving the data packet 1, the UE 2 first decapsulates the data packet 1 to obtain a data packet having no BAP header, and then adds a BAP header to the data packet to generate a data packet 2. The BAP header of the data packet 2 includes the target route indication information, the target device identifier, and the bearer identifier.

A2. In the method provided in the foregoing embodiment, the AN device sends a data packet 3 with a BAP header to the UE 4, where the BAP header of the data packet 3 includes target route indication information and a target device identifier.

In this embodiment, the AN device sends a data packet 3 with a BAP header to the UE 4. The BAP header of the data packet 3 includes target route indication information and a target device identifier, and further includes a bearer identifier.

A3. In the method provided in the foregoing embodiment, the UE 2 serving as the tail relay UE of the UE 1 receives a data packet 4, where a BAP header of the data packet 4 includes target route indication information and a target device identifier. The UE 2 decapsulates the data packet 4 to obtain a data packet 5 having no BAP header, and sends the data packet 5 to the UE 1.

In this embodiment, the UE 2 serving as the tail relay UE of the UE 1 receives a data packet 4, where a BAP header of the data packet 4 includes target route indication information and a target device identifier, and further includes a bearer identifier. The UE 2 decapsulates the data packet 4 to obtain a data packet having no BAP header, adds a BAP header to the data packet to generate a data packet 5, and sends the data packet 5 to the UE 1, where the BAP header of the data packet 5 includes only the bearer identifier.

The following B1 to B3 are modifications to an embodiment in which a data packet transmitted by remote UE has a BAP header.

B1. In the method provided in the foregoing embodiment, the UE 1 sends a data packet 1 with a BAP header to the UE 2, where the BAP header of the data packet 1 includes target route indication information and a target device identifier.

In this embodiment, the UE 1 sends a data packet 1 with a BAP header to the UE 2, where a BAP header of the data packet 1 includes target route indication information and a target device identifier, and further includes a bearer identifier.

B2. In the method provided in the foregoing embodiment, the AN device sends a data packet 2 with a BAP header to the UE 4, where the BAP header of the data packet 2 includes target route indication information and a target device identifier.

In this embodiment, the AN device sends a data packet 2 with a BAP header to the UE 4. The BAP header of the data packet 2 includes target route indication information and a target device identifier, and further includes a bearer identifier.

B3. In the method provided in the foregoing embodiment, the UE 2 sends a data packet 3 with a BAP header to the UE 1, where the BAP header of the data packet 3 includes target route indication information and a target device identifier.

In this embodiment, the UE 2 sends a data packet 3 with a BAP header to the UE 1. The BAP header of the data packet 3 includes target route indication information and a target device identifier, and further includes a bearer identifier. That is, the UE 2 does not process the received data packet 3, and directly forwards the data packet 3 to the UE 1.

When a BAP layer is introduced in a multi-hop communication scenario to support bearer mapping, and a protocol stack in the scenario is shown in FIG. 18, the routing method provided in the foregoing embodiment needs to be adjusted as follows:
The link 1 is still used as an example for description.

The following C1 to C3 are modifications to an embodiment in which a data packet transmitted by remote UE has no BAP header.

C1. In the method provided in the foregoing embodiment, when the UE 1 sends a data packet 1 having no BAP header to the UE 2, after receiving the data packet 1, the UE 2 adds a BAP header to the data packet 1, to generate a data packet 2.

In this embodiment, the UE 1 sends a data packet 1 with a BAP header to the UE 2, but the BAP header does not include target route indication information or a target device identifier, and includes only a bearer identifier. After receiving the data packet 1, the UE 2 adds the target route indication information and the target device identifier to the BAP header of the data packet 1, to obtain a data packet 2.

C2. In the method provided in the foregoing embodiment, the AN device sends a data packet 3 with a BAP header to the UE 4, where the BAP header of the data packet 3 includes target route indication information and a target device identifier.

In this embodiment, the AN device sends a data packet 3 with a BAP header to the UE 4. The BAP header of the data packet 3 includes target route indication information and a target device identifier, and further includes a bearer identifier.

C3. In the method provided in the foregoing embodiment, the UE 2 serving as the tail relay UE of the UE 1 receives a data packet 4, where a BAP header of the data packet 4 includes target route indication information and a target device identifier. The UE 2 decapsulates the data packet 4 to obtain a data packet 5 having no BAP header, and sends the data packet 5 to the UE 1.

In this embodiment, the UE 2 serving as the tail relay UE of the UE 1 receives a data packet 4, where a BAP header of the data packet 4 includes target route indication information and a target device identifier, and further includes a bearer identifier. The UE 2 deletes the target route indication information and the target device identifier from the BAP header of the data packet 4, to obtain a data packet 5, and sends the data packet 5 to the UE 1, where the BAP header of the data packet 5 includes only the bearer identifier.

For modifications to an embodiment in which a data packet transmitted by remote UE has a BAP header, refer to 2-1 to 2-3, and details are not described herein again.

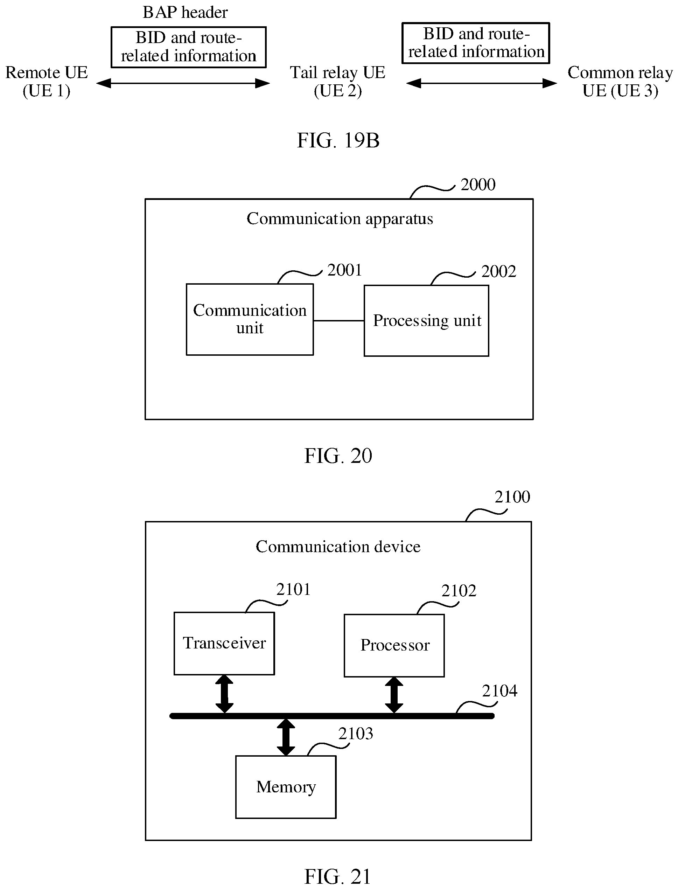

In conclusion, on the link 1, processing of a BAP header of a data packet complies with FIG. 19A or FIG. 19B. Route-related information in FIG. 19A and FIG. 19B includes target route indication information and a target device identifier.

### Embodiment 9

In the foregoing embodiment, the AN device sends at least one piece of route information to each relay UE. The link 1 is still used as an example for description below. This embodiment provides a route information configuration method, which may be implemented in, but is not limited to, the following implementations:
In a first implementation, each relay UE on the link 1 has a Uu communication connection (or an RRC connection) to the AN device. Therefore, the AN device may send, to each relay UE through the Uu communication connection to the relay UE, route information configured for the relay UE.

For example, the AN device may send, to the UE 4 through a Uu communication connection to the UE 4, route information configured for the UE 4; send, to the UE 3 through a Uu communication connection to the UE 3, route information configured for the UE 3; and send, to the UE 2 through a Uu communication connection to the UE 2, route information configured for the UE 2.

In a second implementation, some relay UEs may not establish Uu communication connections to the AN device. The relay UE is relay UE other than relay UE that is connected to the AN device through a Uu communication connection, and may be referred to as dedicated relay UE for short below. For example, if some UEs do not need to establish Uu communication connections to the AN device, and only serve as relay UEs to provide relay services for another UE, the UE may not establish the Uu communication connection to the AN device.

In this case, the dedicated relay UE may obtain route information from parent relay UE of the dedicated relay UE. A specific procedure is shown in the following figure. In other words, the parent relay UE may provide the route information to the child relay UE, and optionally, may further provide an address for the child relay UE.

For example, on the link 1, the UE 4 may send route information of the UE 3 to the UE 3, and the UE 3 may also send route information of the UE 2 to the UE 2. However, when the AN device initially configures the route information for head relay UE (the UE 4), sent information includes the route information of the UE 4 and at least one piece of first extension information, and each piece of first extension information includes indication information (for example, a local identifier or an index) of child relay UE (referred to as first child relay UE for short) of the UE 4 and route information of the first child relay UE. Optionally, if first child relay UE of the UE 4 further has child relay UE (referred to as second child relay UE for short), the first extension information may further include at least one piece of second extension information, and each piece of second extension information includes at least indication information of one second child relay UE and route information of the second child relay UE.

The UE 4 sends, based on indication information of first child relay UE in each piece of first extension information, route information of the first child relay UE and second extension information included in the first extension information to the first child relay UE.

The following continues to use the link 1 as an example to describe a route information configuration process of each relay UE on the link 1. In this example, it is assumed that both the UE 2 and the UE 3 are dedicated relay UEs.

S1: The AN device sends a first message to the UE 4.

The first message includes route information of the UE 4 and first extension information (a local identifier of the UE 3, route information of the UE 3, and second extension information (a local identifier of the UE 2 and route information of the UE 2)).

S2: The UE 4 sends a second message to the UE 3.

The second message includes the route information of the UE 3 and the second extension information (the local identifier of the UE 2 and the route information of the UE 2).

S3: The UE 3 sends a third message to the UE 2.

The third message includes the route information of the UE 2.

In the foregoing second implementation, when there is no Uu communication connection between some relay UEs and the AN device, the communication system can still complete route information configuration for these relay UEs, to implement routing for communication between remote UE and the AN device through a plurality of relay UEs.

It should be further noted that the foregoing Embodiment 1 to Embodiment 9 do not constitute a limitation on the routing method provided in this application. A routing method obtained by making improvements and adjustments based on the foregoing embodiments also falls within the scope of this application. In addition, the foregoing Embodiment 1 to Embodiment 9 are all described by using a U2N system as an example. However, the method provided in the foregoing embodiment is also applicable to the U2U system. In a U2U system, end-to-end communication occurs between two UEs, and there is at least one relay UE between the two UEs. When the routing method provided in embodiments of this application is applied to the U2U system, UE at one end of the U2U system may be configured to perform the behavior of the AN device in the foregoing embodiment.

It should be noted that, in the foregoing embodiments, an SL communication connection established by two UEs is an SL unicast communication connection.

Based on a same technical concept, this application further provides a communication apparatus. A structure of the apparatus is shown in FIG. 20, and includes a communication unit 2001 and a processing unit 2002. The communication apparatus 2000 may be used in the multi-hop communication system shown in FIG. 1, and may implement the routing method provided in the foregoing embodiment. Optionally, a physical representation form of the communication apparatus 2000 may be a communication device, for example, an AN device or UE; or the communication apparatus may be another apparatus that can implement a function of a communication device, for example, a processor or a chip in the communication device. Specifically, the communication apparatus 2000 may be some programmable chips such as a field-programmable gate array (field-programmable gate array, FPGA), a complex programmable logic device (complex programmable logic device, CPLD), an application-specific integrated circuit (application-specific integrated circuit, ASIC), or a system on a chip (System on a chip, SOC).

The following describes functions of the units in the apparatus 2000.

The communication unit 2001 is configured to receive and send data. Optionally, the communication unit 2001 may be implemented by using a transceiver, for example, a mobile communication module.

The mobile communication module may provide a solution that is applied to the UE and that includes wireless communication such as 2G, 3G, 4G, and 5G. The mobile communication module may include at least one antenna, at least one filter, a switch, a power amplifier, a low noise amplifier (low noise amplifier, LNA), and the like. The communication device may interact with another device in the communication system through the mobile communication module.

Optionally, the communication apparatus 2000 may be used in a relay terminal. The following describes specific functions of the processing unit 2002 by using an example in which the communication apparatus 2000 is used in a first relay terminal.

In an implementation, the processing unit 2002 is configured to:
receive a first data packet by using the communication unit 2001;
obtain first route indication information and a target device identifier that are of the first data packet, where the first route indication information indicates a transmission route of the first data packet, and a target device indicated by the target device identifier is a destination device or a source device of the first data packet; and determine a first device based on the first route indication information, or based on the first route indication information and the target device identifier; and
transmit a second data packet to the first device by using the communication unit 2001, where data carried in the second data packet is the same as data carried in the first data packet.

It should be noted that, that the data carried in the second data packet is the same as the data carried in the first data packet includes two different meanings: A first meaning is that the first data packet is totally the same as the second data packet, and the communication apparatus 2000 does not encapsulate or decapsulate the first data packet. A second meaning is that only the data carried in the second data packet and the data carried in the first data packet are the same, and the second data packet and the first data packet have a difference (for example, protocol layers are different; for another example, protocol layers are the same but information carried in protocol layer headers is different). The communication apparatus 2000 encapsulates or decapsulates the first data packet, to obtain the second data packet. In the following different designs, specific descriptions may be provided for different cases.

In a possible design, when obtaining the first route indication information and the target device identifier, the processing unit 2002 is specifically configured to:
manner 1: when the first data packet has a first protocol layer header, and the first protocol layer header includes the first route indication information and the target device identifier, obtain the first route indication information and the target device identifier from the first protocol layer header of the first data packet;
manner 2: when the first data packet is received from a first remote terminal by using the communication unit 2001, and the first data packet has no first protocol layer header, determine that the first route indication information is stored route indication information corresponding to the first remote terminal, and determine that the target device identifier is a device identifier of the first remote terminal; or
manner 3: when the communication unit 2001 receives the first data packet from a first remote terminal, the first data packet has a first protocol layer, and the first protocol layer header does not include the first route indication information or the target device identifier, determine that the first route indication information is stored route indication information corresponding to the first remote terminal, and determine that the target device identifier is a device identifier of the first remote terminal.

In a possible design, the processing unit 2002 is further configured to:
obtain the route indication information corresponding to the first remote terminal from an access network device by using the communication unit 2001, where the route indication information corresponding to the first remote terminal is dedicated route indication information or default route indication information of the first remote terminal.

In a possible design, the route indication information corresponding to the first remote terminal includes a plurality of pieces of route indication information corresponding to different bearers; and when determining that the first route indication information is the route indication information corresponding to the first remote terminal, the processing unit 2002 is specifically configured to:
determine a target bearer used for transmitting the first data packet; and
determine that the first route indication information is route indication information that is in the route indication information corresponding to the first remote terminal and that corresponds to the target bearer.

In a possible design, the first route indication information includes a destination address, and the first data packet has the first protocol layer header; and
when determining the first device based on the first route indication information, or based on the first route indication information and the target device identifier, the processing unit 2002 is specifically configured to:
manner 1: when the destination address is different from an address of the first relay terminal, determine a next-hop node address corresponding to the first route indication information; and determine that the first device is a next-hop node indicated by the next-hop node address;
manner 2: when the destination address is the same as an address of the first relay terminal, determine that the device indicated by the target device identifier is the first device; or
manner 3: when the destination address is the same as an address of the first relay terminal, and the first relay terminal is the 1^{st} relay terminal connected to the access network device, determine an interface used for receiving the first data packet, where when the interface is a Uu interface, determine that the device indicated by the target device identifier is the first device; or when the interface is a PC5 interface, determine that the first device is the access network device.

In a possible design, when the first device is the next-hop node or the access network device, the second data packet is the same as the first data packet. In this design, actually, the processing unit 2002 does not encapsulate or decapsulate the first data packet, but directly forwards the first data packet.

In a possible design, the first route indication information further includes a target path identifier.

In a possible design, the first route indication information includes a target path identifier, and the first data packet has the first protocol layer header; and
when determining the first device based on the first route indication information, or based on the first route indication information and the target device identifier, the processing unit 2002 is specifically configured to:
manner 1: when the first route indication information has a corresponding next-hop node device identifier, determine the first device based on the next-hop node device identifier; or
manner 2: when the first route indication information does not have a corresponding next-hop node device identifier, determine that the device indicated by the target device identifier is the first device.

In a possible design, when determining the first device based on the next-hop node device identifier, the processing unit 2002 is specifically configured to:
manner 1: when the next-hop node device identifier indicates a second relay terminal connected to the first relay terminal, determine that the first device is the second relay terminal;
manner 2: when the next-hop node device identifier indicates an access network device, determine that the first device is the access network device; or
manner 3: when the next-hop node device identifier indicates the first relay terminal, determine that the device indicated by the target device identifier is the first device.

In a possible design, when the next-hop node device identifier is a first default device identifier, the next-hop node device identifier indicates the first relay terminal; or
when the next-hop node device identifier is a second default device identifier, the next-hop node device identifier indicates the access network device.

In a possible design, when the first device is the second relay terminal or the access network device, the second data packet is the same as the first data packet. In this design, actually, the processing unit 2002 does not encapsulate or decapsulate the first data packet, but directly forwards the first data packet.

In a possible design, the first route indication information further includes a transmission direction indication, and the transmission direction indication indicates uplink transmission or downlink transmission.

In a possible design, when determining that the device indicated by the target device identifier is the first device, the processing unit 2002 is specifically configured to:
when the target device identifier indicates a first remote terminal that accesses the first relay terminal, determine that the first device is the first remote terminal; and
when transmitting the second data packet to the first device by using the communication unit 2001, the processing unit 2002 is specifically configured to:
   decapsulate the first data packet to obtain the second data packet, where the second data packet has no first protocol layer header; and
   transmit the second data packet to the first remote terminal by using the communication unit 2001.

In a possible design, the first protocol layer header further includes a bearer identifier, and the bearer identifier indicates the target bearer used for transmitting the first data packet; and when determining that the device indicated by the target device identifier is the first device, the processing unit 2002 is specifically configured to:
when the target device identifier indicates a first remote terminal that accesses the first relay terminal, determine that the first device is the first remote terminal; and
when transmitting the second data packet to the first device by using the communication unit 2001, the processing unit 2002 is specifically configured to:
   manner 1: delete the first route indication information and the target device identifier that are included in the first protocol layer from the first data packet, to obtain the second data packet, where a first protocol layer header of the second data packet includes the bearer identifier; and transmit the second data packet to the first device by using the communication unit 2001;
   manner 2: decapsulate the first data packet to obtain a target data packet, where the target data packet has no first protocol layer header; add a first protocol layer header to the target data packet to generate the second data packet, where the first protocol layer header of the second data packet includes the bearer identifier; and transmit the second data packet to the first device by using the communication unit 2001; or
   manner 3: transmit the second data packet the same as the first data packet to the first device by using the communication unit 2001. To be specific, the processing unit 2002 does not encapsulate or decapsulate the first data packet, but directly forwards the first data packet.

In a possible design, the processing unit 2002 is further configured to:
when the target device identifier indicates the first relay terminal, determine that data carried in the first data packet is data of the first relay terminal.

In a possible design, when the target device identifier is a third default device identifier, the target device identifier indicates the first relay terminal.

In a possible design, when the first data packet has no first protocol layer header, when transmitting the second data packet to the first device by using the communication unit 2001, the processing unit 2002 is specifically configured to:
add a first protocol layer header to the first data packet to generate the second data packet, where the first protocol layer header of the second data packet includes the first route indication information and the target device identifier; and
transmit the second data packet to the first device by using the communication unit 2001.

In a possible design, when the first relay terminal is connected to the access network device through the second relay terminal, the processing unit 2002 is further configured to:
generate a third data packet, where the third data packet includes no first protocol layer header; and
manner 1: transmit the third data packet to the second relay terminal by using the communication unit 2001; or
manner 2: determine second route indication information of the third data packet; add a first protocol layer header to the third data packet to generate a fourth data packet; and transmit the fourth data packet to the second relay terminal by using the communication unit 2001, where the first protocol layer header of the fourth data packet includes the second route indication information and a device identifier of the first relay terminal.

In a possible design, the device identifier of the first relay terminal is allocated by the second relay terminal to the first relay terminal; or the device identifier of the first relay terminal is allocated by the first relay terminal to the second relay terminal; or the device identifier of the first relay terminal is the first default device identifier.

In a possible design, when transmitting the second data packet to the first device by using the communication unit 2001, the processing unit 2002 is specifically configured to:
transmit the second data packet to the first device by using the communication unit 2001 through a first logical channel; and
when transmitting the third data packet to the second relay terminal by using the communication unit 2001, the processing unit 2002 is specifically configured to:
   transmit the third data packet to the second relay terminal by using the communication unit 2001 through a second logical channel, where
   the first logical channel is different from the second logical channel.

In a possible design, when the first data packet has a first protocol layer header, and the first protocol layer header includes the bearer identifier but does not include the first route indication information or the target device identifier; and when transmitting the second data packet to the first device by using the communication unit 2001, the processing unit 2002 is specifically configured to:
obtain the second data packet in the following two manners:
manner 1: adding the first route indication information and the target device identifier to the first protocol layer header of the first data packet, to obtain the second data packet, where the first protocol layer header of the second data packet includes the bearer identifier, the first route indication information, and the target device identifier; and
manner 2: decapsulating the first data packet to obtain a target data packet, where the target data packet has no first protocol layer header; and adding a first protocol layer header to the target data packet to generate the second data packet, where the first protocol layer header of the second data packet includes the bearer identifier, the first route indication information, and the target device identifier; and
transmit the second data packet to the first device by using the communication unit 2001.

In a possible design, when determining the next-hop node address corresponding to the first route indication information, the processing unit 2002 is specifically configured to:
determine, in at least one piece of stored route information, target route information that includes the first route indication information, where the target route information includes the first route indication information and the next-hop node address corresponding to the first route indication information; and
determine, in the target route information, the next-hop node address corresponding to the first route indication information.

In a possible design, the processing unit 2002 is further configured to:
when determining, in the at least one piece of stored route information, the target route information that includes the first route indication information, determine that the first route indication information has a corresponding next-hop node device identifier, where the target route information includes the first route indication information and the next-hop node device identifier corresponding to the first route indication information; or
when the target route information is not found in the at least one piece of stored route information, determine that the first route indication information does not have a corresponding next-hop node device identifier.

In a possible design, the processing unit 2002 is further configured to:
obtain the at least one piece of route information from the access network device by using the communication unit 2001; or when the first relay terminal is connected to the access network device through the second relay terminal, obtain the at least one piece of route information from the second relay terminal by using the communication unit 2001.

In a possible design, the target device identifier is a local identifier local ID or a layer 2 identifier L2 ID of the target device.

In another implementation, the processing unit 2002 is configured to:
receive a first data packet by using the communication unit 2001, where the first data packet has a first protocol layer header, the first protocol layer header includes first route indication information and a target device identifier, the first route indication information indicates a transmission route of the first data packet, and a target device indicated by the target device identifier is a destination device or a source device of the first data packet;
obtain the first route indication information and the target device identifier from the first data packet;
determine the first device based on the first route indication information, or based on the first route indication information and the target device identifier; and
transmit the first data packet to the first device by using the communication unit 2001.

In a possible design, the first route indication information includes a target node address; and when determining the first device based on the first route indication information, or based on the first route indication information and the target device identifier, the processing unit 2002 is specifically configured to:
manner 1: when the target node address is different from an address of the first relay terminal, determine a next-hop node address corresponding to the first route indication information; and determine that the first device is a next-hop node indicated by the next-hop node address;
manner 2: when the target node address is the same as an address of the first relay terminal, determine that the device indicated by the target device identifier is the first device; or
manner 3: when the target node address is the same as an address of the first relay terminal, and the first relay terminal is the 1^{st} relay terminal connected to an access network device, the first relay terminal determines an interface used for receiving the first data packet, where when the interface is a Uu interface, determine that the device indicated by the target device identifier is the first device; or when the interface is a PC5 interface, determine that the first device is the access network device.

In a possible design, the first route indication information further includes a target path identifier.

In a possible design, when determining that the device indicated by the target device identifier is the first device, the processing unit 2002 is specifically configured to:
when the target device identifier indicates a first remote terminal that accesses the first relay terminal, determine that the first device is the first remote terminal.

In a possible design, the processing unit 2002 is further configured to: when the target device identifier indicates the first relay terminal, determine that data carried in the first data packet is data of the first relay terminal.

In a possible design, when the target device identifier is a default device identifier, the target device identifier indicates the first relay terminal.

In a possible design, when determining the next-hop node address corresponding to the first route indication information, the processing unit 2002 is specifically configured to:
determine, in at least one piece of stored route information, target route information that includes the first route indication information, where the target route information includes the first route indication information and the next-hop node address corresponding to the first route indication information; and
determine, in the target route information, the next-hop node address corresponding to the first route indication information.

In a possible design, the processing unit 2002 is further configured to:
obtain the at least one piece of route information from the access network device by using the communication unit 2001; or when the first relay terminal is connected to the access network device through a second relay terminal, obtain the at least one piece of route information from the second relay terminal by using the communication unit 2001.

In a possible design, the target device identifier is a local identifier local ID of the target device.

In a possible design, the first protocol layer header of the first data packet further includes a bearer identifier, and the bearer identifier indicates a first bearer used for transmitting the first data packet.

Optionally, the communication apparatus 2000 may alternatively be used in an AN device. The following describes specific functions of the processing unit 2002.

The processing unit 2002 is configured to:
obtain a first data packet, where the first data packet has no first protocol layer header;
determine first route indication information and a first target device identifier that are of the first data packet, where a first target device indicated by the first target device identifier is a destination device of the first data packet, and the first route indication information indicates a transmission route of the first data packet;
add a first protocol layer header to the first data packet, to generate a second data packet, where the first protocol layer header of the second data packet includes the first route indication information and the first target device identifier;
determine a relay terminal based on the first route indication information; and
transmit the second data packet to the relay terminal by using the communication unit 2001.

In a possible design, the processing unit 2002 is further configured to:
receive, by using the communication unit 2001, a third data packet sent by the relay terminal, where the third data packet has a first protocol layer header, the first protocol layer header of the third data packet includes second route indication information and a second target device identifier, a second target device indicated by the second target device identifier is a source device of the third data packet, and the second route indication information indicates a transmission route of the third data packet; and
decapsulate the third data packet to obtain a fourth data packet, where the fourth data packet has no first protocol layer header.

In a possible design, the processing unit 2002 is further configured to:
determine a first bearer identifier of the first data packet, where the first bearer identifier indicates a first bearer used for transmitting the first data packet; and
the first protocol layer header of the second data packet further includes the first bearer identifier.

In a possible design, the first protocol layer header of the third data packet further includes a second bearer identifier, and the second bearer identifier indicates a second bearer used for transmitting the third data packet.

Optionally, the communication apparatus 2000 may alternatively be used in a remote terminal. The following describes specific functions of the processing unit 2002.

The processing unit 2002 is configured to:
obtain a first data packet;
determine first route indication information and a target device identifier that are of the first data packet, where the first route indication information of the first data packet indicates a transmission route of the first data packet, and the target device identifier is a device identifier of the remote terminal;
add a first protocol layer header to the first data packet, to generate a second data packet, where the first protocol layer header of the second data packet includes the first route indication information and the first target device identifier; and
send the second data packet to a relay terminal by using the communication unit 2001.

In a possible design, the processing unit 2002 is further configured to:
receive a third data packet from the relay terminal by using the communication unit 2001, where the third data packet has a first protocol layer header, the first protocol layer header of the third data packet includes second route indication information and the target device identifier, and the second route indication information indicates a transmission route of the second data packet; and
decapsulate the third data packet to obtain a fourth data packet, where the fourth data packet has no first protocol layer header.

In a possible design, the processing unit 2002 is further configured to:
determine a first bearer identifier of the first data packet, where the first bearer identifier indicates a first bearer used for transmitting the first data packet; and
the first protocol layer header of the second data packet further includes the first bearer identifier.

In a possible design, the first protocol layer header of the third data packet further includes a second bearer identifier, and the second bearer identifier indicates a second bearer used for transmitting the third data packet.

In a possible design, when determining the first route indication information of the first data packet, the processing unit 2002 is specifically configured to:
determine that the first route indication information is stored route indication information corresponding to a first remote terminal.

In a possible design, the processing unit 2002 is further configured to:
receive the route indication information corresponding to the first remote terminal from an access network device or the relay terminal by using the communication unit 2001, where the route indication information corresponding to the first remote terminal is dedicated route indication information or default route indication information of the first remote terminal.

It should be noted that, in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, this application further provides a communication device. The communication device may be used in the multi-hop communication system shown in FIG. 1, can implement the routing method provided in the foregoing embodiment, and has a function of the communication apparatus 2000 shown in FIG. 20. As shown in FIG. 21, the communication device 2100 includes a transceiver 2101, a processor 2102, and a memory 2103. The transceiver 2101, the processor 2102, and the memory 2103 are connected to each other.

Optionally, the transceiver 2101, the processor 2102, and the memory 2103 are connected to each other by using a bus 2104. The bus 2104 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of representation, only one thick line is for representing the bus in FIG. 21, but this does not mean that there is only one bus or only one type of bus.

The transceiver 2101 is configured to receive and send data, to implement communication interaction with another device.

Optionally, the communication device 2100 may be used in a relay terminal. The following describes specific functions of the processor 2102 by using an example in which the communication device 2100 is used in a first relay terminal.

In an implementation, the processor 2102 is configured to:
receive a first data packet by using the transceiver 2101;
obtain first route indication information and a target device identifier that are of the first data packet, where the first route indication information indicates a transmission route of the first data packet, and a target device indicated by the target device identifier is a destination device or a source device of the first data packet; and determine a first device based on the first route indication information, or based on the first route indication information and the target device identifier; and
transmit a second data packet to the first device by using the transceiver 2101, where data carried in the second data packet is the same as data carried in the first data packet.

In another implementation, the processor 2102 is configured to:
receive a first data packet by using the transceiver 2101, where the first data packet has a first protocol layer header, the first protocol layer header includes first route indication information and a target device identifier, the first route indication information indicates a transmission route of the first data packet, and a target device indicated by the target device identifier is a destination device or a source device of the first data packet;
obtain the first route indication information and the target device identifier from the first data packet;
determine the first device based on the first route indication information, or based on the first route indication information and the target device identifier; and
transmit the first data packet to the first device by using the transceiver 2101.

Optionally, the communication device 2100 may alternatively be used in an AN device. The following describes specific functions of the processor 2102.

The processor 2102 is configured to:
obtain a first data packet, where the first data packet has no first protocol layer header;
determine first route indication information and a first target device identifier that are of the first data packet, where a first target device indicated by the first target device identifier is a destination device of the first data packet, and the first route indication information indicates a transmission route of the first data packet;
add a first protocol layer header to the first data packet, to generate a second data packet, where the first protocol layer header of the second data packet includes the first route indication information and the first target device identifier;
determine a relay terminal based on the first route indication information; and
transmit the second data packet to the relay terminal by using the transceiver 2101.

Optionally, the communication device 2100 may alternatively be used in a remote terminal. The following describes specific functions of the processor 2102.

The processor 2102 is configured to:
obtain a first data packet;
determine first route indication information and a target device identifier that are of the first data packet, where the first route indication information of the first data packet indicates a transmission route of the first data packet, and the target device identifier is a device identifier of the remote terminal;
add a first protocol layer header to the first data packet, to generate a second data packet, where the first protocol layer header of the second data packet includes the first route indication information and the first target device identifier; and
send the second data packet to a relay terminal by using the transceiver 2101.

It should be noted that the specific functions of the processor 2102 are not described in detail in this embodiment. For the specific functions of the processor 2102, refer to the descriptions in the routing method provided in the foregoing embodiment and the example, and the descriptions of the specific functions of the communication apparatus 2000 in the embodiment shown in FIG. 20. Details are not described herein again.

The memory 2103 is configured to store program instructions, data, and the like. Specifically, the program instructions may include program code. The program code includes computer operation instructions. The memory 2103 may include a random access memory (random access memory, RAM), or may include a non-volatile memory (non-volatile memory), for example, at least one magnetic disk memory. The processor 2102 executes the program instructions stored in the memory 2103, and implements the foregoing functions by using the data stored in the memory 2103, to implement the route method provided in the foregoing embodiment.

It may be understood that the memory 2103 in FIG. 21 in this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and method described in this specification includes but is not limited to these and any memory of another proper type.

Based on the foregoing embodiment, an embodiment of this application further provides a computer program. When the computer program is run on a computer, the computer is enabled to perform the routing method provided in the foregoing embodiment.

Based on the foregoing embodiment, an embodiment of this application further provides a computer-readable storage medium. The computer-readable storage medium stores a computer program. When the computer program is executed by a computer, the computer is enabled to perform the routing method provided in the foregoing embodiment.

The storage medium may be any available medium that can be accessed by the computer. The following provides an example but does not impose a limitation: The computer-readable medium may include a RAM, a ROM, an EEPROM, a CD-ROM or another optical disc storage, or a disk storage medium or another disk storage device, or any other medium that can carry or store expected program code in a form of an instruction or a data structure and can be accessed by a computer.

Based on the foregoing embodiment, an embodiment of this application further provides a chip. The chip is configured to read a computer program stored in a memory, to implement the routing method provided in the foregoing embodiment.

Based on the foregoing embodiment, an embodiment of this application provides a chip system. The chip system includes a processor, configured to support a computer apparatus in implementing functions of the communication devices in the foregoing embodiments. In a possible design, the chip system further includes a memory. The memory is configured to store a program and data that are necessary for the computer apparatus. The chip system may include a chip, or may include the chip and another discrete component.

In conclusion, embodiments of this application provide a routing method and an apparatus. In the method, an address of relay UE, an address of remote UE, an address of an AN device, a route identifier, or the like may be used as route indication information to guide routing transmission of a data packet, so as to ensure that routing between an AN device and remote UE can be implemented in a multi-hop communication scenario.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can guide the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations provided that they fall within the scope of the claims of this application and their equivalent technologies.

## Claims

1. A routing method, applied to a first relay terminal, wherein the method comprises:
receiving a first data packet; and
obtaining first route indication information and a target device identifier that are of the first data packet, wherein the first route indication information indicates a transmission route of the first data packet, and a target device indicated by the target device identifier is a destination device or a source device of the first data packet;
determining a first device based on the first route indication information and the target device identifier; and
transmitting a second data packet to the first device, wherein data carried in the second data packet is the same as data carried in the first data packet.

2. The method according to claim 1, wherein the obtaining first route indication information and a target device identifier comprises:
when the first data packet has a first protocol layer header, and the first protocol layer header comprises the first route indication information and the target device identifier, obtaining the first route indication information and the target device identifier from the first protocol layer header of the first data packet; or
when the first data packet is received from a first remote terminal, and the first data packet has no first protocol layer header, determining that the first route indication information is stored route indication information corresponding to the first remote terminal, and determining that the target device identifier is a device identifier of the first remote terminal; or
when the first data packet is received from a first remote terminal, the first data packet has a first protocol layer, and the first protocol layer header does not comprise the first route indication information or the target device identifier, determining that the first route indication information is stored route indication information corresponding to the first remote terminal, and determining that the target device identifier is a device identifier of the first remote terminal.

3. The method according to claim 2, wherein the method further comprises:
obtaining the route indication information corresponding to the first remote terminal from an access network device, wherein the route indication information corresponding to the first remote terminal is dedicated route indication information or default route indication information of the first remote terminal.

4. The method according to claim 2 or 3, wherein the route indication information corresponding to the first remote terminal comprises a plurality of pieces of route indication information corresponding to different bearers; and
the determining that the first route indication information is route indication information corresponding to the first remote terminal comprises:
determining a target bearer used for transmitting the first data packet; and
determining that the first route indication information is route indication information that is in the route indication information corresponding to the first remote terminal and that corresponds to the target bearer.

5. The method according to any one of claims 2 to 4, wherein the first route indication information comprises a destination address, and the first data packet has the first protocol layer header; and
the determining a first device based on the first route indication information and the target device identifier comprises:
when the destination address is the same as an address of the first relay terminal, determining that the device indicated by the target device identifier is the first device; or
when the destination address is the same as an address of the first relay terminal, and the first relay terminal is the 1^{st} relay terminal connected to the access network device, determining an interface used for receiving the first data packet, wherein when the interface is a Uu interface, determining that the device indicated by the target device identifier is the first device; or when the interface is a PC5 interface, determining that the first device is the access network device.

6. The method according to claim 5, wherein when the first device is the access network device, the second data packet is the same as the first data packet.

7. The method according to claim 5 or 6, wherein the first route indication information further comprises a target path identifier.

8. The method according to any one of claims 2 to 4, wherein the first route indication information comprises a target path identifier, and the first data packet has the first protocol layer header; and
the determining a first device based on the first route indication information and the target device identifier comprises:
when the first route indication information does not have a corresponding next-hop node device identifier, determining that the device indicated by the target device identifier is the first device.

9. The method according to claim 8, wherein the first route indication information further comprises a transmission direction indication, and the transmission direction indication indicates uplink transmission or downlink transmission.

10. The method according to any one of claims 5 to 9, wherein the determining that the device indicated by the target device identifier is the first device comprises:
when the target device identifier indicates a first remote terminal that accesses the first relay terminal, determining that the first device is the first remote terminal; and
the transmitting a second data packet to the first device comprises:
decapsulating the first data packet to obtain the second data packet, wherein the second data packet has no first protocol layer header; and
transmitting the second data packet to the first remote terminal.

11. The method according to any one of claims 5 to 9, wherein the first protocol layer header further comprises a bearer identifier, and the bearer identifier indicates the target bearer used for transmitting the first data packet; and the determining that the device indicated by the target device identifier is the first device comprises:
when the target device identifier indicates a first remote terminal that accesses the first relay terminal, determining that the first device is the first remote terminal; and
the transmitting a second data packet to the first device comprises:
deleting the first route indication information and the target device identifier that are comprised in the first protocol layer from the first data packet, to obtain the second data packet, wherein a first protocol layer header of the second data packet comprises the bearer identifier; and transmitting the second data packet to the first device; or
decapsulating the first data packet to obtain a target data packet, wherein the target data packet has no first protocol layer header; adding a first protocol layer header to the target data packet to generate the second data packet, wherein the first protocol layer header of the second data packet comprises the bearer identifier; and transmitting the second data packet to the first device; or
transmitting the second data packet the same as the first data packet to the first device.

12. The method according to claim 10 or 11, wherein the method further comprises:
when the target device identifier indicates the first relay terminal, determining that data carried in the first data packet is data of the first relay terminal.

13. The method according to claim 12, wherein when the target device identifier is a default device identifier, the target device identifier indicates the first relay terminal.

14. The method according to any one of claims 5 to 10, wherein when the first data packet has no first protocol layer header, the transmitting the second data packet to the first device comprises:
adding a first protocol layer header to the first data packet to generate the second data packet, wherein the first protocol layer header of the second data packet comprises the first route indication information and the target device identifier; and
transmitting the second data packet to the first device.

15. The method according to claim 14, wherein when the first relay terminal is connected to the access network device through a second relay terminal, the method further comprises:
generating a third data packet, wherein the third data packet comprises no first protocol layer header; and
transmitting the third data packet to the second relay terminal; or
determining second route indication information of the third data packet; adding a first protocol layer header to the third data packet to generate a fourth data packet; and transmitting the fourth data packet to the second relay terminal, wherein the first protocol layer header of the fourth data packet comprises the second route indication information and a device identifier of the first relay terminal.

16. The method according to claim 15, wherein the device identifier of the first relay terminal is allocated by the second relay terminal to the first relay terminal; or the device identifier of the first relay terminal is allocated by the first relay terminal to the second relay terminal; or the device identifier of the first relay terminal is a first default device identifier.

17. The method according to claim 15 or 16, wherein
the transmitting the second data packet to the first device comprises:
transmitting the second data packet to the first device through a first logical channel; and
the transmitting the third data packet to the second relay terminal comprises:
transmitting the third data packet to the second relay terminal through a second logical channel, wherein
the first logical channel is different from the second logical channel.

18. The method according to any one of claims 5 to 9, or claim 11, wherein when the first data packet has a first protocol layer header, and the first protocol layer header comprises the bearer identifier but does not comprise the first route indication information or the target device identifier, the transmitting the second data packet to the first device comprises:
adding the first route indication information and the target device identifier to the first protocol layer header of the first data packet, to obtain the second data packet, wherein a first protocol layer header of the second data packet comprises the bearer identifier, the first route indication information, and the target device identifier; or
decapsulating the first data packet to obtain a target data packet, wherein the target data packet has no first protocol layer header; and adding a first protocol layer header to the target data packet to generate the second data packet, wherein the first protocol layer header of the second data packet comprises the bearer identifier, the first route indication information, and the target device identifier; or
transmitting the second data packet to the first device.

19. The method according to claim 8 or 9, wherein the method further comprises:
when target route information is not found in at least one piece of stored route information, determining that the first route indication information does not have the corresponding next-hop node device identifier, wherein the target route information comprises the first route indication information and the next-hop node device identifier corresponding to the first route indication information.

20. The method according to claim 19, wherein the method further comprises:
obtaining the at least one piece of route information from the access network device; or
when the first relay terminal is connected to the access network device through a second relay terminal, obtaining the at least one piece of route information from the second relay terminal.

21. The method according to any one of claims 1 to 20, wherein the target device identifier is a local identifier local ID or a layer 2 identifier L2 ID of the target device.

22. A routing method, applied to an access network device, wherein the method comprises:
obtaining a first data packet, wherein the first data packet has no first protocol layer header;
determining first route indication information and a first target device identifier that are of the first data packet, wherein a first target device indicated by the first target device identifier is a destination device of the first data packet, and the first route indication information indicates a transmission route of the first data packet;
adding a first protocol layer header to the first data packet, to generate a second data packet, wherein the first protocol layer header of the second data packet comprises the first route indication information and the first target device identifier;
determining a relay terminal based on the first route indication information; and
transmitting the second data packet to the relay terminal.

23. The method according to claim 22, wherein the method further comprises:
receiving a third data packet sent by the relay terminal, wherein the third data packet has a first protocol layer header, the first protocol layer header of the third data packet comprises second route indication information and a second target device identifier, a second target device indicated by the second target device identifier is a source device of the third data packet, and the second route indication information indicates a transmission route of the third data packet; and
decapsulating the third data packet to obtain a fourth data packet, wherein the fourth data packet has no first protocol layer header.

24. The method according to claim 22, wherein the method further comprises:
determining a first bearer identifier of the first data packet, wherein the first bearer identifier indicates a first bearer used for transmitting the first data packet; and
the first protocol layer header of the second data packet further comprises the first bearer identifier.

25. The method according to claim 23, wherein the first protocol layer header of the third data packet further comprises a second bearer identifier, and the second bearer identifier indicates a second bearer used for transmitting the third data packet.

26. A routing method, applied to a remote terminal, wherein the method comprises:
obtaining a first data packet;
determining first route indication information and a target device identifier that are of the first data packet, wherein the first route indication information of the first data packet indicates a transmission route of the first data packet, and the target device identifier is a device identifier of the remote terminal;
adding a first protocol layer header to the first data packet, to generate a second data packet, wherein the first protocol layer header of the second data packet comprises the first route indication information and the first target device identifier; and
transmitting the second data packet to a relay terminal.

27. The method according to claim 26, wherein the method further comprises:
receiving a third data packet from the relay terminal, wherein the third data packet has a first protocol layer header, the first protocol layer header of the third data packet comprises second route indication information and the target device identifier, and the second route indication information indicates a transmission route of the second data packet; and
decapsulating the third data packet to obtain a fourth data packet, wherein the fourth data packet has no first protocol layer header.

28. The method according to claim 26, wherein the method further comprises:
determining a first bearer identifier of the first data packet, wherein the first bearer identifier indicates a first bearer used for transmitting the first data packet; and
the first protocol layer header of the second data packet further comprises the first bearer identifier.

29. The method according to claim 27, wherein the first protocol layer header of the third data packet further comprises a second bearer identifier, and the second bearer identifier indicates a second bearer used for transmitting the third data packet.

30. The method according to any one of claims 26 to 29, wherein the determining first route indication information of the first data packet comprises:
determining that the first route indication information is stored route indication information corresponding to a first remote terminal.

31. The method according to claim 30, wherein the method further comprises:
receiving the route indication information corresponding to the first remote terminal from an access network device or the relay terminal, wherein the route indication information corresponding to the first remote terminal is dedicated route indication information or default route indication information of the first remote terminal.

32. A routing method, applied to a first relay terminal, wherein the method comprises:
receiving a first data packet, wherein the first data packet has a first protocol layer header, the first protocol layer header comprises first route indication information and a target device identifier, the first route indication information indicates a transmission route of the first data packet, and a target device indicated by the target device identifier is a destination device or a source device of the first data packet;
obtaining the first route indication information and the target device identifier from the first data packet;
determining a first device based on the first route indication information and the target device identifier; and
transmitting the first data packet to the first device.

33. The method according to claim 32, wherein the first route indication information comprises a target node address; and the determining a first device based on the first route indication information and the target device identifier comprises:
when the target node address is the same as an address of the first relay terminal, determining that the device indicated by the target device identifier is the first device; or
when the target node address is the same as an address of the first relay terminal, and the first relay terminal is the 1^{st} relay terminal connected to an access network device, determining, by the first relay terminal, an interface used for receiving the first data packet, wherein when the interface is a Uu interface, determining that the device indicated by the target device identifier is the first device; or when the interface is a PC5 interface, determining that the first device is the access network device.

34. The method according to claim 33, wherein the first route indication information further comprises a target path identifier.

35. The method according to claim 33 or 34, wherein the determining that the device indicated by the target device identifier is the first device comprises:
when the target device identifier indicates a first remote terminal that accesses the first relay terminal, determining that the first device is the first remote terminal.

36. The method according to claim 35, wherein the method further comprises:
when the target device identifier indicates the first relay terminal, determining that data carried in the first data packet is data of the first relay terminal.

37. The method according to claim 36, wherein when the target device identifier is a default device identifier, the target device identifier indicates the first relay terminal.

38. The method according to any one of claims 32 to 37, wherein the target device identifier is a local identifier local ID of the target device.

39. The method according to any one of claims 32 to 38, wherein the first protocol layer header of the first data packet further comprises a bearer identifier, and the bearer identifier indicates a first bearer used for transmitting the first data packet.

40. A communication apparatus, used in a first relay terminal, wherein the apparatus comprises:
a communication unit, configured to receive and send data; and
a processing unit, configured to:
receive a first data packet by using the communication unit;
obtain first route indication information and a target device identifier that are of the first data packet, wherein the first route indication information indicates a transmission route of the first data packet, and a target device indicated by the target device identifier is a destination device or a source device of the first data packet; and determine a first device based on the first route indication information and the target device identifier; and
transmit a second data packet to the first device by using the communication unit, wherein data carried in the second data packet is the same as data carried in the first data packet.

41. The apparatus according to claim 40, wherein when obtaining the first route indication information and the target device identifier, the processing unit is specifically configured to:
when the first data packet has a first protocol layer header, and the first protocol layer header comprises the first route indication information and the target device identifier, obtain the first route indication information and the target device identifier from the first protocol layer header of the first data packet; or
when the communication unit receives the first data packet from a first remote terminal, and the first data packet has no first protocol layer header, determine that the first route indication information is stored route indication information corresponding to the first remote terminal, and determine that the target device identifier is a device identifier of the first remote terminal; or
when the communication unit receives the first data packet from a first remote terminal, the first data packet has a first protocol layer, and the first protocol layer header does not comprise the first route indication information or the target device identifier, determine that the first route indication information is stored route indication information corresponding to the first remote terminal, and determine that the target device identifier is a device identifier of the first remote terminal.

42. The apparatus according to claim 41, wherein the processing unit is further configured to:
obtain the route indication information corresponding to the first remote terminal from an access network device by using the communication unit, wherein the route indication information corresponding to the first remote terminal is dedicated route indication information or default route indication information of the first remote terminal.

43. The apparatus according to claim 41 or 42, wherein the route indication information corresponding to the first remote terminal comprises a plurality of pieces of route indication information corresponding to different bearers; and when determining that the first route indication information is the route indication information corresponding to the first remote terminal, the processing unit is specifically configured to:
determine a target bearer used for transmitting the first data packet; and
determine that the first route indication information is route indication information that is in the route indication information corresponding to the first remote terminal and that corresponds to the target bearer.

44. The apparatus according to any one of claims 41 to 43, wherein the first route indication information comprises a destination address, and the first data packet has the first protocol layer header; and
when determining the first device based on the first route indication information and the target device identifier, the processing unit is specifically configured to:
when the destination address is the same as an address of the first relay terminal, determine that the device indicated by the target device identifier is the first device; or
when the destination address is the same as an address of the first relay terminal, and the first relay terminal is the 1^{st} relay terminal connected to the access network device, determine an interface used for receiving the first data packet, wherein when the interface is a Uu interface, determine that the device indicated by the target device identifier is the first device; or when the interface is a PC5 interface, determine that the first device is the access network device.

45. The apparatus according to claim 44, wherein when the first device is the access network device, the second data packet is the same as the first data packet.

46. The apparatus according to claim 44 or 45, wherein the first route indication information further comprises a target path identifier.

47. The apparatus according to any one of claims 41 to 43, wherein the first route indication information comprises a target path identifier, and the first data packet has the first protocol layer header; and
when determining the first device based on the first route indication information and the target device identifier, the processing unit is specifically configured to:
when the first route indication information does not have a corresponding next-hop node device identifier, determine that the device indicated by the target device identifier is the first device.

48. The apparatus according to claim 47, wherein the first route indication information further comprises a transmission direction indication, and the transmission direction indication indicates uplink transmission or downlink transmission.

49. The apparatus according to any one of claims 44 to 48, wherein when determining that the device indicated by the target device identifier is the first device, the processing unit is specifically configured to:
when the target device identifier indicates a first remote terminal that accesses the first relay terminal, determine that the first device is the first remote terminal; and
when transmitting the second data packet to the first device by using the communication unit, the processing unit is specifically configured to:
decapsulate the first data packet to obtain the second data packet, wherein the second data packet has no first protocol layer header; and
transmit the second data packet to the first remote terminal by using the communication unit.

50. The apparatus according to any one of claims 44 to 48, wherein the first protocol layer header further comprises a bearer identifier, and the bearer identifier indicates the target bearer used for transmitting the first data packet; and when determining that the device indicated by the target device identifier is the first device, the processing unit is specifically configured to:
when the target device identifier indicates a first remote terminal that accesses the first relay terminal, determine that the first device is the first remote terminal; and
when transmitting the second data packet to the first device by using the communication unit, the processing unit is specifically configured to:
delete the first route indication information and the target device identifier that are comprised in the first protocol layer from the first data packet, to obtain the second data packet, wherein a first protocol layer header of the second data packet comprises the bearer identifier; and transmit the second data packet to the first device by using the communication unit; or
decapsulate the first data packet to obtain a target data packet, wherein the target data packet has no first protocol layer header; add a first protocol layer header to the target data packet to generate the second data packet, wherein the first protocol layer header of the second data packet comprises the bearer identifier; and transmit the second data packet to the first device by using the communication unit; or
transmit the second data packet the same as the first data packet to the first device by using the communication unit.

51. The apparatus according to claim 49 or 50, wherein the processing unit is further configured to:
when the target device identifier indicates the first relay terminal, determine that data carried in the first data packet is data of the first relay terminal.

52. The apparatus according to claim 51, wherein when the target device identifier is a default device identifier, the target device identifier indicates the first relay terminal.

53. The apparatus according to any one of claims 44 to 49, wherein when the first data packet has no first protocol layer header; and when transmitting the second data packet to the first device by using the communication unit, the processing unit is specifically configured to:
add a first protocol layer header to the first data packet to generate the second data packet, wherein the first protocol layer header of the second data packet comprises the first route indication information and the target device identifier; and
transmit the second data packet to the first device by using the communication unit.

54. The apparatus according to claim 53, wherein when the first relay terminal is connected to the access network device through a second relay terminal, the processing unit is further configured to:
generate a third data packet, wherein the third data packet comprises no first protocol layer header; and
transmit the third data packet to the second relay terminal by using the communication unit; or
determine second route indication information of the third data packet; add a first protocol layer header to the third data packet to generate a fourth data packet; and transmit the fourth data packet to the second relay terminal by using the communication unit, wherein the first protocol layer header of the fourth data packet comprises the second route indication information and a device identifier of the first relay terminal.

55. The apparatus according to claim 54, wherein the device identifier of the first relay terminal is allocated by the second relay terminal to the first relay terminal; or the device identifier of the first relay terminal is allocated by the first relay terminal to the second relay terminal; or the device identifier of the first relay terminal is a first default device identifier.

56. The apparatus according to claim 54 or 55, wherein
when transmitting the second data packet to the first device by using the communication unit, the processing unit is specifically configured to:
transmit the second data packet to the first device by using the communication unit through a first logical channel; and
when transmitting the third data packet to the second relay terminal by using the communication unit, the processing unit is specifically configured to:
transmit the third data packet to the second relay terminal by using the communication unit through a second logical channel, wherein
the first logical channel is different from the second logical channel.

57. The apparatus according to any one of claims 44 to 48, or claim 50, wherein when the first data packet has a first protocol layer header, and the first protocol layer header comprises the bearer identifier but does not comprise the first route indication information or the target device identifier; and when transmitting the second data packet to the first device by using the communication unit, the processing unit is specifically configured to:
add the first route indication information and the target device identifier to the first protocol layer header of the first data packet, to obtain the second data packet, wherein a first protocol layer header of the second data packet comprises the bearer identifier, the first route indication information, and the target device identifier; or
decapsulate the first data packet to obtain a target data packet, wherein the target data packet has no first protocol layer header; and add a first protocol layer header to the target data packet to generate the second data packet, wherein the first protocol layer header of the second data packet comprises the bearer identifier, the first route indication information, and the target device identifier; or
transmit the second data packet to the first device by using the communication unit.

58. The apparatus according to claim 47 or 48, wherein the processing unit is further configured to:
when target route information is not found in at least one piece of stored route information, determine that the first route indication information does not have the corresponding next-hop node device identifier, wherein the target route information comprises the first route indication information and the next-hop node device identifier corresponding to the first route indication information.

59. The apparatus according to claim 58, wherein the processing unit is further configured to:
obtain the at least one piece of route information from the access network device by using the communication unit; or
when the first relay terminal is connected to the access network device through a second relay terminal, obtain the at least one piece of route information from the second relay terminal by using the communication unit.

60. The apparatus according to any one of claims 40 to 59, wherein the target device identifier is a local identifier local ID or a layer 2 identifier L2 ID of the target device.

61. A communication apparatus, used in an access network device, wherein the apparatus comprises:
a communication unit, configured to receive and send data; and
a processing unit, configured to:
obtain a first data packet, wherein the first data packet has no first protocol layer header;
determine first route indication information and a first target device identifier that are of the first data packet, wherein a first target device indicated by the first target device identifier is a destination device of the first data packet, and the first route indication information indicates a transmission route of the first data packet;
add a first protocol layer header to the first data packet, to generate a second data packet, wherein the first protocol layer header of the second data packet comprises the first route indication information and the first target device identifier;
determine a relay terminal based on the first route indication information; and
transmit the second data packet to the relay terminal by using the communication unit.

62. The apparatus according to claim 61, wherein the processing unit is further configured to:
receive, by using the communication unit, a third data packet sent by the relay terminal, wherein the third data packet has a first protocol layer header, the first protocol layer header of the third data packet comprises second route indication information and a second target device identifier, a second target device indicated by the second target device identifier is a source device of the third data packet, and the second route indication information indicates a transmission route of the third data packet; and
decapsulate the third data packet to obtain a fourth data packet, wherein the fourth data packet has no first protocol layer header.

63. The apparatus according to claim 61, wherein the processing unit is further configured to:
determine a first bearer identifier of the first data packet, wherein the first bearer identifier indicates a first bearer used for transmitting the first data packet; and
the first protocol layer header of the second data packet further comprises the first bearer identifier.

64. The apparatus according to claim 62, wherein the first protocol layer header of the third data packet further comprises a second bearer identifier, and the second bearer identifier indicates a second bearer used for transmitting the third data packet.

65. A communication apparatus, used in a remote terminal, wherein the apparatus comprises:
a communication unit, configured to receive and send data; and
a processing unit, configured to:
obtain a first data packet;
determine first route indication information and a target device identifier that are of the first data packet, wherein the first route indication information of the first data packet indicates a transmission route of the first data packet, and the target device identifier is a device identifier of the remote terminal;
add a first protocol layer header to the first data packet, to generate a second data packet, wherein the first protocol layer header of the second data packet comprises the first route indication information and the first target device identifier; and
send the second data packet to a relay terminal by using the communication unit.

66. The apparatus according to claim 65, wherein the processing unit is further configured to:
receive a third data packet from the relay terminal by using the communication unit, wherein the third data packet has a first protocol layer header, the first protocol layer header of the third data packet comprises second route indication information and the target device identifier, and the second route indication information indicates a transmission route of the second data packet; and
decapsulate the third data packet to obtain a fourth data packet, wherein the fourth data packet has no first protocol layer header.

67. The apparatus according to claim 65, wherein the processing unit is further configured to:
determine a first bearer identifier of the first data packet, wherein the first bearer identifier indicates a first bearer used for transmitting the first data packet; and
the first protocol layer header of the second data packet further comprises the first bearer identifier.

68. The apparatus according to claim 66, wherein the first protocol layer header of the third data packet further comprises a second bearer identifier, and the second bearer identifier indicates a second bearer used for transmitting the third data packet.

69. The apparatus according to any one of claims 65 to 68, wherein when determining the first route indication information of the first data packet, the processing unit is further configured to:
determining that the first route indication information is stored route indication information corresponding to a first remote terminal.

70. The apparatus according to claim 69, wherein the processing unit is further configured to:
receive the route indication information corresponding to the first remote terminal from an access network device or the relay terminal by using the communication unit, wherein the route indication information corresponding to the first remote terminal is dedicated route indication information or default route indication information of the first remote terminal.

71. A communication apparatus, used in a first relay terminal, wherein the apparatus comprises:
a communication unit, configured to receive and send data; and
a processing unit, configured to:
receive a first data packet by using the communication unit, wherein the first data packet has a first protocol layer header, the first protocol layer header comprises first route indication information and a target device identifier, the first route indication information indicates a transmission route of the first data packet, and a target device indicated by the target device identifier is a destination device or a source device of the first data packet;
obtain the first route indication information and the target device identifier from the first data packet;
determine a first device based on the first route indication information and the target device identifier; and
transmit the first data packet to the first device by using the communication unit.

72. The apparatus according to claim 71, wherein the first route indication information comprises a target node address; and when determining the first device based on the first route indication information and the target device identifier, the processing unit is specifically configured to:
when the target node address is the same as an address of the first relay terminal, determine that the device indicated by the target device identifier is the first device; or
when the target node address is the same as an address of the first relay terminal, and the first relay terminal is the 1^{st} relay terminal connected to an access network device, determine, by the first relay terminal, an interface used for receiving the first data packet, wherein when the interface is a Uu interface, determining that the device indicated by the target device identifier is the first device; or when the interface is a PC5 interface, determining that the first device is the access network device.

73. The apparatus according to claim 72, wherein the first route indication information further comprises a target path identifier.

74. The apparatus according to claim 72 or 73, wherein when determining that the device indicated by the target device identifier is the first device, the processing unit is specifically configured to:
when the target device identifier indicates a first remote terminal that accesses the first relay terminal, determine that the first device is the first remote terminal.

75. The apparatus according to claim 74, wherein the processing unit is further configured to: when the target device identifier indicates the first relay terminal, determine that data carried in the first data packet is data of the first relay terminal.

76. The apparatus according to claim 75, wherein when the target device identifier is a default device identifier, the target device identifier indicates the first relay terminal.

77. The apparatus according to any one of claims 71 to 76, wherein the target device identifier is a local identifier local ID of the target device.

78. The apparatus according to any one of claims 71 to 77, wherein the first protocol layer header of the first data packet further comprises a bearer identifier, and the bearer identifier indicates a first bearer used for transmitting the first data packet.

79. A communication device, comprising:
a transceiver, configured to receive and send data; and
a processor, configured to implement, by using the transceiver, the method according to any one of claims 1 to 39.

80. A communication system, comprising:
a first relay terminal, configured to implement the method according to any one of claims 1 to 21; and
an access network device, configured to implement the method according to any one of claims 22 to 25.

81. The communication system according to claim 80, wherein the communication system further comprises:
a remote terminal, configured to implement the method according to any one of claims 26 to 31.

82. A communication system, comprising:
a remote terminal, configured to implement the method according to any one of claims 26 to 31;
a first relay terminal, configured to implement the method according to any one of claims 32 to 39; and
an access network device, configured to implement the method according to any one of claims 22 to 25.

83. A computer-readable storage medium, wherein the computer-readable storage medium stores a computer program; and when the computer program is run on a computer, the computer is enabled to perform the method according to any one of claims 1 to 39.

84. A computer program product, wherein when the computer program product is run on a computer, the computer is enabled to perform the method according to any one of claims 1 to 39.

85. A chip, wherein the chip is coupled to a memory; and the chip reads a computer program stored in the memory to perform the method according to any one of claims 1 to 39.
